# EUROPEAN PATENT SPECIFICATION

(11) **EP 3 451 725 B1**
(45) Date of publication and mention of the grant of the patent: **01.01.2025**
(21) Application number: 17788655.3
(22) Date of filing: 14.04.2017
(51) Int. Cl.: H04W 16/06, H04W 72/04, H04L 5/00

(54) **INFORMATION TRANSMISSION METHOD, DEVICE AND SYSTEM**
INFORMATIONSÜBERTRAGUNGSVERFAHREN, -VORRICHTUNG UND -SYSTEM
PROCÉDÉ, DISPOSITIF ET SYSTÈME DE TRANSMISSION D'INFORMATIONS

(30) Priority: 25.04.2016 CN 201610261282; 06.01.2017 CN 201710011284
(43) Date of publication of application: 06.03.2019
(73) Proprietor: ZTE Corporation, Shenzhen, Guangdong 518057 (CN)
(72) Inventor: ZHANG, Shujuan, Shenzhen, Guangdong 518057 (CN); LU, Zhaohua, Shenzhen, Guangdong 518057 (CN); GONG, Yuhong, Shenzhen, Guangdong 518057 (CN)
(74) Representative: Aipex B.V.
(86) International application number: PCT/CN2017/080643
(87) International publication number: WO 2017/186003

(56) References cited:
- WO-A1-2013/114632
- CN-A- 101 958 784
- CN-A- 102 656 938
- CN-A- 103 081 550
- US-A1- 2015 282 167
- US-B2- 9 271 272
- QUALCOMM INCORPORATED: "DL channel design for shortened TTI", vol. RAN WG1, no. Busan, Korea; 20160411 - 20160415, 2 April 2016 (2016-04-02), XP051080512, Retrieved from the Internet <URL:http://www.3gpp.org/ftp/tsg_ran/WG1_RL1/TSGR1_84b/Docs/> [retrieved on 20160402]
- INTEL CORPORATION: "Frame structure for new radio interface", vol. RAN WG1, no. Busan, Korea; 20160411 - 20160415, 2 April 2016 (2016-04-02), XP051080355, Retrieved from the Internet <URL:http://www.3gpp.org/ftp/tsg_ran/WG1_RL1/TSGR1_84b/Docs/> [retrieved on 20160402]
- INTEL CORPORATION: "Discussion on TTI Shortening", vol. RAN WG1, no. Anaheim, USA; 20151115 - 20151122, 15 November 2015 (2015-11-15), XP051002970, Retrieved from the Internet <URL:http://www.3gpp.org/ftp/Meetings_3GPP_SYNC/RAN1/Docs/> [retrieved on 20151115]
- ZTE, RL-162757'' REMAINING ISSUES ON NB-PDCCH DESIGN OF NB-IOT, 15 April 2016 (2016-04-15), XP051080694

## Description

### TECHNICAL FIELD

The present invention relates to, but is not limited to, a field of wireless communications and, in particular, to an information transmission method, device and system.

### BACKGROUND

The wireless communication technology is developing and the user requirements for communications are increasing. The higher, faster and newer communications are in demand. The 5th generation (5G) mobile communication technology has already become a trend of development of the future network.

As one important communication means of the future 5G technology, high-frequency communications having a large bandwidth can provide high-speed data communications, so as to meet requirements for a large volume of data in 5G communications. Hybrid beamforming, including radio frequency beamforming and baseband beamforming, tends to be adopted in the industry. In the hybrid beamforming, the direction of radio frequency beams sent by the same orthogonal frequency division multiplexing (OFDM) is limited by the number of radio frequency links. Due to the limited number of radio frequency links, and in further consideration of factors such as transmission power, the number of beams receivable by a receiving end at one time, the requirement for high beam gains , all downlink beams in a cell cannot be simultaneously transmitted on the same OFDM symbol. On the high-frequency control channel based on beam transmission, because all downlink beams in the cell cannot be simultaneously transmitted on the same OFDM symbol (that is, the beams on one symbol cannot reach cell coverage and can only reach the coverage of one beam group), different beam groups may be transmitted in a polling manner or may be transmitted in a manner where a transmitting end transmits as needed and a receiving end performs blind detection. However, the polling manner imposes many limitations on the scheduling at the transmitting end. In the manner where a transmitting end transmits as needed and a receiving end performs blind detection, due to short basic transmission units of the high-frequency communications, the receiving end needs to detect downlink control information on each basic transmission unit, increasing the detection complexity of the receiving end and failing to support the omnidirectional transmission of system messages.

In summary, due to the limited number of radio frequency links in the high-frequency communications, all downlink beams cannot be simultaneously transmitted on the same symbol to achieve cell coverage in the hybrid beam transmission mode. Each of the polling manner and the on-demand transmission manner has its own shortage. Therefore, an existing transmission mechanism in the LTE system cannot be used in high-frequency cellular communications, that is, currently no appropriate transmission mechanism may be applied to the high-frequency cellular communications based on beam transmission. Further relevant technologies are also known from US 9 271 272 B2 (AWAD YASSIN ADEN [JP]; MARUTA YASUSHI [JP] ET AL.) 23 February 2016 (2016-02-23), which relates to a communication system presented in which a base station is provided for communicating with a plurality of mobile communication devices in a cellular communication system; US 2015/282167 A1 (LAHETKANGAS EEVA [FI] ET AL) 1 October 2015 (2015-10-01), which relates to a frame or a subframe including control information and data transmitted using orthogonal frequency division multiple access (OFDMA); QUALCOMM INCORPORATED: "DL channel design for shortened TTI", 3GPP DRAFT; R1-163068 DL CHANNEL DESIGN FOR SHORTENED TTI, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Busan, Korea; 20160411 - 20160415 2 April 2016 (2016-04-02), XP051080512, which relates to DL channel design for shortened TTI, INTEL CORPORATION: "Frame structure for new radio interface", 3GPP DRAFT; R1-162726 - INTEL 5G NR FRAME STRUCTURE, 3RD GENERATION PARTNERSHIP PROJECT (3GPP), MOBILE COMPETENCE CENTRE ; 650, ROUTE DES LUCIOLES; F-06921 SOPHIA-ANTIPOLIS CEDEX; FRANCE, vol. RAN WG1, no. Busan, Korea; 20160411 - 20160415 2 April 2016 (2016-04-02), XP051080355, which relates to frame structure for new radio interface, and INTEL CORPORATION: "Discussion on TTI Shortening", 3GPP DRAFT; R1-156540, 3RD GENERATION PARTNERSHIP PROJECT (3GPP), MOBILE COMPETENCE CENTRE; 650, ROUTE DES LUCIOLES ; F-06921 SOPHIA- ANTIPOLIS CEDEX ; FRANCE, vol. RAN WG1, no. Anaheim, USA; 20151115 - 20151122 15 November 2015 (2015-11 -15), XP051002970, which relates to Intel corporation discussion on TTI.

### SUMMARY

The following is a summary of the subject matter described herein in detail. This summary is not intended to limit the scope of the claims. The feature of the method and apparatus according to the present invention are defined in the independent claims. Further improvements are provided in the dependent claims.

Embodiments of the present invention provide an information transmission method, device and system in which an information transmission mechanism in high-frequency communications is properly designed to avoid a case in high-frequency cellular communications where all downlink beams cannot be simultaneously transmitted on a same symbol in a hybrid beam transmission mode and a receiving end has high detection complexity due to a limited number of radio frequency links.

In a first aspect, the embodiments of the present invention provide an information transmission method as defined in independent claim 1.

In a second aspect, the embodiments of the present invention provide an information transmission method as defined in independent claim 4.

In a third aspect, the embodiments of the present invention provide an information transmission device, disposed in a second communication node, as defined in independent claim 15.

In the information transmission method, device and system provided by the embodiments of the present invention, the first communication node sends the downlink control information to the second communication node in the downlink control domain of the first time unit of a preset length so that the first communication node sends the downlink data to the second communication node, or/and receives the uplink data sent by the second communication node according to the sent downlink control information. In the embodiments, the structure of the first time unit is designed so that the downlink control information may be sent in a plurality of second time units in the first time unit to send downlink control channels of different directions or direction groups, increasing a length of the data domain. Additionally, because the first time unit includes M third time units, the length of a time unit in which the second communication node detects control channels is increased, thereby reducing blind detection complexity of the second communication node to a reasonable degree. That is, the information transmission mechanism in the high-frequency communications is properly designed in the embodiments, avoiding the case in the high-frequency cellular communications that all downlink beams cannot be transmitted simultaneously on the same symbol in the hybrid beam transmission mode and the detection complexity of the receiving end is high due to the limited number of radio frequency links. Other aspects can be understood after the drawings and detailed description are read and understood.

### BRIEF DESCRIPTION OF DRAWINGS

FIG. 1 is a flowchart of an information transmission method according to an embodiment of the present invention;
FIG. 2 is a structural diagram of a first time unit in the information transmission method according to the embodiment illustrated in FIG. 1;
FIG. 3 is a structural diagram of another first time unit in the information transmission method according to the embodiment illustrated in FIG. 1;
FIG. 4 is a structural diagram of another first time unit in the information transmission method according to the embodiment illustrated in FIG. 1;
FIG. 5 is a structural diagram of another first time unit in the information transmission method according to the embodiment illustrated in FIG. 1;
FIG. 6 is a flowchart of another information transmission method according to an embodiment of the present invention;
FIG. 7 is a schematic diagram of a control channel resource in the information transmission method according to the embodiment illustrated in FIG. 6;
FIG. 8 is a schematic diagram of another control channel resource in the information transmission method according to the embodiment illustrated in FIG. 6;
FIG. 9 is a schematic diagram of a dedicated detection space in the information transmission method according to this embodiment;
FIG. 10 is a schematic diagram of another dedicated detection space in the information transmission method according to this embodiment;
FIG. 11 is a schematic diagram of a first time unit in an information transmission method according to an embodiment of the present invention;
FIG. 12 is a schematic diagram of another first time unit in an information transmission method according to an embodiment of the present invention;
FIG. 13 is a schematic diagram of another first time unit in an information transmission method according to an embodiment of the present invention;
FIG. 14 is a schematic diagram of another first time unit in an information transmission method according to an embodiment of the present invention;
FIG. 15 is a schematic diagram of scheduling data for a control channel resource in an information transmission method according to an embodiment of the present invention;
FIG. 16 is another schematic diagram of scheduling data for a control channel resource in an information transmission method according to an embodiment of the present invention;
FIG. 17 is a schematic diagram of a correspondence between a low-frequency subframe and a high-frequency first time unit in an information transmission method according to an embodiment of the present invention;
FIG. 18 is a schematic diagram of another correspondence between a low-frequency subframe and a high-frequency first time unit in an information transmission method according to an embodiment of the present invention;
FIG. 19 is a schematic diagram of a correspondence between a fourth time unit and a first time unit in an information transmission method according to an embodiment of the present invention;
FIG. 20 is a schematic diagram of another correspondence between a fourth time unit and a first time unit in an information transmission method according to an embodiment of the present invention;
FIG. 21 is a schematic diagram of another correspondence between a fourth time unit and a first time unit in an information transmission method according to an embodiment of the present invention;
FIG. 22 is a schematic diagram of another correspondence between a fourth time unit and a first time unit in an information transmission method according to an embodiment of the present invention;
FIG. 23 is a flowchart of another information transmission method according to an embodiment of the present invention;
FIG. 24 is a flowchart of another information transmission method according to an embodiment of the present invention;
FIG. 25 is a flowchart of another information transmission method according to an embodiment of the present invention;
FIG. 26 is a schematic diagram of a set of third time units occupied by data of a second communication node in the information transmission method according to the embodiment illustrated in FIG. 25;
FIG. 27 is another schematic diagram of a set of third time units occupied by data of a second communication node in the information transmission method according to the embodiment illustrated in FIG. 25;
FIG. 28 is a schematic diagram of a frequency domain resource occupied in a dedicated third time unit by data of a second communication node in the information transmission method according to the embodiment illustrated in FIG. 25; FIG. 29 is another schematic diagram of a frequency domain resource occupied in a dedicated third time unit by data of a second communication node in the information transmission method according to the embodiment illustrated in FIG. 25;
FIG. 30 is another schematic diagram of a frequency domain resource occupied in a dedicated third time unit by data of a second communication node in the information transmission method according to the embodiment illustrated in FIG. 25;
FIG. 31 is another schematic diagram of a frequency domain resource occupied in a dedicated third time unit by data of a second communication node in the information transmission method according to the embodiment illustrated in FIG. 25;
FIG. 32 is a structural diagram of an information transmission device according to an embodiment of the present invention;
FIG. 33 is a structural diagram of another information transmission device according to an embodiment of the present invention;
FIG. 34 is a structural diagram of another information transmission device according to an embodiment of the present invention;
FIG. 35 is a structural diagram of another information transmission device according to an embodiment of the present invention; and
FIG. 36 is a structural diagram of an information transmission system according to an embodiment of the present invention.

### DETAILED DESCRIPTION

Embodiments of the present invention will be described below in detail with reference to the accompanying drawings. It is to be noted that if not in collision, the embodiments and features therein in the present application may be combined with each other.

The steps illustrated in the flowcharts of the accompanying drawings may be executed by, for example, a set of computer-executable instructions in a computer system. Although the flowcharts illustrate a logical order of execution, the steps illustrated or described may, in some cases, be executed in an order different from that herein.

Characteristics of high-frequency communications are briefly introduced. One main challenge for the high-frequency communications is relatively large space transmission losses of signals and short communication distances. Generally, the multi-antenna-based beamforming may be applied to cellular communications. Moreover, wavelengths of the high-frequency communications are relatively short and more antenna elements are used so that the multi-antenna beamforming may be used for improving coverage. In addition, due to high costs of a digital-to-analog converter (DAC) of the high-frequency communications, it is difficult to provide one DAC for each antenna element. Therefore, hybrid beamforming tends to be adopted in the industry.

The transmission of both control channel and data channel in high-frequency communications tends to be based on beam transmission. If the control channel is based on omnidirectional transmission and the data channel adopts a beam transmission manner, a high-frequency cell has a greatly reduced range, increasing operation costs. The high-frequency communications is characterized by a non-interference-limited scenario. At this time, in practical data transmission, a cell range supported by the beam transmission is much larger than a cell range supported by the control channel. It has been demonstrated in the background that in the high-frequency communications using a hybrid beamforming technology, due to problems of a limited number of radio frequency links, transmission power and the number of beams receivable by a receiving end at one time, a base station cannot simultaneously transmit all downlink beams in one cell on a same OFDM symbol and thus a group of directions of multiple symbols or multiple symbol groups is required. Moreover, the high-frequency communications have a short time unit and blind detection by a user equipment of all groups of directions in each time unit to detect control information will result in high control channel detection complexity of the receiving end. Therefore, an existing transmission mechanism in the Long Term Evolution (LTE) system cannot be used for transmission in the high-frequency communications based on beam transmission. That is, currently no appropriate transmission mechanism may be applied to high-frequency cellular communications based on beam transmission.

The technical solutions of the present application are described below in detail through specific embodiments. A first communication node in each embodiment described below of the present application may be, for example, a based service (BS) in a wireless communication system or an evolved Node B (eNB) in an LTE system. In the 5G system, the first communication node may also be a terminal device. Generally, the first communication node is a high-frequency base station, that is, a transmitting end of control information in each embodiment described below of the present invention; and a second communication node may be, for example, a terminal device. The embodiments provided by the present application may be combined with each other, and identical or similar concepts or processes may not be repeated in some embodiments.

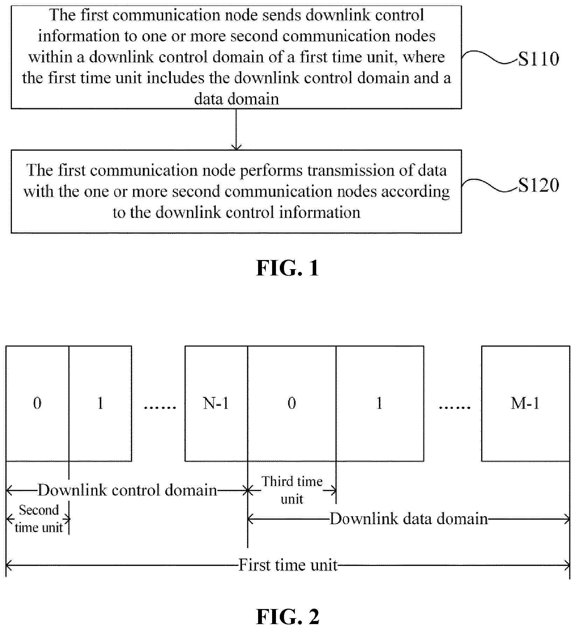

FIG. 1 is a flowchart of an information transmission method according to an embodiment of the present invention. The information transmission method in this embodiment is suitable for channel transmission in a high-frequency communication system, and may be executed by an information transmission device. The information transmission device is implemented by a combination of hardware and software and the device may be integrated onto a processor of the first communication node for the processor's use. As shown in FIG. 1, the method in this embodiment may include the steps described below.

In S 110, the first communication node sends downlink control information to one or more second communication nodes within a control domain of a first time unit. The first time unit includes the control domain and a data domain. The control domain may be a downlink control domain.

The information transmission method provided by the embodiments of the present invention provides a new information transmission mechanism for the high-frequency communication system based on the beam transmission. In this embodiment, the first communication node sends the downlink control information using the fixed-length first time unit. A receiving end of the downlink control information, the second communication node, is provided with the same first time unit as the first communication node. The first time unit in this embodiment has a structure generally including the downlink control domain and the data domain. There is a preset length of resources between a start position of the downlink control domain and a start position of the first time unit. The downlink control domain includes N second time units, each of which includes *N_{c,sym}* symbols; and the data domain includes M third time units, each of which includes *N_{d,sym}* symbols, where N, M, *N_{c,sym}* and *N_{d,sym}* are all positive integers. In other embodiments, one of N and M may be 0 and N+M is a positive integer. The preset length of resources may generally be 0, that is, the start position of the first time unit is the start position of the downlink control domain. In addition, the preset length of resources may also be greater than 0. In this embodiment, a total number of symbols included in the downlink control domain of the first time unit may be an integer multiple of a number of symbols included in each third time unit and be expressed as *N* * *N_{c,sym}* = *K * N_{d,sym}*, where K is a positive integer.

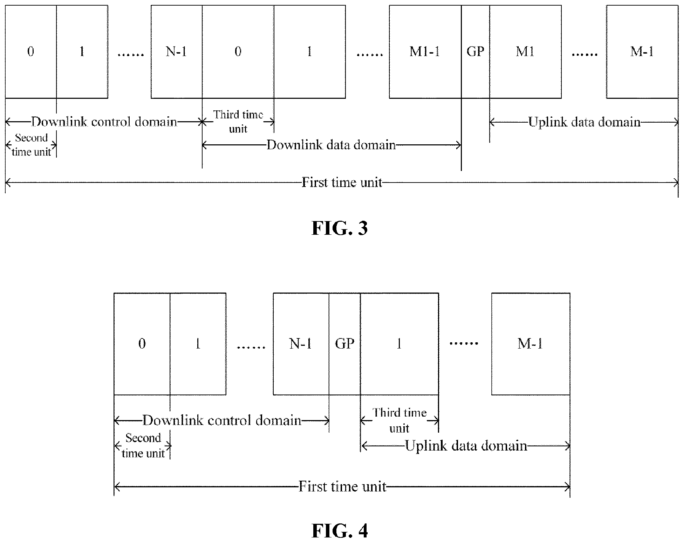

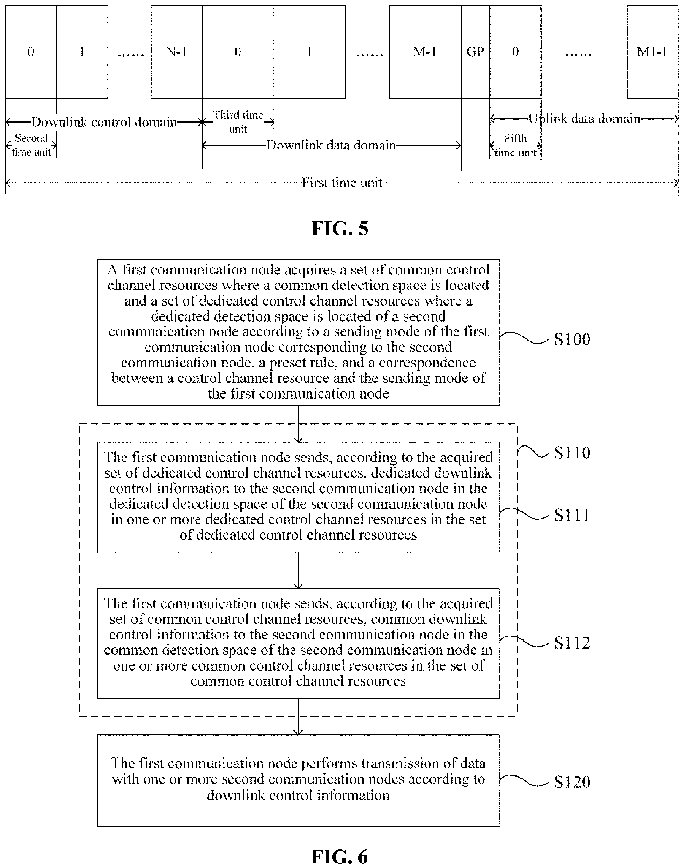

In an implementation of this embodiment, the first time unit may have one or more of: a first structure of the first time unit including the downlink control domain and a downlink data domain (the data domain is the downlink data domain), a second structure of the first time unit including the downlink control domain, the downlink data domain, a protection domain and an uplink data domain (the data domain includes the downlink data domain and the uplink data domain) and a third structure of the first time unit including the downlink control domain, the protection domain and the uplink data domain (the data domain is the uplink data domain). The first structure to the third structure of the first time unit may be referred to FIG. 2 to FIG. 5. FIG. 2 is a structural diagram of a first time unit in the information transmission method according to the embodiment shown in FIG. 1. FIG. 3 is a structural diagram of another first time unit in the information transmission method according to the embodiment shown in FIG. 1. FIG. 4 is a structural diagram of another first time unit in the information transmission method according to the embodiment shown in FIG. 1. FIG. 5 is a structural diagram of yet another first time unit in the information transmission method according to the embodiment shown in FIG. 1. In FIG. 2 to FIG. 5, FIG. 2 shows the first structure, FIG. 3 and FIG. 5 show the second structure, and FIG. 4 shows the third structure. The GP (Guard Period) in FIG. 2 to FIG. 5 is the protection domain. A length of the first time unit is a fixed value agreed by the first communication node and the second communication node. The downlink control domain in FIG. 2 to FIG. 5 includes N second time units, and each second time unit includes *N_{c,sym}* symbols; the data domain includes M third time units and each third time unit includes *N_{d,sym}* symbols. In particular, the first time unit in FIG. 3 and the first time unit in FIG. 5 both include the downlink data domain and the uplink data domain. In FIG. 3, the downlink data domain and the uplink data domain include the M third time units in total. In the first time unit in FIG. 5, the time units corresponding to the uplink data domain and the time units corresponding to the downlink data domain are different from those in FIG. 3. As shown in FIG. 5, the time units in the uplink data domain are, for example, a fifth time unit, and each fifth time unit includes *N_{du,sym}* symbols, where *N_{du,sym}* is a fixed value agreed by the transmitting and receiving ends. In addition, in this embodiment, each time unit occupies all system bandwidths in frequency domain. The downlink data domain may further include one or more of the following channels or signals: a downlink data channel, a downlink control channel, a downlink measurement reference signal, a downlink reference signal and a downlink synchronization signal. The uplink data domain may further include one or more of the following channels or signals: an uplink control channel signal, an uplink measurement reference signal, an uplink reference signal and a random access signal.

The above N, M, *N_{c,sym}*, *N_{d,sym}* and *N_{du,sym}* are fixed values agreed by the first communication node and the second communication node. In this embodiment, the fixed values agreed by the transmitting and receiving ends may be obtained in one or more of the following manners: the values may be preset in the first communication node and the second communication node; the values may also be notified by a broadcast message sent by the first communication node; the values may also be implicitly notified by a system parameter sent by the first communication node. For example, the system parameter is a system bandwidth, and different system bandwidths correspond to different values of N, M, *N_{c,sym}*, *N_{d,sym}* and *N_{d,sym}*. A correspondence between the system bandwidth and the values is also agreed by the first communication node and the second communication node. In addition, the symbols may be an OFDM symbol or a single carrier symbol. If the symbols are all OFDM symbols, a subcarrier spacing of the downlink control domain may be the same as or different from a subcarrier spacing of the data domain. The subcarrier spacing may also be pre-agreed by the first communication node and the second communication node.

For example, a subcarrier spacing of the second time units may be preset. The downlink control information is used for notifying the second communication node of a subcarrier spacing of the third time units. The subcarrier spacing of the second time units is preset, that is, the subcarrier spacing of the second time units are pre-agreed by the first communication node and the second communication node. The subcarrier spacing may be a fixed value or informed by the first communication node to the second communication node via previous control information.

In this embodiment, which one of the structures in FIG. 2 to FIG. 5 the first time unit has may be notified in a manner that the first communication node indicates that the first time unit has one of the first structure to the third structure in the downlink control domain of the first time unit. A notification manner may also be that the first communication node indicates that the first time unit has one of the first structure to the third structure via an index of the first time unit. The notification manner may also be that before the S 110 in the embodiment, the first communication node or a third communication node sends structure indication signaling to the second communication node. The structure indication signaling is used for indicating that the current first time unit has one of the first structure to the third structure. The third communication node is another transmitting end other than the first communication node, and may be, for example, a low-frequency base station. Furthermore, when the first time unit has the second structure shown in FIG. 3, the numbers of time units included in the uplink data domain and the downlink data domain may be fixed, or may be notified via the downlink control information in the current first time unit. A length of the GP may be a fixed value agreed by the first communication node and the second communication node, and the fixed value is indicated in the same manners as the above fixed value, which are not repeated herein. The GP is generally between the downlink data domain and the uplink data domain.

In one embodiment, the downlink control information has at least one of the characteristics described below.

One piece of downlink control information is transmitted on one control channel resource.

One piece of downlink control information is repeatedly transmitted on more than one control channel resource.

One piece of downlink control information is j ointly transmitted on more than one control channel resource.

Different pieces of control information are transmitted on different downlink control resources corresponding to the second communication node.

That one piece of downlink control information is repeatedly transmitted on more than one downlink control channel resource satisfies at least one of the following characteristics: the downlink control information transmitted on each downlink control channel resource may be independently decoded; a complete piece of downlink control information is transmitted on each downlink control channel resource; different channel encoding redundancy versions of the downlink control information are transmitted on different control channel resources.

That one piece of downlink control information is jointly transmitted on more than one downlink control channel resource satisfies the following characteristic: the downlink control information cannot be independently decoded on each downlink control channel resource and the one piece of downlink control information may be decoded only when all information on more than one downlink control channel resource is collected.

In one embodiment, the downlink control information includes one or more of the following common control information:
common control information at a control channel resource level;
common control information at a second time unit level;
common control information at a first time unit level; and
common control information at a cell level.

The common control information at the control channel resource level is used for informing information to receiving ends of more than one piece of control information included in the control channel resource, and/or only transmitted on the control channel resource.

The common control information at the second time unit level is used for informing the control information to receiving ends corresponding to all pieces of control information included in all control channel resources in the second time unit, and/or only transmitted in the second time unit. The common control information at the first time unit level is used for informing the control information to receiving ends of all pieces of control information included in all control channel resources in the first time unit, and/or repeatedly transmitted in each second time unit of the first time unit or jointly transmitted on all second time units included in the first time unit after being encoded.

The common control information at the cell level has all users under the cell coverage as its target receiving end, and/or is transmitted in all second time unit includes in one or more first time units. In S 120, the first communication node performs transmission of data with the one or more second communication nodes according to the downlink control information. The data is at least one of uplink data and downlink data.

That is, the first communication node sends the downlink data to the one or more second communication nodes or/and receives the uplink data sent by the one or more second communication nodes according to the downlink control information.

In this embodiment, after the first communication node sends the downlink control channel in the first time unit, the downlink control domain of the first time unit indicates that the scheduled second communication nodes receive the corresponding downlink control information. At this time, the first communication node and the second communication node learn the same scheduling manner, and thus the first communication node may perform data transmission according to the downlink control information sent by the first communication node, including sending the downlink data to the second communication node or/and receiving the uplink data sent by the second communication node.

When the first communication node determines that the first time unit has one of the first structure to the third structure, the first communication node sends the downlink data in the downlink data domain, or/and receives the uplink data in the uplink data domain according to the downlink control information. In addition, the first communication node may further send the downlink data or/and receive the uplink data in the current first time unit according to the downlink control information sent in a previous first time unit.

The first communication node in the embodiments of the present invention may be a communication entity on a network side, or may be different communication examples on the network side. For example, the S 110 is executed by a macro base station, and the S 120 is executed by a micro base station. In addition, in the embodiments of the present invention, the different downlink control information occupies different numbers of second time units.

Different from the existing low-frequency communications, in each embodiment of the present invention, the downlink control domain of the first time unit includes N second time units and M third time units. Multiple second time units are used in the downlink control domain to send downlink control channels of different directions or direction groups. In addition, the first time unit is allowed to include M third time units to increase a length of the time unit in which the second communication node detects control channels, thereby reducing blind detection complexity of the second communication node to a reasonable degree.

In the information transmission method in this embodiment, the first communication node sends the downlink control information to the second communication node in the downlink control domain of the first time unit of a preset length so that the first communication node sends the downlink data to the second communication node, or/and receives the uplink data sent by the second communication node according to the sent downlink control information. In this embodiment, the structure of the first time unit is designed so that the downlink control information may be sent in multiple second time units in the first time unit to send the downlink control channels of different directions or direction groups, increasing a length of the data domain. Additionally, because the first time unit includes M third time units, the length of the time unit in which the second communication node detects the control channels is increased, thereby reducing the blind detection complexity of the second communication node to a reasonable degree. That is, the information transmission mechanism in the high-frequency communications is properly designed in this embodiment, solving the problem in the existing art that all downlink beams cannot be transmitted simultaneously on the same symbol in a hybrid beam transmission mode and the detection complexity of the receiving end is high due to a limited number of radio frequency links in the high-frequency cellular communications.

FIG. 6 is a flowchart of another information transmission method according to an embodiment of the present invention. On the basis of the above embodiments, in the first time units shown in FIG. 2 to FIG. 5, each second time unit in the downlink control domain includes one or more control channel resources, and each control channel resource carries a demodulation reference signal for demodulating the downlink control information in the each control channel resource. The demodulation reference signal in this embodiment is only used for demodulating the downlink control information in the each control channel resource, and generally cannot demodulate the downlink control information in other control channel resources.

Because the third time unit is a minimum time unit of resource scheduling, when different third time units in the first time unit are scheduled to different users, each third time unit should include a demodulation reference signal. When multiple third time units in one first time unit are allocated to one terminal, one implementation is that the multiple third time units allocated to one terminal share a set of demodulation reference signals. In one way, each of the multiple third time units has the demodulation reference signals and the demodulation reference signals may be used for combined channel estimation. In another implementation, only some of the multiple third time units have the demodulation reference signals, and some third time units do not have the demodulation reference signals. Alternatively, the multiple third time units allocated to the second communication node (such as a terminal) in the current first time unit are divided into N_sub subtime units, and each subtime unit has a demodulation reference signal. Therefore, it is allowed that different subtime units adopt different sending modes or different subtime units adopt different receiving modes.

In addition, the method in this embodiment further includes S100 before S 110.

In S100, the first communication node acquires a set of common control channel resources where a common detection space is located and a set of dedicated control channel resources where a dedicated detection space is located of the second communication node according to a sending mode of the first communication node corresponding to the second communication node, a preset rule, and a correspondence between the control channel resource and the sending mode of the first communication node.

In this embodiment, the sending mode of the first communication node corresponding to the second communication node may be obtained according to a beam training result or in other manners, for example, according to beam tracking or received data or control information. Accordingly, the S110 in this embodiment may include S111 and S112.

In S111, the first communication node sends, according to the acquired set of dedicated control channel resources, dedicated downlink control information to the second communication node in the dedicated detection space of the second communication node in one or more dedicated control channel resources in the set of dedicated control channel resources.

In S112, the first communication node sends, according to the acquired set of common control channel resources, common downlink control information to the second communication node in the common detection space of the second communication node in one or more common control channel resources in the set of common control channel resources.

The embodiments of the present invention do not limit an execution order of the S111 and the S112. The S111 and the S112 may be executed in sequence or in parallel. The flow in FIG. 6 is shown using an example in which the S111 is executed before the S112. In addition, because some first time units only have the dedicated downlink control information and some first time units only have the common downlink control information, one of the S111 and the S112 may be executed in the embodiment shown in FIG. 6. For example, in a high-frequency communication system, all downlink control information is transmitted by means of the dedicated downlink control information and the common downlink control information is not included.

In the embodiments of the present invention, the control channel resources in each second time unit may satisfy one or more of the characteristics described below.
1. Each control channel resource includes one or more physical resource blocks (PRBs) in frequency domain.
2. Each control channel resource is a control subband. The control subband refers to a maximum frequency domain resource range in which the second communication node detects the downlink control information. For example, one control subband has 5 MHz or 10MHz frequency domain resources.
3. Each control channel resource is a set of control resource units. One control resource unit refers to a minimum resource unit occupied by the downlink control information, and one piece of downlink control information occupies one or more control resource units, such as a control channel element (CCE) or an enhanced control channel element (ECCE) in the LTE.
4. Each control channel resource is one or more control channel search spaces.
5. Each control channel resource is one or more candidate control channels.
6. Each control channel resource is a search space of one second communication node. The search space of the second communication node consists of all search spaces that need to be detected by the second communication node in the current first time unit, including a dedicated search space and/or a common search space.

Similar to the LTE, one control channel search space includes one or more candidate control channels and one candidate control channel includes one or more control channel units.

In the embodiments of the present invention, the method may further include one or more of the steps described below before the S 110.

The first communication node determines a set of control channel resources corresponding to the downlink control information sent to the second communication node according to the sending mode corresponding to the second communication node.

The first communication node determines a set of second time units corresponding to the downlink control information sent to the second communication node according to the sending mode corresponding to the second communication node.

The sending mode corresponding to the second communication node is a sending mode used by the first communication node for sending in a communication link to the second communication node. That is, the first communication node has multiple sending beams and the second communication node is in the coverage of one or more beams. Therefore, the second communication node needs to determine one beam or beams by which the second communication node is covered. For example, the first communication node has 32 sending beams in total, the second communication node may receive 4 beams {1, 2, 3, 4} (or the second communication node feeds back 4 sending beams, or the first communication node configures, via signaling information, a set of sending modes corresponding to the second communication node for the second communication node); at this time, the sending beams corresponding to the second communication node are the beams {1, 2, 3, 4} which have been fed back.

In the embodiments of the present invention, the different downlink control information sent by the first communication node occupies a same number of or different numbers of second time units.

In this embodiment, a correspondence between the control channel resource and the sending mode may be preset in the first communication node and the second communication node. The correspondence between the control channel resource and the sending mode may be as follows: the control channel resource has a one-to-one correspondence with the sending mode; or each control channel resource corresponds to multiple sending modes and each of the multiple sending modes corresponds to one control channel resource; or each sending mode corresponds to multiple control channel resources. Furthermore, in this embodiment, a correspondence between the control channel resource and the second time units may also be preset in the first communication node and the second communication node. The correspondence between the control channel resource and the second time units is that the control channel resource has a one-to-one correspondence with the second time units. The correspondence may also be that each control channel resource corresponds to multiple second time units, and when one control channel resource is transmitted in the first time unit, the one control channel resource is transmitted in one of the multiple second time units corresponding to the one control channel resource in the first time unit. The correspondence may also be that each control channel resource corresponds to multiple second time units, and when one control channel resource is transmitted in the first time unit, the one control channel resource is transmitted in one or more of the multiple second time units corresponding to the one control channel resource in the first time unit. In this embodiment, when each control channel resource in one first time unit corresponds to multiple second time units, a set of the multiple second time units corresponding to the each control channel resource is the N second time units in the downlink control domain of the first time unit, or preset in the first communication node and the second communication node. In this embodiment, another case may also be included where the first communication node and the second communication node agree that the first communication node does not send some control channel resources on some first time units so that the second communication node does not detect these control channel resources in these first time units.

It has been described above that the correspondence between the control channel resource and the sending mode and the correspondence between the control channel resource and the second time units may be preset in the first communication node and the second communication node. The correspondences are notified by one or more of: a system broadcast and high-frequency higher layer signaling, are notified with the assistance of low-frequency signaling, or are notified according to a predetermined rule. In this embodiment, the first communication node and the second communication node agree on the correspondence between the control channel resource and the second time units so that the complexity of detecting downlink control channels by the second communication node is also reduced.

For example, if the correspondence between the control channel resource and the sending mode is a one-to-one correspondence, and if a cell has a total of 16 sending modes, because radio frequency links of the first communication node are limited and high gains of the sending mode are required, only four sending modes are sent in one second time unit and then the downlink control domains in FIG. 2 to FIG. 5 include four second time units. The correspondence between an index of the four second time units and an index of the control channel resources is shown in table 1, and the correspondence shown in table 1 is agreed by the first communication node and the second communication node. The correspondence between the index of the control channel resources and the index of the second time units in table 1 is only an example, and other correspondences are not excluded.

**Table 1**

| Index of the second time unit | Index of the control channel resource |
|---|---|
| 0 | 0, 1, 2, 3 |
| 1 | 4, 5, 6, 7 |
| 2 | 8, 9, 10, 11 |
| 3 | 12, 13, 14, 15 |

In this embodiment, for the sending mode in the downlink control domain, a first manner is that the first communication node sends N=4 second time units in each first time unit fixedly and at least sends the demodulation reference signal corresponding to each control channel resource in each second time unit. A second manner is that the first communication node sends N=4 second time units in each first time unit fixedly and sends the control channel resource corresponding to the sending mode with the downlink control information in each second time unit according to requirements. The control channel resource includes the demodulation reference signal of the control channel resource and the downlink control information in the control channel resource. For the sending mode without the downlink control information to be sent, the demodulation reference signal of and the downlink control information in the control channel resource corresponding to this sending mode are both not sent. In this case, for one second time unit, if all the sending modes included in the one second time unit do not have the downlink control information to be sent, no signal is sent in the one second time unit. In the above two sending modes, the second communication node searches, in table 1, a corresponding second time unit to the control channel resource where the second communication node is located according to the correspondence shown in table 1. In each first time unit, the downlink control information is only detected in a detection space in the control channel resource where the second communication node is located in the corresponding second time unit. For example, if the second communication node corresponds to a sending mode 5 (i.e., a control channel resource 5) of the first communication node, the second communication node detects the downlink control information on a time-frequency resource corresponding to the control channel resource 5 and the detection space in the control channel resource 5 in the second time unit.

The correspondence between the control channel resource and the sending mode is described above. Similarly, a correspondence between the control channel resource and a receiving mode may be established, which is not repeated herein.

In the embodiments of the present invention, the detection space of any second communication node includes the common detection space and the dedicated detection space. In one case, a set of control channel resources in which the common detection space is located is the same as a set of control channel resources in which the dedicated detection space is located, except that the common downlink control information in the common detection space is of the control channel resource level. In another case, the set of control channel resources in which the common detection space is located includes the set of control channel resources in which the dedicated detection space is located. For example, the common detection space is at the cell level, and the common control information transmitted in all the sending modes included in the cell is the same; however, the second communication node only detects the common detection space in the control channel resource where the second communication node is located, or the second communication node selects one or more control channel resources in each second time unit to detect the common control information according to a candidate sending mode in beam training, thereby obtaining combined gains by detecting the same common control information in multiple control channel resources. Furthermore, the common downlink control information of the second communication node includes the common downlink control information at the control channel resource level, the common downlink control information at the second time unit level and the common downlink control information at the cell level. The common downlink control information at the control channel resource level is the common downlink control information of multiple second communication nodes included in one control channel resource, and the common downlink control information is not sent in other control channel resources. The common downlink control information at the second time unit level is transmitted in all the control channel resources included in one second time unit; accordingly, the second communication node may demodulate the corresponding common downlink control information at the second time unit level by referring to other control channel resources in the one second time unit based on a received signal of the second communication node on the second time unit. The common downlink control information is then combined for processing and channel decoding, thereby obtaining combined gains of a part of sending modes. The common downlink control information at the cell level is transmitted in all control channel resources included in the cell. In this embodiment, the set of control channel resources where the common detection space is located and the set of control channel resources where the dedicated detection space is located may be preset in the first communication node and the second communication node.

In the embodiments of the present invention, the case where the control channel resource occupies a time-frequency resource in the second time unit may include two cases. In a first case, multiple control channel resources included in each second time unit occupy all time-frequency resources of the each second time unit in a space division multiplexing manner, and multiple demodulation reference signals corresponding to the multiple control channel resources are at least one of code division multiplexing, frequency division multiplexing and time division multiplexing. In this case, one control channel resource in one second time unit occupies all the time-frequency resources of the one second time unit or occupies all time-frequency resources of the second time unit other than time-frequency resources occupied by the demodulation reference signals corresponding to other control channel resources. In a second case, multiple control channel resources included in each second time unit occupy the time-frequency resources of the each second time unit in a frequency division multiplexing manner, and a frequency domain resource occupied by the control channel resources is obtained according to one or more of an index of the control channel resources, an index of the first time unit and an index of the second time units; and multiple ports of the multiple demodulation reference signals corresponding to the multiple control channel resources are multiplexed in the frequency division multiplexing manner, and a port of the demodulation reference signal corresponding to each control channel resource only occupies time-frequency resources in the frequency domain resource occupied by the each control channel resource. Each control channel resource may include the dedicated detection space of one or more second communication nodes and one or more common control detection spaces at the control channel resource level.

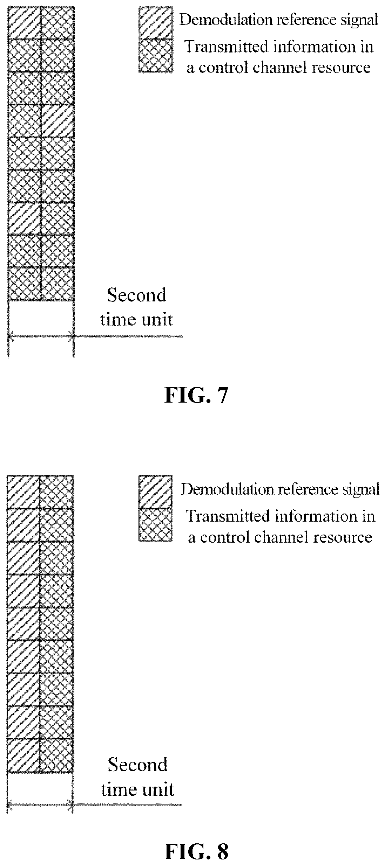

For example, when one control channel resource in one second time unit occupies all the time-frequency resources of the one second time unit or occupies all time-frequency resources of the second time unit other than time-frequency resources occupied by the demodulation reference signals corresponding to other control channel resources, the demodulation reference signal of the one control channel resource may occupy part of time-frequency resources distributed on various symbols in the second time unit. FIG. 7 is a schematic diagram of a control channel resource in the information transmission method according to the embodiment illustrated in FIG. 6. At this time, multiple control channel resources in one second time unit are multiplexed in the space division multiplexing manner, and multiple demodulation reference signals corresponding to the multiple control channel resources are multiplexed in the space division multiplexing manner or in the code division multiplexing manner. For another example, the demodulation reference signals corresponding to the control channel resources may occupy the first one or more symbols in one second time unit, and the first one or more symbols only have the demodulation reference signals, that is, the control domains and the demodulation reference signals of the control channel resources are multiplexed in the time division multiplexing manner. FIG. 8 is schematic diagram of another control channel resource in the information transmission method according to the embodiment illustrated in FIG. 6. At this time, multiple control channel resources in one second time unit are multiplexed in the space division multiplexing manner, and multiple demodulation reference signals corresponding to the multiple control channel resources are multiplexed in the space division multiplexing manner and/or in the code division multiplexing manner. The number of subcarriers included in the second time unit in FIG. 7 and FIG. 8 is only an example to illustrate positions of the demodulation reference signals, and is not intended to limit the number of subcarriers. In addition, in this embodiment, the demodulation reference signal of each control channel resource carries index information of the each control channel resource or index information of the each control channel resource in a control channel resource group. The control channel resource group consists of the one or more control channel resources included in one second time unit.

Examples are given below to describe that the first communication node acquires the set of common control channel resources where the common detection space is located and the set of dedicated control channel resources where the dedicated detection space is located of the second communication node, according to the sending mode of the first communication node corresponding to the second communication node, the preset rule, and the correspondence between the control channel resource and the sending mode of the first communication node. For example, in the beam training, the second communication node determines a set of optimal sending modes including sending modes with indexes 5, 0, 8 and 12, feeds the set back to the first communication node; receiving performance gradually decreases for the sending modes with indexes 5, 0, 8 and 12; and the correspondence between the control channel resource and the sending mode of the first communication node is as shown in FIG. 1. At this time, a first set acquisition manner is that the first communication node and the second communication node agree that the set of control channel resources where the second communication node is located only has the optimal sending mode 5; then the set of control channel resources where the dedicated detection space of the second communication node is located, the set of dedicated control channel resources, is 5, and the set of control channel resources where the common detection space is located, the set of common control channel resources, is 5 or {5, 0, 8, 12} or {0~15}. A second set acquisition manner is that the first communication node and the second communication node agree that the set of control channel resources where the second communication node is {5, 0, 8, 12}; then the set of dedicated control channel resources is {5, 0, 8, 12}, and the set of common control channel resources is {5, 0, 8, 12} or {0~15}. In the above manners, when the set of dedicated control channel resources or the set of common control channel resources includes multiple control channel resources, the first communication node sends the downlink control information and the second communication node receives the downlink control information in the four manners described below. A first sending and receiving manner is that the first communication node transmits the same downlink control information in the detection space corresponding to the second communication node in each control channel resource in the set of control channel resources, and the control information has the same coding and modulation scheme; the second communication node needs to monitor each control channel in the set and combines the monitored control channel information in different control channel resources to obtain combined beam gains, thereby enhancing the coverage of the control information. A second sending and receiving manner is that different downlink control information is transmitted in the detection space corresponding to the second communication node in each control channel resource in the set of control channel resources to indicate a data scheduling situation of the second communication node in different sending modes in table 1 corresponding to different control channel resources. The second communication node needs to monitor the downlink control information on each control channel resource of the multiple control channel resources. A third sending and receiving manner is that the first communication node selects one or more control channel resources from the set of control channel resources to send downlink control channels, and the second communication node needs to monitor the downlink control channels on each control channel resource in the set of control channel resources. A fourth sending and receiving manner is that the first communication node and the second communication node agree to send and receive the downlink control information on control resources with the best receiving performance and select the second best sending mode for sending and receiving if it is determined that the sending or the receiving fails, and so on.

It can be seen from the above description that a set of sending modes corresponding to the dedicated control channel resource is the same as or different from a set of sending modes corresponding to the common control channel. A first manner is to notify a first set of sending modes (the first set of sending modes is shared by the dedicated control channel resource and the common control channel resource such as the set of sending modes {5, 0, 8, 12}) and then respectively notify the set of sending modes corresponding to the dedicated control channel resource (a subset of the first set of sending modes such as {5}) and the set of sending modes corresponding to the common control channel resource (a subset of the first set of sending modes such as {5, 0, 8, 12}). A second manner is to respectively notify the set of sending modes corresponding to the common control channel resource and the set of sending modes corresponding to the dedicated control channel resource via control signaling. For example, the set of sending modes corresponding to the dedicated control channel resource is a subset of the set of sending modes corresponding to the common control channel resource. The receiving modes corresponding to the control channel resources may be notified in similar manners to the sending modes corresponding to the control channel resources.

When the set includes multiple control channel resources, a detail is that the set of optimal sending modes fed back by the second communication node in the beam training may not be received simultaneously by the second communication node. For example, the second communication node may only generate one receiving direction at one time; when the set of optimal candidate sending mode in the downlink is {0, 1, 2, 3}, the receiving directions of the second communication node corresponding to the sending mode indexes 0, 1, 2 and 3 are different, and the sending modes {0, 1, 2, 3} are sent in the same second time unit with reference to table 1, the second communication node cannot simultaneously receive the downlink control information in each sending mode in the set of candidate sending modes. The first sending and receiving manner has little problem. However, the second sending and receiving manner has a relatively large problem. Therefore, if the downlink control information of the second communication node is sent or received in the above the first or second sending and receiving manner, preferably, the sending modes in the set of optimal sending modes are sent in different second time units with reference to table 1; if the sending modes in the set of optimal sending modes are sent in the same second time unit with reference to table 1, preferably, the second communication node needs to feed back whether the receiving direction of each sending mode is the same in a feedback phase of the beam training, or only feed back the set of sending modes with the same receiving direction. In another possible implementation of this embodiment, considering that the downlink control information includes the dedicated downlink control information (the dedicated downlink control information is the downlink control information of a specified second communication node), the first communication node sends the dedicated downlink control information in S 110 in a manner that the first communication node sends the dedicated downlink control information to the specified second communication node in the dedicated detection space of the specified second communication node in the control channel resource where the specified second communication node is located. In this embodiment, a time-frequency position of the dedicated detection space in the control channel resource may be obtained according to identification information of the second communication node (that is, Cell-Radio Network Temporary Identifier (C-RNTI)) and at least one of the index of the first time unit, the index of the control channel resource and the index of the second time unit. One control channel resource is used for sending the downlink control information of one or more second communication nodes. The dedicated detection space may also occupy all time-frequency resources of the control channel resource where the dedicated detection space is located.

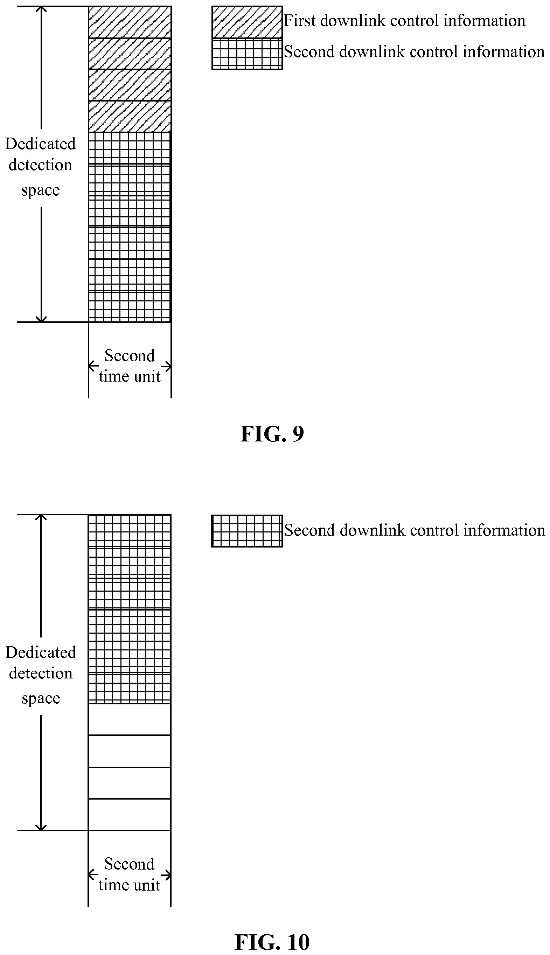

For example, the dedicated detection space includes first downlink control information (indicating control information related to downlink transmission) and second downlink control information (indicating control information related to uplink transmission). Each piece of control information has a transmission code rate of a fixed value, and the transmission code rate includes a channel coding and modulation scheme. It is assumed that the probability of occurrence of the downlink control information is larger than that of uplink control information, so the first downlink control information in the dedicated detection space occupies fixed time-frequency resources in the dedicated detection space. The second communication node first detects the first downlink control information; if the first downlink control information is detected, the second downlink control information occupies time-frequency resources in the dedicated detection space other than the time-frequency resource occupied by the first downlink control information. FIG. 9 is a schematic diagram of a dedicated detection space in the information transmission method according to this embodiment. If the first downlink control information is not detected, a start position of the time-frequency resources occupied by the second downlink control information is the start position of the dedicated detection space. FIG. 10 is a schematic diagram of another dedicated detection space in the information transmission method according to this embodiment. The frequency domain resources occupied by the dedicated detection space in FIG. 9 and FIG. 10 are only examples, and may be, for example, interleaved virtual frequency domain resources, or may be non-continuous frequency domain resources, or may be virtual time-frequency resources. Physical resources corresponding to the virtual time-frequency resources are distributed in the illustrated dedicated detection space. In this embodiment, the second communication node may have has one or more dedicated detection spaces shown in FIG. 9 and FIG. 10 in one control channel resource.

In each embodiment described above of the present invention, the number of second time units included in the downlink control domain of each first time unit, that is, the value of N is fixed, and each control channel resource only corresponds to one second time unit. In another embodiment of the present invention, each control channel resource may not be transmitted in only one second time unit, but the first communication node flexibly adjusts the control channel resources according to the downlink control information to be sent currently, so that the value of N is variable in different first time units. That is, the first communication node sends the control channel resources as needed and may flexibly adjust the number of second time units included in the downlink control domain. At this time, it is agreed that if one control channel resource is sent in one first time unit, the one control channel resource only appears in one second time unit of the one first time unit, but the second time unit used for transmitting the one control channel resource is not unique, as shown in table 2; and the first communication node and the second communication node agree that each second time unit includes at most four control channel resources, that is, *N_{control,max}* = 4. When the control channel resource where the second communication node is located is 9, the second communication node needs to detect the control channel resource thereof in the second time units with indexes 0, 1 and 2 with reference to table 2 in each first time unit and determines the one second time unit where the control channel resource is located. For example, the second communication node assumes that the second time units with indexes 0, 1 and 2 are respectively the second time unit where the control channel resource 9 is located, obtains channel energy or a value of a signal to interference plus noise ratio (SINR) of the control channel resource 9 and determines the second time unit with the maximum channel energy or SINR value to be the second time unit where the control channel resource 9 is located. For example, the second time unit where the control channel resource 9 is located is determined to be the second time unit with the index 1 and the second communication node detects the downlink control information in the detection space of the second communication node in the control channel resource 9 in the second time unit with the index 1. In the above determining process by a blind detection, the second communication node may further perform the determining in conjunction with an agreement with the first communication node that each second time unit includes at most *N_{control,max}* = 4 control channel resources. For example, if the second communication node has good receiving performance for the control channel resource {0, 1, 2, 3} in the second time unit with the index 0, the second communication node may determine that the control channel resource 9 is not located in the second time unit with the index 0. It can be seen from table 2 that when the control channel resources have different indexes, the number of indexes of the corresponding second time units may be different and thus the second communication node needs to detect different numbers of second time units.

**Table 2**

| Index of the control channel resource | Index of the corresponding second time unit |
|---|---|
| 0, 1, 2, 3 | 0 |
| 4, 5, 6, 7 | 0, 1 |
| 8, 9, 10, 11 | 0, 1, 2 |
| 12, 13, 14, 15 | 0, 1, 2, 3 |

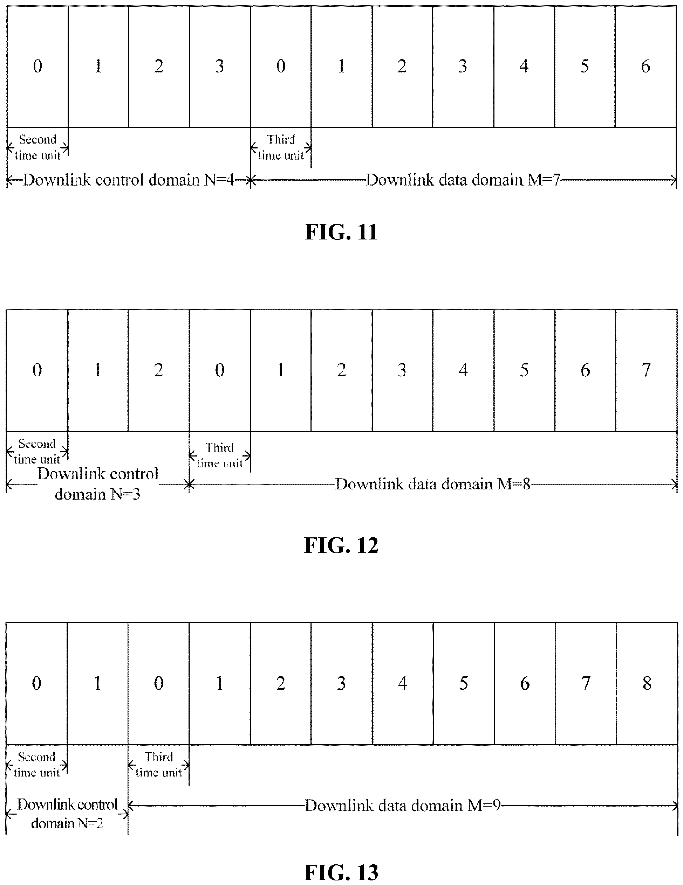

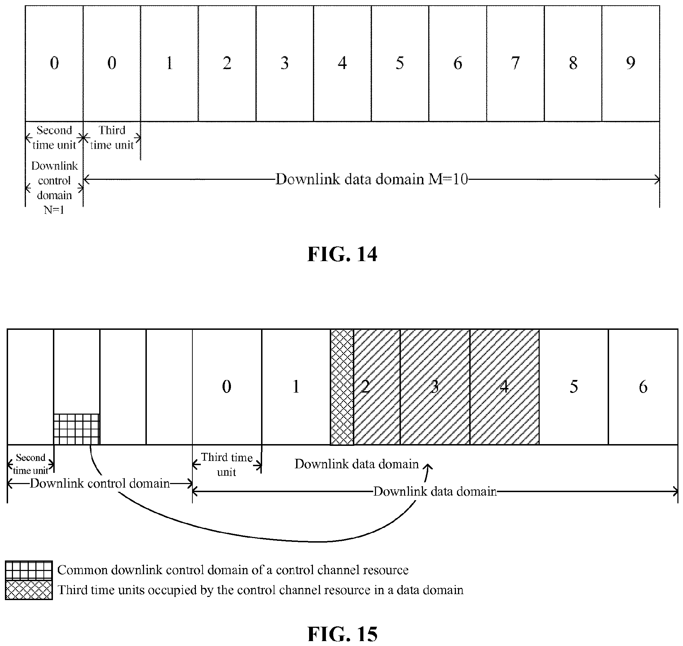

In this embodiment, when the value of N is variable in different first time units, a problem of the manner in which the second communication node detects the downlink control information is that due to a fixed length of the first time unit and a fixed length of the second time unit, different values of N may result in different values of M and *N_{d,sym}* in the data domain or different subcarriers corresponding to the data domain. In view of the above problem, in a first implementation, the second communication node may adjust one or more of the following parameter values: M, *N_{d,sym}* and the subcarrier spacing corresponding to the data domain according to different values of N. In this embodiment, when the value of N is variable in different first time units, the start position of the data domain and the number of third time units included in the data domain may be variable. In another implementation of the embodiments of the present invention, a length of one second time unit, a length of one third time unit and a duration of the GP are the same, collectively referred to as a micro time unit; or if the first time unit has the structure in FIG. 5, a length of the fifth time unit may also be a duration corresponding to the micro time unit. Assuming that the first time unit includes *N*_{total,t} micro time units, if the downlink control domain includes N micro time units, the number of micro time units occupied by other domains is *N*_{total,t} - *N*. When the first time unit has the structure in FIG. 2, *M* = *N*_{total,t} *- N*. When the first time unit has the structure in FIG. 3 and FIG. 4, *M* = *N*_{total,t} *- N -* 1. When the first time unit has the structure in FIG. 5, *M* + *M*1 = *N*_{total,t} *- N -* 1. The receiving end in this embodiment may automatically adjust the start position of the third time unit with an index 0 in the first time unit according to the value of N. FIG. 11 is a schematic diagram of a first time unit in an information transmission method according to an embodiment of the present invention. FIG. 12 is a schematic diagram of another first time unit in an information transmission method according to an embodiment of the present invention. FIG. 13 is a schematic diagram of another first time unit in an information transmission method according to an embodiment of the present invention. FIG. 14 is a schematic diagram of another first time unit in an information transmission method according to an embodiment of the present invention. As shown in FIG. 11 to FIG. 14, the first time unit has the first structure shown in FIG. 2, the first time unit includes *N*_{total,t} = 11 micro time units, and FIG. 11 to FIG. 14 sequentially show the N micro time units in the downlink control domain. When the values of N are sequentially 4, 3, 2 and 1, the downlink data domain includes M micro time units and the values of M are sequentially 7, 8, 9 and 10. In these figures, *N*_{total,t} is just an example and not intended to limit other values. In this embodiment, the length of one second time unit and the length of one third time unit are the same, that is, the absolute durations of the one second time unit and the one third time unit are the same. A first manner is that the symbols included in the second time unit and the symbols included in the third time unit are both OFDM symbols, the subcarrier spacing is the same, and the number of OFDM symbols is the same. A second manner is that the symbols included in the second time unit and the symbols included in the third time unit are both OFDM symbols, the subcarrier spacing is different, and the number of OFDM symbols is may be different. In the above second manner, one of the second time unit and the third time unit includes the OFDM symbols and the other one includes the single carrier symbols.

In this embodiment, when the value of N is variable in different first time units, the number of second time units included in the downlink control domain of the first time unit, the value of N, may be notified by the first communication node through one or more of: the dedicated downlink control information in the dedicated detection space, the common downlink control information in the common detection space at the control channel resource level, the common downlink control information in the common detection space at the second time unit level and the downlink control information at the first time unit level. The downlink control information notifies the value of N, the number of second time units included in the following one or more first time units. In another manner, the first communication node and the second communication node agree a maximum number *N*ₘₐₓ of second time units included in the downlink control domain, and the second communication node blindly detects the demodulation reference signals corresponding all the control channel resources in the *N*ₘₐₓ second time units to obtain the value of N. This manner has a problem of a detection error because it is possible that the demodulation reference signals corresponding to all the control channel resources in the last second time unit cannot reach the second communication node.

In another implementation of this embodiment, the first communication node and the second communication node agree that when one control channel resource may be transmitted in multiple second time units, the one control channel resource may be transmitted on the multiple second time units capable of transmitting the one control channel resource in one first time unit. The second communication node detects and determines the multiple second time units where the one control channel resource is located and detects the control information in the detection space of the second communication node in the one channel resources in the obtained multiple second time units.

In yet another implementation of this embodiment, the correspondence between each control channel resource and the second time units is that each control channel resource corresponds to the set of second time units with the indexes 0- *N*ₘₐₓ - 1, where *N*ₘₐₓ is the a maximum number of second time units included in the downlink control domain agreed by the first communication node and the second communication node. Moreover, the first communication node and the second communication node agree that a maximum number of control channel resources included in each second time unit is *N_{control,max}.* The second communication node blindly detects the demodulation reference signal corresponding to one control channel resource of the second communication node in the 0- *N*ₘₐₓ - 1 second time units, determines the second time unit where the one control channel resource is located, and further detects the downlink control information in the detection space corresponding to the one control channel resource. Furthermore, the first communication node and the second communication node may also agree that one control channel resource is only transmitted on one second time unit, thereby reducing the blind detection complexity of the receiving end to some degree. The blind detection is performed by using the maximum number *N_{control,max}* of control channel resources included in each second time unit as auxiliary information.

In the information transmission method according to this embodiment, because the value of N is variable in different first time units, the first communication node may send control channel resources as needed and may flexibly adjust the number of second time units included in the downlink control domain, that is, the sending modes of the downlink control domain may be flexibly adjusted to perform transmission as needed; and the first communication node and the second communication node make some agreements, thereby improving flexibility and reducing the blind detection complexity of the receiving end.

In each embodiment of the present invention, the downlink control information in each control channel resource includes the common downlink control information and the dedicated downlink control information. The common downlink control information indicates a set of third time units of the control channel resource. The dedicated downlink control information or a combination of the common downlink control information and the dedicated downlink control information indicates a set of dedicated third time units. The set of dedicated third time units is a set of third time units occupied by data of the second communication node corresponding to the set of dedicated third time units. In addition, an index of the set of dedicated third time units or a plurality of indexes of the third time units in the set of third time units of the control channel resource may be discrete or continuous. When the first communication node and the second communication node agree that the indexes of the third time units in the set of third time units are continuous, the common downlink control information or the dedicated downlink control information indicates a number of third time units and a third time unit with a minimum index value included in the set of third time units. The number of third time units may be obtained by notifying the minimum index value and a maximum index value. In particular, the first communication node and the second communication node agree that when one control channel resource is located in the last second time unit in the downlink control domain, the downlink control information in the one control channel resource only indicates the number of third time units included in the set of third time units. At this time, it is agreed that the third time unit with the minimum index value in the set of third time units is the third time unit with an index 0.

In has been described in the above embodiments that each control channel resource has the common downlink control information, and the common downlink control information indicates a set of indexes of the third time units occupied, in the downlink data domain, by a downlink data signal indicated by all downlink control information included in the each control channel resource. The common downlink control information of each control channel resource occupies a time-frequency resource in the second time unit where the each control channel resource is located, or the common downlink control information of each control channel resource occupies a time-frequency resource on a first symbol in the second time unit where the each control channel resource is located.

In yet another embodiment of the present invention, when the first time unit has the first structure or the second structure in the above embodiments, a first symbol corresponding to each control channel resource in each second time unit includes a physical control format indicator channel (PCFICH) used for indicating a total number *N_{control,total}* of symbols occupied by the each control channel resource. When *N_{control,total} > N_{c,sym}*, *N_{control,total}* - *N_{c,sym}* symbols occupy a first symbol to an *N_{control,total}* - *N_{c,sym}*-th symbol in one or more third time units with the minimum index value in the set of third time units occupied, in the downlink data domain, by the downlink data signal indicated by the common downlink control information in the each control channel resource and the PCFICH only occupies a time-frequency resource in a first symbol in the second time unit where the each control channel resource is located. In this case, the first communication node and the second communication node agree that *N_{control,total} > N_{c,sym}*. Furthermore, when the PCFICH exists, each control channel resource in this embodiment has the common downlink control information at the control channel resource level and the common downlink control information only occupies a time-frequency resource in the second time unit where the each control channel resource is located and the occupied time-frequency resource is agreed by the first communication node and the second communication node. The common downlink control information indicates a set of index information of the third time units occupied, in the downlink data domain, by the downlink data signal indicated by all the downlink control information included in the each control channel resource. On the side of the second communication node, the common downlink control information of the control channel resource with a fixed time-frequency position is detected to obtain the set of third time units occupied, in the data domain, by downlink data indicated by the downlink control information included in this control channel resource. FIG. 15 is a schematic diagram of scheduling data for a control channel resource in the information transmission method according to an embodiment of the present invention. The control channel resource in FIG. 15 is located in the second time unit with the index 1, and the common downlink control information of the control channel resource with a fixed time-frequency resource indicates the set of third time units occupied, in the data domain, by the data indicated by the downlink control information included in this control channel resource such as a set of third time units {1, 2, 3}. The time-frequency resource occupied by the control channel includes all time-frequency resources in the second time unit with the index 1, or all time-frequency resources other than time-frequency resources occupied by the demodulation reference signals of other control channel resources included in the second time unit with the index 1, or all time-frequency resources in the first *N_{control,total}* - *N_{c,sym}* symbols of the third time unit with the index 1 (at this time, the third time unit also has the downlink control information; in one embodiment, first control information is in the second time unit with the index 1 and second control information is in the third time unit with the index 1). In the above implementation, the common downlink control information of the control channel resource is used for notifying a set of common third time units and the dedicated downlink control information indicates relative indexes of data of the second communication node in the common third time units. In another implementation of this embodiment, the common downlink control information of the control channel resource may occupy a time-frequency resource in the first symbol of the second time unit.

In the above embodiments, each control channel resource has an independent PCFICH so that different control channel resources in one second time unit may independently adjust information on a value of the PCFICH according to the downlink control information that needs to be sent currently. In another manner, all the control channel resources included in one second time unit have the same PCFICH, and the common downlink control information of the control channel resources is changed to the common downlink control information at the second time unit level and used for indicating a set of third time units occupied, in the data domain, by downlink data indicated by the downlink control information included in all the control channel resources in the one second time unit.

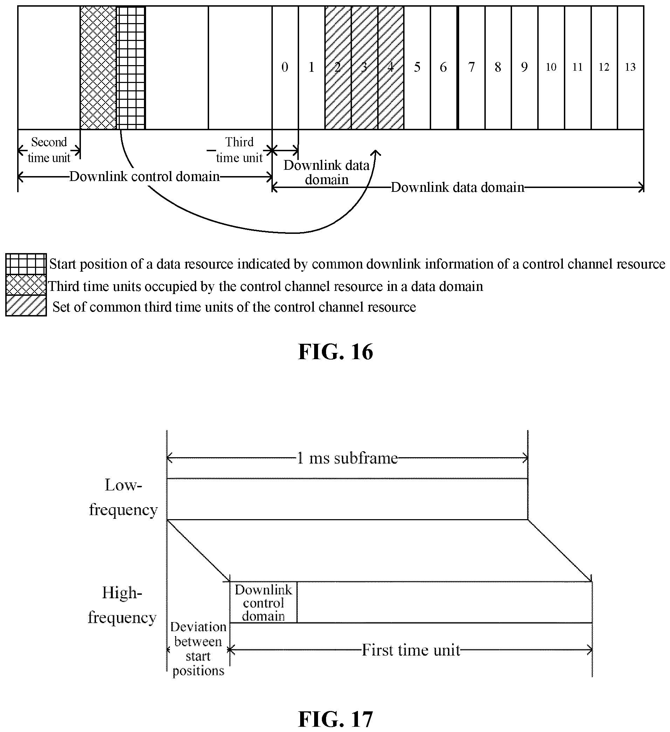

In another implementation of this embodiment, it is not limited that *N_{control,total} ≥ N_{c,sym}*, and the downlink control domain and the data domain both include the OFDM symbol and have the same subcarrier spacing. Preferably, the third time unit includes only one OFDM symbol, that is, *N_{d,sym}*=1, and the second time unit where one control channel resource is located and the set of third time units indicated by the common downlink information of the one control channel resource together constitute the resource occupied by the one control channel resource and a downlink data resource indicated by the one control channel resource. If *N_{control,total} < N_{c,sym}*, the rest *N_{c,sym} - N_{control,total}* symbols in the second time unit where the one control channel resource is located are also used for data transmission. In the resource scheduling, the first communication node and the second communication node regard a *N_{control,total}*-th symbol in the second time unit as the default start position of the resource scheduling. FIG. 16 is another schematic diagram of scheduling data for a control channel resource in an information transmission method according to an embodiment of the present invention. As shown in FIG. 16, for one control channel resource, the last *N_{c,sym} - N_{control,total}* symbols in the second time unit with an index 1 and the dedicated third time units in the data domain together constitute a resource for downlink data transmission, and each third time unit in FIG. 16 includes only one symbol.

It is similar to the above embodiments that the downlink control domain of each first time unit includes a variable number N of second time units, and one control channel resource may be transmitted on multiple second time units in one first time unit; however, the second communication node does not need to blindly detect the second time unit where one control channel resource is located, and the third communication node sends, to the second communication node, the number N of second time units included in the downlink control domain of each first time unit for the first communication node and index information of the one control channel resource in each of the current second time units.

In this embodiment, the third communication node may be a low-frequency LTE base station and the first communication node is a high-frequency base station. A 1 ms subframe of the third communication node corresponds to one first time unit of the first communication node. FIG. 17 is a schematic diagram of a correspondence between a low-frequency subframe and a high-frequency first time unit in an information transmission method according to an embodiment of the present invention. There is a fixed deviation between a start position of the low-frequency 1 ms subframe and a start position of the high-frequency first time unit and the fixed deviation may include a longest duration occupied by a low-frequency control channel and conversion time between a time at which the second communication node receives low-frequency indication information and a time at which the second communication node receives high-frequency information. Each low-frequency 1 ms subframe notifies the number of second time units included in the downlink control domain of the high-frequency first time unit and the control channel resource sent in each second time unit. For example, the second communication node receives low-frequency control information and learns that the downlink control domain of the high-frequency first time unit corresponding to the low-frequency subframe includes two second time units, the second time unit with an index 0 has control channel resources with indexes {0, 4, 8, 9}, the second time unit with an index 1 has the control channel resources with indexes {12, 13}, and the second communication node knows that control channel resource where it is located has an index 3 through a previous beam training or a previous data receiving situation or a previous control channel receiving situation. In this application scenario, the second communication node may determine that the current first time unit does not include the downlink control information for the second communication node, and thus gives up control channel detection in the current first time unit and waits for the next first time unit. In the above application scenario, if the control channel resource where the second communication node is located has an index 12, the second communication node detects the control channel resource with the index 12 in the second time unit with the index 1 and the downlink control information in the detection space of the second communication node in the control channel resource with the index 12; at this time, the start position of the downlink control domain in each first time unit is the start position of the each first time unit.

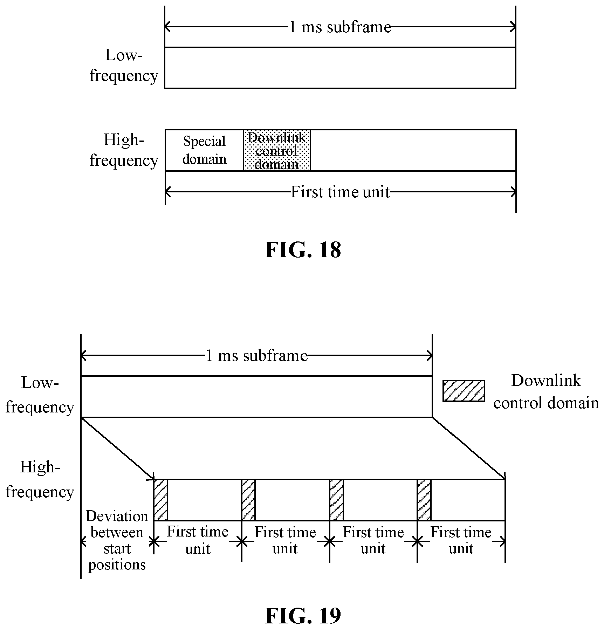

In another implementation of this embodiment, there is no deviation between the start position of the low-frequency subframe and the start position of the high-frequency first time unit. FIG. 18 is a schematic diagram of another correspondence between a low-frequency subframe and a high-frequency first time unit in an information transmission method according to an embodiment of the present invention. The length of resources between the start position of the downlink control domain in the first time unit of the high-frequency subframe and the start position of the first time unit is greater than 0 and the part of the first time unit in this length of resources is referred to as a special domain. Because the high-frequency downlink control domain is received according to an indication of the low-frequency control domain and the second communication node does not know the high-frequency downlink control information in the special domain, the second communication node cannot discard or receive the data in the special domain according to the indication of the downlink control information. A processing manner for the special domain is that the second communication node first receives the data in the special domain and determines whether to continue demodulating or abandon the data in the special domain according to the indication in the downlink control domain, and the first communication node schedules the special domain as a normal resource scheduling domain in the downlink control information. The other processing manner is that the first communication node and the second communication node agree to perform one or more of the following operations in the special domain: sending or/and receiving a beam training signal and a feedback signal; receiving Hybrid Automatic Repeat reQuest (HARQ) information corresponding to the downlink data before the first time unit; and detecting a Physical Random Access Channel (PRACH) signal.

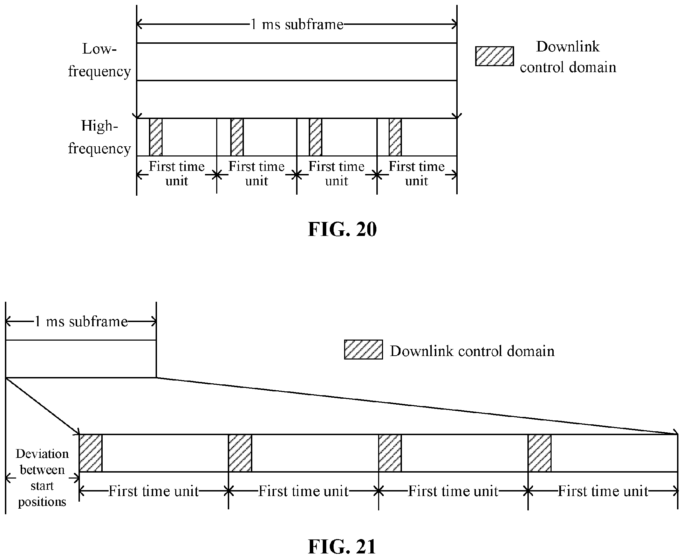

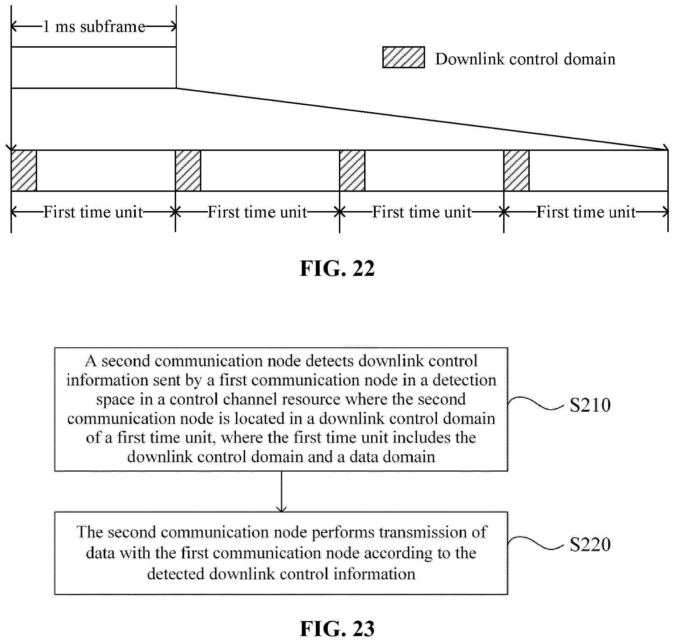

In the embodiments shown in FIG. 17 and FIG. 18, one low-frequency subframe corresponds to one high-frequency first time unit. In another implementation of this embodiment, one low-frequency subframe is denoted as a fourth time unit and the fourth time unit may correspond to multiple first time units. The value of N in multiple first time units and the index information of the control channel resources transmitted in each second time unit are notified in the fourth time unit. FIG. 19 is a schematic diagram of a correspondence between a fourth time unit and a first time unit in an information transmission method according to an embodiment of the present invention. FIG. 20 is a schematic diagram of another correspondence between a fourth time unit and a first time unit in an information transmission method according to an embodiment of the present invention. FIG. 21 is a schematic diagram of another correspondence between a fourth time unit and a first time unit in an information transmission method according to an embodiment of the present invention. FIG. 22 is a schematic diagram of another correspondence between a fourth time unit and a first time unit in an information transmission method according to an embodiment of the present invention. As shown in FIG. 19 to FIG. 22, in FIG. 19 and FIG. 20, a duration of one fourth time unit is equal to a duration of multiple first time units and the second communication node needs to detect relevant control information to the first time units transmitted in the fourth time unit in each fourth time unit; In FIG. 21 and FIG. 22, the duration of one fourth time unit is equal to the duration of one high-frequency first time unit, and the second communication node only needs to monitor the relevant control information to the high-frequency first time unit transmitted in the fourth time unit in the partial low-frequency subframe satisfies a condition. As shown in FIG. 21 and FIG. 22, the second communication node detects the relevant control information to the first time unit transmitted in the fourth time unit only in the fourth time unit with an index equal to a multiple of 4. Moreover, in the application scenarios shown in FIG. 21 and FIG. 22, the duration of the fourth time unit is not necessarily required to be equal to the duration of the first time unit as long as it is satisfied that a length of K1 fourth time units is equal to a length of K2 first time units, K1 * T_{S1} = *K2* * T_{S2}, where K1 and K2 both are a positive integer, T_{*S*1} is a length of resources in one fourth time unit generally equal to 1 ms, T_{*S*2} is a length of resources in one first time unit. At this time, the relevant control information to the K2 first time units is transmitted in the fourth time unit with an index equal to a multiple of K1. The downlink control information in the fourth time unit not only indicates the value of N in the first time unit and indexes of the control channel resources sent in each second time unit, but also indicates each first time unit has which one of the structures in FIG. 2 to FIG. 4 or which one of the structures in FIG. 2, FIG. 3 and FIG. 5.

The sending mode in the above embodiments of the present invention is one or more of a sending beam, a sending port and a sending precoding matrix used by the first communication node. In the structures of the first time unit shown in FIG. 2 to FIG. 5 in each embodiment of the present invention, M is greater than 1, but a case where M is equal to 1 is not excluded in the embodiments of the present invention.

In the above embodiments of the present invention, the information on the set of indexes of the third time units may be notified by signaling information. In one implementation, the signaling information may be carried in the downlink control information. In another implementation, the method according to the embodiments of the present invention may further include that the first communication node sends the signaling information to the second communication node. In the embodiments of the present invention, the first communication node may send downlink data information and/or the downlink control information to the second communication node in the notified set of third time units; and/or, the first communication node may receive uplink data information and/or the uplink control information sent by the second communication node in the notified set of third time units.

In the above embodiments of the present invention, a frequency domain resource occupied by data information and/or control information of the second communication node in different third time units satisfy one of the characteristics described below.

The data information and/or the control information occupy same frequency domain resources in different third time units.

The data information and/or the control information occupy different frequency domain resource positions and occupy a same length of frequency domain resources satisfying a preset frequency hopping rule in different third time units.

The data information and/or the control information occupy different frequency domain resource positions and occupy different lengths of frequency domain resources in different third time units. The data information and/or the control information occupy all the frequency domain resources in different third time units.

The above control information includes the downlink control information or the uplink control information, and different third time units belong to the same first time unit or different first time units. In addition, a frequency domain bandwidth corresponding to all the frequency domain resources is a maximum frequency domain bandwidth (such as a system bandwidth) by which the second communication node receives the signal sent by the first communication node in the current time unit, or a system bandwidth allocated to the second communication node.

In the above embodiments of the present invention, the downlink control information is used for notifying the frequency domain resources occupied, in different third time units, by the data information and/or the control information of the second communication node in one of the following manners:
Merely one piece of frequency domain resource information is notified for one set of third time units, and it is agreed by the first communication node and the second communication node that the data information and/or the control information occupies a same frequency domain resource in each third time unit in the set of third time units.

Merely one piece of frequency domain resource information is notified for one set of third time units, and it is agreed by the first communication node and the second communication node that the data information and/or the control information occupies the frequency domain resource satisfying a preset frequency hopping rule in each third time unit in the set of third time units. The frequency domain resource occupied by the data information and/or the control information is notified to each third time unit in one set of third time units.

FIG. 23 is a flowchart of another information transmission method according to an embodiment of the present invention. The information transmission method in this embodiment is suitable for channel transmission in a high-frequency communication system, and may be executed by an information transmission device. The information transmission device is implemented by a combination of hardware and software and the device may be integrated onto a processor of a first communication node for the processor's use. As shown in FIG. 23, the method in this embodiment may include the steps described below.

In S210, a second communication node detects downlink control information sent by the first communication node in a detection space in a control channel resource where the second communication node is located in a control domain of a first time unit. The control domain may be a downlink control domain.

The information transmission method provided by the embodiments of the present invention provides a new information transmission mechanism for the high-frequency communication system based on the beam transmission. In this embodiment, the second communication node receives the downlink control information using the fixed-length first time unit. A sending end of the downlink control information, the first communication node, is provided with the same first time unit as the second communication node. The first time unit in this embodiment has a structure generally including the downlink control domain and a data domain. There is a preset length of resources between a start position of the downlink control domain and a start position of the first time unit. The downlink control domain includes N second time units, each of which includes *N_{c,sym}* symbols; and the data domain includes M third time units, each of which includes *N_{d,sym}* symbols, where N, M, *N_{c,sym}* and *N_{d,sym}* are all positive integers. In other embodiments, one of N and M may be 0 and N+M is a positive integer. The preset length of resources may generally be 0, that is, the start position of the first time unit is the start position of the downlink control domain. In addition, the preset length of resources may also be greater than 0. In this embodiment, a total number of symbols included in the downlink control domain of the first time unit may be an integer multiple of a number of symbols included in each third time unit and be expressed as *N* * *N_{c,sym}* = *K* * *N_{d,sym}*, where K is a positive integer.

In an implementation of this embodiment, the first time unit may have one or more of: a first structure of the first time unit including the downlink control domain and a downlink data domain (the data domain is the downlink data domain), a second structure of the first time unit including the downlink control domain, the downlink data domain, a protection domain and an uplink data domain (the data domain includes the downlink data domain and the uplink data domain) and a third structure of the first time unit including the downlink control domain, the protection domain and the uplink data domain (the data domain is the uplink data domain). The first structure to the third structure of the first time unit may also be referred to the structures shown in FIG. 2 to FIG. 5 in the above embodiments; the structure and the number of symbols in each time unit are the same as those in the above embodiments, which are not repeated herein.

The above N, M, *N_{c,sym}*, *N_{d,sym}* and *N_{du,sym}* are fixed values agreed by the first communication node and the second communication node. In this embodiment, the fixed values agreed by the transmitting and receiving ends may also be obtained in one or more of the following manners: the values may be preset in the first communication node and the second communication node; the values may also be notified by a broadcast message sent by the first communication node; the values may also be implicitly notified by a system parameter sent by the first communication node. For example, the system parameter is a system bandwidth, and different system bandwidths correspond to different values of N, M, *N_{c,sym}*, *N_{d,sym}* and *N_{du,sym}.*

A correspondence between the system bandwidth and the values is also agreed by the first communication node and the second communication node. In addition, the symbols may also be an OFDM symbol or a single carrier symbol. If the symbols are all OFDM symbols, a subcarrier spacing of the downlink control domain may be the same as or different from a subcarrier spacing of the data domain. The subcarrier spacings may also be pre-agreed by the first communication node and the second communication node.

For example, a subcarrier spacing of the second time units may be preset. The downlink control information is used for notifying the second communication node of a subcarrier spacing of the third time units. The subcarrier spacing of the second time units is preset, that is, the subcarrier spacing of the second time units are pre-agreed by the first communication node and the second communication node. The subcarrier spacing may be a fixed value or informed by the first communication node to the second communication node via previous control information.

In this embodiment, which one of the structures in FIG. 2 to FIG. 5 the first time unit has may be notified in a manner that the second communication node determines that the first time unit has one of the first structure to the third structure according to the downlink control information in the downlink control domain of the first time unit. A notification manner may also be that the second communication node detects the downlink control information in the first time unit. The notification manner may also be that the second communication node determines that the first time unit has one of the first structure to the third structure according to an index of the first time unit. The notification manner may also be that before the S210 in the embodiment, the second communication node receives structure indication signaling sent by the first communication node or a third communication node and the second communication node determines that the current first time unit has one of the first structure to the third structure according to the structure indication signaling. The third communication node is another transmitting end other than the first communication node, and may be, for example, a low-frequency base station. Furthermore, when the first time unit has the second structure shown in FIG. 3, the numbers of time units included in the uplink data domain and the downlink data domain may be fixed, or may be notified via the downlink control information in the current first time unit. A length of the GP may be a fixed value agreed by the first communication node and the second communication node, and the fixed value is indicated in the same manners as the above fixed value, which are not repeated herein. The GP is generally between the downlink data domain and the uplink data domain.

In one embodiment, the downlink control information has at least one of the characteristics described below.

One piece of downlink control information is transmitted on one control channel resource.

One piece of downlink control information is repeatedly transmitted on more than one control channel resource.

One piece of downlink control information is jointly transmitted on more than one control channel resource.

Different pieces of control information are transmitted on different downlink control resources corresponding to the second communication node.

That one piece of downlink control information is repeatedly transmitted on more than one control channel resource satisfies at least one of the following characteristics: the downlink control information transmitted on each downlink control channel resource may be independently decoded; a complete piece of downlink control information is transmitted on each downlink control channel resource; different channel encoding redundancy versions of the downlink control information are transmitted on different control channel resources.

That one piece of downlink control information is jointly transmitted on more than one downlink control channel resource satisfies the following characteristic: the downlink control information cannot be independently decoded on each downlink control channel resource and the one piece of downlink control information may be decoded only when all information on more than one downlink control channel resource is collected.

In one embodiment, the downlink control information includes one or more of the following common control information.
common control information at a control channel resource level;
common control information at a second time unit level;
common control information at a first time unit level; and
common control information at a cell level.

The common control information at the control channel resource level is used for informing information to receiving ends of more than one piece of control information included in the control channel resource, and/or only transmitted on the control channel resource.

The common control information at the second time unit level is used for informing the control information to receiving ends corresponding to all pieces of control information included in all control channel resources of the second time unit, and/or only transmitted in the second time unit. The common control information at the first time unit level is used for informing the control information to receiving ends of all pieces of control information included in all control channel resources in the first time unit, and/or repeatedly transmitted in each second time unit of the first time unit or jointly transmitted on all second time units included in the first time unit after being encoded.

The common control information at the cell level has all users under the cell coverage as its target receiving end, and/or is transmitted in all second time unit includes in one or more first time units. In S220, the second communication node performs transmission of data with the first communication node according to the detected downlink control information.

That is, the second communication node receives downlink data sent by the first communication node or/and sends uplink data to the first communication node according to the detected downlink control information.

In this embodiment, after the second communication node detects the downlink control channel in the first time unit, the first communication node and the second communication node learn the same scheduling manner, and thus the second communication node may perform data transmission according to the received downlink control information, including receiving the downlink data sent by the first communication node or/and sending the uplink data to the first communication node.

When the second communication node determines that the first time unit has one of the first structure to the third structure, the second communication node receives the downlink data in the downlink data domain, or/and sends the uplink data in the uplink data domain according to the downlink control information. In addition, the downlink control domain of the first time unit indicates the downlink control information for multiple scheduled second communication nodes; if some second communication node does not detect the downlink control information, this second communication node does not need to perform the data transmission.

The first communication node in the embodiments of the present invention may be a communication entity on a network side, or may be different communication examples on the network side. For example, the downlink control information is sent by a macro base station, and the downlink data is sent or/and the uplink data is received by a micro base station. In addition, in the embodiments of the present invention, the different downlink control information sent by the first communication node occupies a same number of or different numbers of second time units.

Different from the existing low-frequency communications, in each embodiment of the present invention, the downlink control domain of the first time unit includes N second time units and M third time units. Multiple second time units are used in the downlink control domain to send the downlink control information of different directions in one first time unit. In addition, the first time unit includes M third time units to increase a length of the time unit in which each second communication node detects control information to some degree and reduce detection complexity of detecting the downlink control information by the second communication node to some degree; moreover, different third time units may be allocated to different second communication nodes, adapting to a communication characteristic of the high-frequency communications to send in some directions at one time.

In the information transmission method in this embodiment, the second communication node detects the downlink control information sent by the first communication node in a detection space in a control channel resource where the second communication node is located in the downlink control domain of the first time unit of a preset length so that the second communication node receives the downlink data sent by the first communication node, or/and sends the uplink data to the first communication node according to the detected downlink control information. In this embodiment, the structure of the first time unit is designed so that the downlink control information may be sent in multiple second time units in the first time unit to send the downlink control channels of different directions in one first time unit. Additionally, because the first time unit includes M third time units, the length of the time unit in which each second communication node detects the control information is increased to some degree and the detection complexity of detecting the downlink control information by the second communication node is reduced to some degree. Moreover, different third time units may be allocated to different second communication nodes, adapting to the communication characteristic of the high-frequency communications to send in some directions at one time. That is, the information transmission mechanism in the high-frequency communications is properly designed in this embodiment, solving the problem in the existing art that all downlink beams cannot be transmitted simultaneously on the same symbol in a hybrid beam transmission mode and the detection complexity of the receiving end is high due to a limited number of radio frequency links in the high-frequency cellular communications.

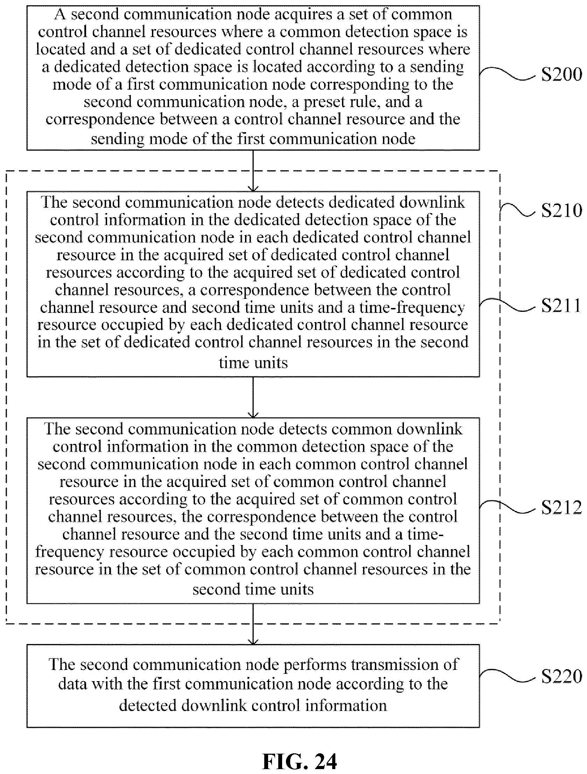

FIG. 24 is a flowchart of another information transmission method according to an embodiment of the present invention. On the basis of the above embodiments, in the first time units shown in FIG. 2 to FIG. 5, each second time unit in the downlink control domain includes one or more control channel resources, and each control channel resource carries a demodulation reference signal for demodulating the downlink control information in the each control channel resource. The demodulation reference signal in this embodiment is only used for demodulating the downlink control information in the each control channel resource, and generally cannot demodulate the downlink control information in another control channel resource.

Because the third time unit is a minimum time unit of resource scheduling, when different third time units in the first time unit are scheduled to different users, each third time unit should include a demodulation reference signal. When multiple third time units in one first time unit are allocated to one terminal, one implementation is that the multiple third time units allocated to one terminal share a set of demodulation reference signals. In one way, each of the multiple third time units has the demodulation reference signals and the demodulation reference signals may be used for combined channel estimation. In another implementation, only some of the multiple third time units have the demodulation reference signals, and some do not have the demodulation reference signals.

In addition, in this embodiment, the detection space of the second communication node may include a common detection space and a dedicated detection space. The method in this embodiment further includes S200 before the S210.

In S200, the second communication node acquires a set of common control channel resources where the common detection space is located and a set of dedicated control channel resources where the dedicated detection space is located according to a sending mode of the first communication node corresponding to the second communication node, a preset rule, and a correspondence between the control channel resource and the sending mode of the first communication node.

Accordingly, the S210 in this embodiment may include S211 and S212.

In S211, the second communication node detects dedicated downlink control information in the dedicated detection space of the second communication node in each dedicated control channel resource in the acquired set of dedicated control channel resources according to the acquired set of dedicated control channel resources, a correspondence between the control channel resource and the second time units and a time-frequency resource occupied by each dedicated control channel resource in the set of dedicated control channel resources in the second time units.

In S212, the second communication node detects common downlink control information in the common detection space of the second communication node in each common control channel resource in the acquired set of common control channel resources according to the acquired set of common control channel resources, the correspondence between the control channel resource and the second time units and a time-frequency resource occupied by each common control channel resource in the set of common control channel resources in the second time units.

The embodiments of the present invention do not limit an execution order of the S211 and the S212. The S211 and the S212 may be executed in sequence or in parallel. The flow in FIG. 24 is shown using an example in which the S211 is executed before the S212. In addition, because some first time units only have the dedicated downlink control information and some first time units only have the common downlink control information, one of the S211 and the S212 may be executed in the embodiment shown in FIG. 24. For example, in a high-frequency communication system, all downlink control information is transmitted by means of the dedicated downlink control information and the common downlink control information is not included.

In the embodiments of the present invention, the control channel resources in each second time unit may satisfy one or more of the characteristics described below.
1. Each control channel resource includes one or more physical resource blocks (PRBs) in frequency domain.
2. Each control channel resource is a control subband. The control subband refers to a maximum frequency domain resource range in which the second communication node detects the downlink control information. For example, one control subband has 5 MHz or 10MHz frequency domain resources.
3. Each control channel resource is a set of control resource units. One control resource unit refers to a minimum resource unit occupied by the downlink control information, and one piece of downlink control information occupies one or more control resource units, such as a CCE or an ECCE in the LTE.
4. Each control channel resource is one or more control channel search spaces.
5. Each control channel resource is one or more candidate control channels.
6. Each control channel resource is a search space of one second communication node. The search space of the second communication node consists of all search spaces that need to be detected by the second communication node in the current first time unit, including a dedicated search space and/or a common search space.

Similar to the LTE, one control channel search space includes one or more candidate control channels and one candidate control channel includes one or more control channel units.

In the embodiments of the present invention, the method may further include one or more of the steps described below before the S210.

The second communication node determines a set of control channel resources where the second communication node is located according to the sending mode corresponding to the second communication node.

The second communication node determines a set of second time units according to the sending mode corresponding to the second communication node and detects the downlink control information in the determined set of second time units. The sending mode corresponding to the second communication node is a sending mode used by the first communication node for sending in a communication link to the second communication node. That is, the first communication node has multiple sending beams and the second communication node is in the coverage of one or more beams. Therefore, the second communication node needs to determine one beam or beams by which the second communication node is covered. For example, the first communication node has 32 sending beams in total, the second communication node may receive 4 beams {1, 2, 3, 4} (or the second communication node feeds back 4 sending beams, or the first communication node configures, via signaling information, a set of sending modes corresponding to the second communication node for the second communication node); at this time, the sending beams corresponding to the second communication node are the beams {1, 2, 3, 4} which have been fed back.

In the embodiments of the present invention, the different downlink control information detected and/or received by the second communication node occupies a same number of or different numbers of second time units.

In an implementation of this embodiment, the downlink control information includes the dedicated downlink control information. The second communication node detects the dedicated downlink control information in the following manner: the second communication node acquires a time-frequency position of the dedicated detection space in the control channel resource and the second communication node detects the dedicated downlink control information sent by the first communication node to the second communication node in the dedicated detection space of the second communication node in the control channel resource according to the time-frequency position of the dedicated detection space in the control channel resource. The second communication node acquires the time-frequency position of the dedicated detection space in the control channel resource in the following manner: the second communication node obtains the time-frequency position of the dedicated detection space of the second communication node in the control channel resource according to identification information of the second communication node (C-RNTI) and at least one of an index of the first time unit, an index of the control channel resource and an index of the second time unit. One control channel resource is used for sending the downlink control information of one or more second communication nodes. Alternatively, the second communication node determines all time-frequency resources of the control channel resource where the dedicated detection space is located occupied by the dedicated detection space. In this embodiment, a correspondence between the control channel resource and the sending mode may be preset in the first communication node and the second communication node. The correspondence between the control channel resource and the sending mode may be as follows: the control channel resource has a one-to-one correspondence with the sending mode; or each control channel resource corresponds to multiple sending modes and each of the multiple sending modes corresponds to one control channel resource; or each sending mode corresponds to multiple control channel resources. Furthermore, in this embodiment, a correspondence between the control channel resource and the second time units may also be preset in the first communication node and the second communication node. The correspondence between the control channel resource and the second time units is that the control channel resource has a one-to-one correspondence with the second time units. The correspondence may also be that each control channel resource corresponds to multiple second time units, and when one control channel resource is transmitted in the first time unit, the one control channel resource is transmitted in one of the multiple second time units corresponding to the one control channel resource in the first time unit. The correspondence may also be that each control channel resource corresponds to multiple second time units, and when one control channel resource is transmitted in the first time unit, the one control channel resource is transmitted in one or more of the multiple second time units corresponding to the one control channel resource in the first time unit. In this embodiment, the correspondence between the control channel resource and the sending mode and the correspondence between the control channel resource and the second time units are the same as those in the above embodiments, which are not repeated herein.

It has been described above that the correspondence between the control channel resource and the sending mode and the correspondence between the control channel resource and the second time units may be preset in the first communication node and the second communication node. In the first communication node and the second communication node, the correspondences may be notified by one or more of: a system broadcast and high-frequency higher layer signaling, be notified with the assistance of low-frequency signaling, or be notified according to a predetermined rule. In this embodiment, the first communication node and the second communication node agree on the correspondence between the control channel resource and the second time units so that the second communication node only detects the control information in the second time unit where the control channel of the second communication node is located according to an agreed rule, thereby reducing the complexity of detecting the control information. In an implementation of this embodiment, the manner in which the second communication node detects the downlink control information in the detection space is different according to a different correspondence between the control channel resource and the second time units. When the control channel resource has the one-to-one correspondence with the second time units, the second communication node detects the downlink control information in the detection space in the manner that the second communication node detects one control channel resource in one second time unit corresponding to the one control channel resource. When each control channel resource corresponds to multiple second time units, and when each control channel resource is transmitted in one of the multiple second time units corresponding to the each control channel resource in the first time unit, the second communication node detects the downlink control information in the detection space in the manner that the second communication node blindly detects a demodulation reference signal of one control channel resource in multiple second time units corresponding to the one control channel resource, acquires one second time unit where the one control channel resource is located, and detects the downlink control information in the detection space of the second communication node corresponding to the one control channel resource in the acquired second time unit. When each control channel resource corresponds to multiple second time units, and when each control channel resource is transmitted in one or more of the multiple second time units corresponding to the each control channel resource in the first time unit, the second communication node detects the downlink control information in the detection space in the manner that the second communication node blindly detects the demodulation reference signal of one control channel resource in multiple second time units corresponding to the one control channel resource, acquires one or more second time units where the one control channel resource is located, and detects the downlink control information in the detection space of the second communication node corresponding to the one control channel resource in the acquired one or more second time units. In addition, in this embodiment, when each control channel resource in one first time unit corresponds to multiple second time units, a set of the multiple second time units corresponding to the each control channel resource is the N second time units in the downlink control domain of the first time unit, or preset in the first communication node and the second communication node. In another case of this embodiment, the first communication node and the second communication node agree that some control channel resources are not transmitted in some first time units, and the second communication node does not detect these control channel resources in these first time units.

In the embodiments of the present invention, the detection space of any second communication node includes the common detection space and the dedicated detection space. In one case, a set of control channel resources in which the common detection space is located is the same as a set of control channel resources in which the dedicated detection space is located, except that the common downlink control information in the common detection space is of the control channel resource level. In the other case, the set of control channel resources where the common detection space is located includes the set of control channel resources where the dedicated detection space is located. In this embodiment, the set of control channel resources where the common detection space is located and the set of control channel resources where the dedicated detection space is located may be preset in the first communication node and the second communication node.

In the embodiments of the present invention, the case where the control channel resource occupies a time-frequency resource in the second time unit may include two cases. In a first case, multiple control channel resources included in each second time unit occupy all time-frequency resources of the each second time unit in a space division multiplexing manner, and multiple demodulation reference signals corresponding to the multiple control channel resources are at least one of code division multiplexing, frequency division multiplexing and time division multiplexing. In this case, one control channel resource in one second time unit occupies all the time-frequency resources of the one second time unit or occupies all time-frequency resources of the second time unit other than time-frequency resources occupied by the demodulation reference signals corresponding to other control channel resources. In a second case, multiple control channel resources included in each second time unit occupy the time-frequency resources of the each second time unit in a frequency division multiplexing manner, and a frequency domain resource occupied by the control channel resources is obtained according to one or more of the index of the control channel resources, the index of the first time unit and the index of the second time units; and multiple ports of the multiple demodulation reference signals corresponding to the multiple control channel resources are multiplexed in the frequency division multiplexing manner, and a port of the demodulation reference signal corresponding to each control channel resource only occupies time-frequency resources in the frequency domain resource occupied by the each control channel resource. Each control channel resource may include the dedicated detection space of one or more second communication nodes and one or more common control detection spaces at the control channel resource level. In this embodiment, the cases where the control channel resource occupies the time-frequency resource of the second time unit may also be referred to schematic diagrams in FIG. 7 and FIG. 8 in the above embodiments, which are not repeated herein.

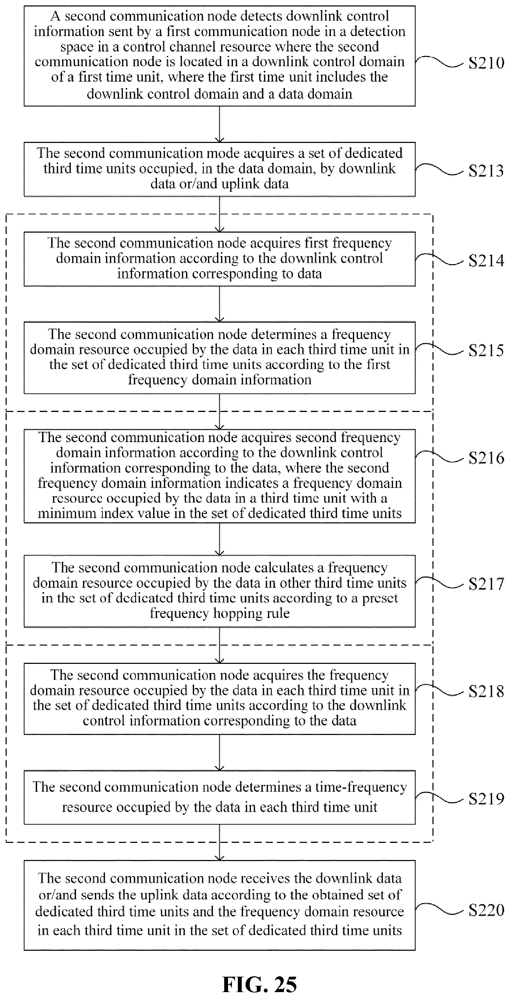

In each embodiment described above of the present invention, the number of second time units included in the downlink control domain of each first time unit, that is, the value of N is fixed, and each control channel resource only corresponds to one second time unit. In another embodiment of the present invention, each control channel resource may not be transmitted in only one second time unit, but the first communication node flexibly adjusts the control channel resources according to the downlink control information to be sent currently, so that the value of N is variable in different first time units. That is, the first communication node sends the control channel resources as needed and may flexibly adjust the number of second time units included in the downlink control domain. At this time, it is agreed that if one control channel resource is sent in one first time unit, the one control channel resource only appears in one second time unit of the one first time unit, but the second time unit used for transmitting the one control channel resource is not unique. This may also be referred to table 2 and the examples illustrated in FIG. 11 to FIG. 14. In this embodiment, because the value of N is variable in different first time units, the first communication node may send control channel resources as needed and may flexibly adjust the number of second time units included in the downlink control domain, that is, the sending modes of the downlink control domain may be flexibly adjusted to perform transmission as needed; and the first communication node and the second communication node make some agreements, thereby improving flexibility and reducing the blind detection complexity of the receiving end. FIG. 25 is a flowchart of another information transmission method according to an embodiment of the present invention. On the basis of the above embodiments, the downlink control information in each control channel resource of the embodiments includes common downlink control information and dedicated downlink control information. This embodiment further includes S213 before the S220.

In S213, the second communication node acquires a set of dedicated third time units occupied, in the data domain, by the downlink data or/and the uplink data.

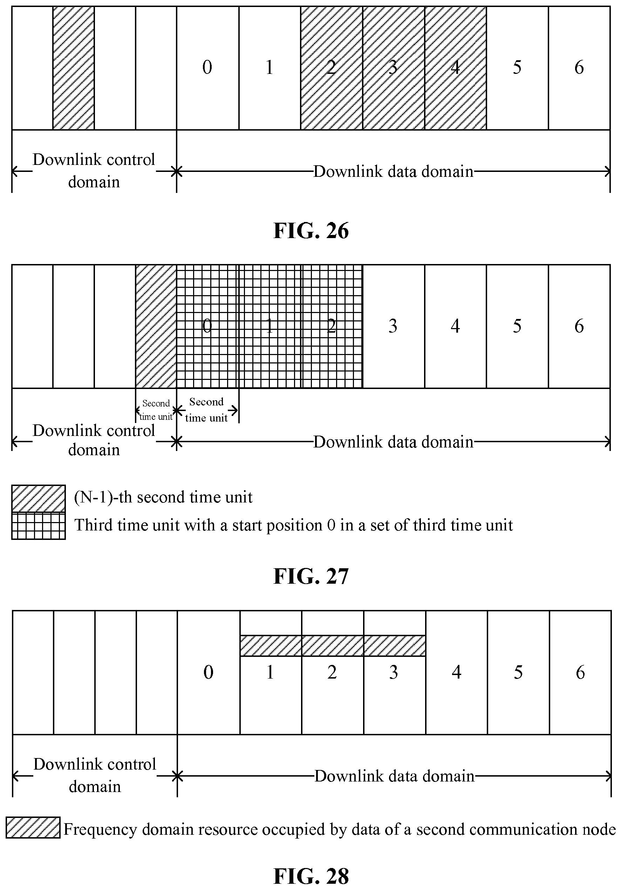

In this embodiment, the second communication node acquires the set of dedicated third time units in one or more of the following manners: In a first manner, the second communication node obtains a set of third time units of the control channel resource through the common downlink control information of the control channel resource where the second communication node is located, obtains an index of the data of the second communication node in the set of third time units of the control channel resource through the dedicated downlink control information in the control channel resource, and determining the set of dedicated third time units according to the obtained index. FIG. 26 is a schematic diagram of a set of third time units occupied by data of a second communication node in the information transmission method according to the embodiment illustrated in FIG. 25. Assuming that the sending mode corresponding to the second communication node is a sending mode 5, the control channel resource corresponding to the sending mode 5 has the common downlink control information of the control channel resource indicating that the data indicated by the downlink control information corresponding to the control channel resource occupies a set of third time units of the control channel resource {2-4}; the dedicated downlink control information of the second communication node indicates that the second communication node occupies a set of common third time units of the control channel resource with a relative index 3, and then it is determined that the data of the second communication node occupies the third time unit with an index 3 in FIG. 2. The second communication node may determine the bits occupied by the relative index indicated by the dedicated downlink control signaling according to the set of third time units of the control channel resource indicated by the common downlink control information of the control channel resource. For example, the set of third time units of the control channel resource includes 5 third time units and the bits of the relative index indicated by the dedicated downlink control information are 5. For another example, the set of third time units of the control channel resource includes 2 third time units, and the bits of the relative index indicated by the dedicated downlink control information are 2. In a second manner, the second communication node obtains the set of third time units of the control channel resource through the common downlink control information of the control channel resource where the second communication node is located and determines the set of third time units of the control channel resource to be the set of dedicated third time units. That is, the first communication node and the second communication node agree that the set of dedicated third time units is the same as the set of third time units of the control channel resource. As shown in FIG. 26, the set of dedicated third time units occupied by all the dedicated downlink control information corresponding to the control channel resource is {2~4}, and a frequency domain resource occupied by each receiving end corresponding to multiple pieces of control information included in the control channel resource may be different. In a third manner, the second communication node obtains the set of dedicated third time units according to the dedicated downlink control information of the control channel resource where the second communication node is located. As shown in FIG. 26, in the control channel resource corresponding to the sending mode 5, only the dedicated downlink control information of the second communication node notifies an index of the third time unit occupied by the second communication node, for example, the notified index is 3, and then the data of the second communication node occupies the third time unit with the index 3 in FIG. 2. In the above notification manners, a set of sending mode groups in which the downlink control domain is supported to be sent in the same second time unit may be different from a set of sending mode groups in which the data domain is sent in the same third time unit. The first communication node may flexibly schedule the sending modes, that is, a set of sending modes of the second time unit and the set of sending modes of the third time unit may be different. For example, the downlink control information requires that the control channel resources with indexes {0, 1, 2, 3} be sent in the second time unit with the index 0, but the downlink data corresponding to the control channel resource 0 is much larger than the data in the control channel resources {1, 2, 3 }; at this time, the data corresponding to the control channel resources {0, 1, 2, 3} may be simultaneously sent in a part of the third time units, and the data corresponding to the control channel resource 0 may be sent simultaneously with the data corresponding to the control channel resources other than 1-3 on the part of the third time units. Therefore, the set of sending mode groups for the downlink control domain and the set of sending mode groups for the data domain may be independently sent as needed, thereby increasing the scheduling flexibility of the base station. Due to the limited number of high-frequency radio frequency links and other factors, only a limited number of sending modes may be sent on one symbol, thereby limiting the number of sending modes that may be sent on one symbol.

The set of third time units of the control channel resource in the above manners may also notify the second time unit of the set of third time units based on the common downlink control information at the second time unit level, and at this time, it is implicit that the division of the sending mode groups for the control domain is basically the same as the division of the sending mode groups for the data domain. Indexes of the third time units included in the set of dedicated third time units or the set of third time units of the control channel resource or the common downlink control information at the second time unit level may be discrete or continuous. When the indexes are continuous, it is only necessary to notify the start position and the numbers of third time units included in the sets. The first communication node and the second communication node agree that when the first time unit has the first structure or the second structure shown in FIG. 2 or FIG. 3 or FIG. 4, FIG. 27 is another schematic diagram of a set of third time units occupied by data of a second communication node in the information transmission method according to the embodiment illustrated in FIG. 25. The set of third time units occupied in the downlink data domain indicated by the downlink control information corresponding to all control channel resources included in the last second time unit in the downlink control domain, the (N-1)-th second time unit, has a start position agreed to be the third time unit with the index 0, so that switches between sending modes of the first communication node may be effectively reduced, signaling loads are saved, and only the number of third time units included in the set of third time units, rather than the start position of the set of third time units needs to be notified in the control information corresponding to data transmission.

In this embodiment, the data of the second communication node occupies a frequency domain resource of each third time unit in the set of dedicated third time units in the following manners: In a first manner, the data of the second communication node occupies the same frequency domain resource in all the third time units in the set of dedicated third time units. FIG. 28 is a schematic diagram of a frequency domain resource occupied in a dedicated third time unit by data of a second communication node in the information transmission method according to the embodiment illustrated in FIG. 25. In this case, this embodiment further includes the steps described below after the S213.

In S214, the second communication node acquires first frequency domain information according to the downlink control information corresponding to the data.

In S215, the second communication node determines the frequency domain resource occupied by the data in each third time unit in the set of dedicated third time units according to the first frequency domain information.

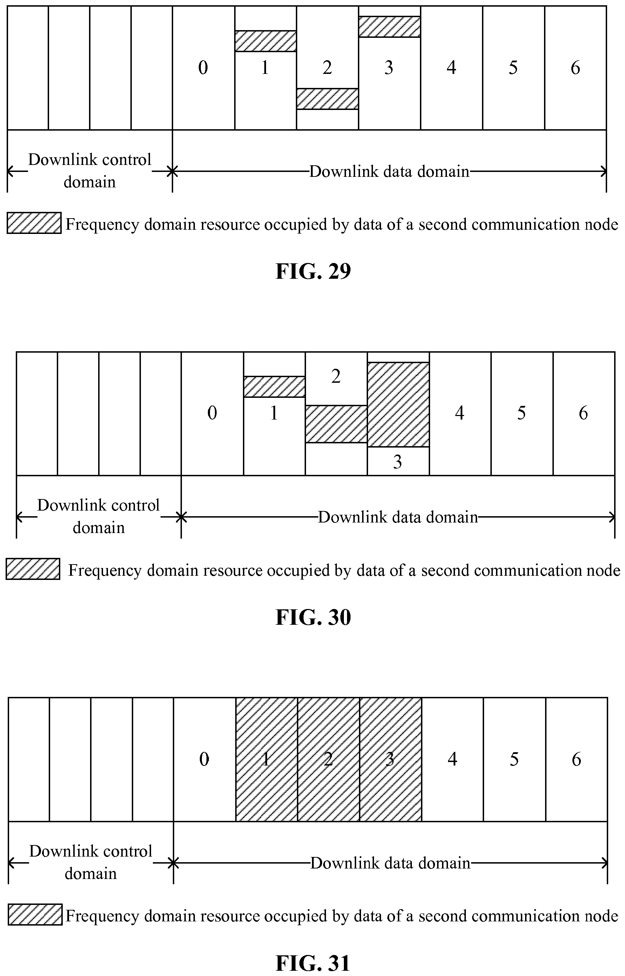

In a second manner, the data of the second communication node occupies different frequency domain resources and the same bandwidth in each third time unit in the set of dedicated third time units. FIG. 29 is another schematic diagram of a frequency domain resource occupied in a dedicated third time unit by data of a second communication node in the information transmission method according to the embodiment illustrated in FIG. 25. In this case, this embodiment further includes the steps described below after the S213.

In S216, the second communication node acquires second frequency domain information according to the downlink control information corresponding to the data. The second frequency domain information indicates a frequency domain resource occupied by the data in a third time unit with a minimum index value in the set of dedicated third time units.

In S217, the second communication node calculates a frequency domain resource occupied by the data in other third time units in the set of dedicated third time units according to a preset frequency hopping rule.

In a third manner, the data of the second communication node occupies different frequency domain resources and different bandwidths in each third time unit in the set of dedicated third time units. FIG. 30 is another schematic diagram of a frequency domain resource occupied in a dedicated third time unit by data of a second communication node in the information transmission method according to the embodiment illustrated in FIG. 25. In this case, this embodiment further includes the steps described below after the S213.

In S218, the second communication node acquires the frequency domain resource occupied by the data in each third time unit in the set of dedicated third time units according to the downlink control information corresponding to the data.

In S219, the second communication node determines a time-frequency resource occupied by the data in each third time unit.

In a fourth manner, the data of the second communication node occupies all time-frequency resources in each third time unit in the set of dedicated third time units other than time-frequency resources occupied by the demodulation reference signals. FIG. 31 is another schematic diagram of a frequency domain resource occupied in a dedicated third time unit by data of a second communication node in the information transmission method according to the embodiment illustrated in FIG. 25. In FIG. 28 to FIG. 31, all the sets of dedicated third time units are assumed as {1-3}.

In this embodiment, S214-S215, S216-S217 and S218-S219 are executed selectively. According to the manner in which the data of the second communication node occupies the frequency domain resource in each third time unit in the set of dedicated third time units, 214-S215 or S216-S217 or S218-S219 are selectively executed.

Furthermore, in this embodiment, the S220 in which the second communication node receives the downlink data or/and sends the uplink data according to the detected downlink control information may be replaced by the step in which the second communication node receives the downlink data or/and sends the uplink data according to the obtained set of dedicated third time units and the frequency domain resource in each third time unit in the set of dedicated third time units.

In has been described in the above embodiments that each control channel resource has the common downlink control information, and the common downlink control information indicates a set of indexes of the third time units occupied, in the downlink data domain, by a downlink data signal indicated by all downlink control information included in the each control channel resource. The common downlink control information of each control channel resource occupies a time-frequency resource in the second time unit where the each control channel resource is located, or the common downlink control information of each control channel resource occupies a time-frequency resource on a first symbol in the second time unit where the each control channel resource is located.

In yet another embodiment of the present invention, when the first time unit has the first structure or the second structure in the above embodiments, a first symbol corresponding to each control channel resource in each second time unit includes a physical control format indicator channel (PCFICH) used for indicating a total number *N_{control,total}* of symbols occupied by the each control channel resource. When *N_{control,total} > N_{c,sym}*, *N_{control,total}* - *N_{c,sym}* symbols occupy a first symbol to an *N_{control,total}* - *N_{c,sym}* -th symbol in one or more third time units with the minimum index value in the set of third time units occupied, in the downlink data domain, by the downlink data signal indicated by the common downlink control information in the each control channel resource and the PCFICH only occupies the time-frequency resource in the first symbol in the second time unit where the each control channel resource is located. In this case, the first communication node and the second communication node agree that *N_{control,total} > N_{c,sym}.*

In this embodiment, the third communication node may be a low-frequency LTE base station and the first communication node is a high-frequency base station. A 1 ms subframe of the third communication node corresponds to one first time unit of the first communication node. Similarly, as shown in FIG. 17, there is a fixed deviation between a start position of the low-frequency 1 ms subframe and a start position of the high-frequency first time unit and the fixed deviation may include a longest duration occupied by a low-frequency control channel and conversion time between a time at which the second communication node receives low-frequency indication information and a time at which the second communication node receives high-frequency information. Each low-frequency 1 ms subframe notifies the number of second time units included in the downlink control domain of the high-frequency first time unit and the control channel resource sent in each second time unit.

In yet another embodiment of the present invention, there is no deviation between the start position of the low-frequency subframe and the start position of the high-frequency first time unit. Similarly, as shown in FIG. 18, the length of resources between the start position of the downlink control domain in the first time unit of the high-frequency subframe and the start position of the first time unit is greater than 0 and the part of the first time unit in this length of resources is referred to as a special domain. Because the high-frequency downlink control domain is received according to an indication of the low-frequency control domain and the second communication node does not know the high-frequency downlink control information in the special domain, the second communication node cannot discard or receive the data in the special domain according to the indication of the downlink control information. A processing manner for the special domain is that the second communication node first receives the data in the special domain and determines whether to continue demodulating or abandon the data in the special domain according to the indication in the downlink control domain, and the first communication node schedules the special domain as a normal resource scheduling domain in the downlink control information. The other processing manner is that the first communication node and the second communication node agree to perform one or more of the following operations in the special domain: sending or/and receiving a beam training signal and a feedback signal; sending HARQ information corresponding to the downlink data before the first time unit; and detecting a PRACH signal.

In another implementation of this embodiment, one low-frequency subframe may also be referred to as a fourth time unit. In this embodiment, the duration of the fourth time unit is not necessarily required to be equal to the duration of the first time unit as long as it is satisfied that a length of K1 fourth time units is equal to a length of K2 first time units, *K*1*T_{*S*1} = *K*2*T_{*S*2}, where K1 and K2 both are a positive integer, T_{*S*1} is a length of resources in one fourth time unit generally equal to 1 ms, T_{*S*2} is a length of resources in one first time unit. At this time, relevant control information to the K2 first time units is transmitted in the fourth time unit with an index equal to a multiple of K1. Accordingly, this embodiment further includes the following step before S210: the second communication node detects downlink control information sent by the third communication node in every K1 fourth time units and obtains, according to the detected downlink control information, one or more of the following information about the K2 first time units: a number of second time units included in each first time unit, an index of the control channel resource sent in each second time unit and each first time unit having one of the first structure, the second structure and the third structure. That is to say, the downlink control information in the fourth time unit not only indicates the value of N in the first time unit and indexes of the control channel resources sent in each second time unit, but also indicates each first time unit has which one of the structures in FIG. 2 to FIG. 4 or which one of the structures in FIG. 2, FIG. 3 and FIG. 5.

The sending mode in the above embodiments of the present invention is one or more of a sending beam, a sending port and a sending precoding matrix used by the first communication node. The beam may be a resource (such as precoding at the transmitting end, precoding at the receiving end, an antenna port, an antenna weight vector and an antenna weight matrix) and a reference signal port. A beam ID may be a resource ID and different resources are distinguished according to at least one of: a time domain resource, a frequency domain resource, a sequence resource, a port resource, and a transmission mode resource. The transmission mode may be at least one of: a space division multiplexing transmission mode, a frequency domain diversity transmission mode and a time domain diversity transmission mode. In the structures of the first time unit shown in FIG. 2 to FIG. 5 in each embodiment of the present invention, M is greater than 1, but a case where M is equal to 1 is not excluded in the embodiments of the present invention. The sending mode may also be a quasi-co-location (QCL) relationship. For example, a QCL relationship between the demodulation reference signal and a measurement reference signal is established to illustrate the sending mode.

A receiving mode in the above embodiments of the present invention is one or more of a receiving beam, a receiving port and a receiving precoding matrix used by the second communication node. The beam may be a resource (such as precoding at the transmitting end, precoding at the receiving end, an antenna port, an antenna weight vector and an antenna weight matrix) and a reference signal port. A beam ID may be a resource ID and different resources are distinguished according to at least one of: a time domain resource, a frequency domain resource, a sequence resource, a port resource, and a transmission mode resource. The transmission mode may be at least one of: a space division multiplexing transmission mode, a frequency domain diversity transmission mode and a time domain diversity transmission mode. The receiving mode may also be a QCL relationship. For example, a QCL relationship between the demodulation reference signal and the measurement reference signal is established to illustrate the receiving mode.

In the above embodiments of the present invention, the information on the set of indexes of the third time units may be notified by signaling information. In one implementation, the signaling information may be carried in the downlink control information. In another implementation, the method according to the embodiments of the present invention may further include that the second communication node receives the signaling information sent by the first communication node. In the embodiments of the present invention, the first communication node may send downlink data information and/or the downlink control information to the second communication node in the notified set of third time units; and/or, the first communication node may receive uplink data information and/or the uplink control information sent by the second communication node in the notified set of third time units.

When the information on the set of indexes of the third time units (a set of third time units occupied by the data of the second communication node or a set of third time units corresponding to the uplink control information of the second communication node) is notified, and when the third time units are continuous, the start position and/or an end position of the third time units may be notified.

The start position may be jointly notified by higher layer signaling and dynamic signaling. The higher layer signaling includes radio resource control (RRC) signaling and/or media access control control element (MAC-CE) signaling.

For example, the higher layer signaling notifies a set of start positions, and the dynamic signaling indicates an index of a start position of the data in the set.

The manner of notifying the start position may be similarly used for notifying the end position, that is, the end position is notified via two or more layers of control information.

For the start position, optionally, the end positions of multiple pieces of data are notified and/or the start positions of multiple pieces of data are notified.

Different start positions of the data correspond to different sets of frequency domain resources. For example, the start position of the data on the physical resource block {PRB0, PRB3} is a third time domain symbol and the start position on the physical resource block {PRB15, PRB8} is a 0-th time domain symbol.

And/or different start positions of the data correspond to different time domain units. For example, the start position of the data in the slotn (in this case, one slot corresponds to one third time unit) is a 0-th time domain symbol and the start position of the data in the slotn+1 is a second time domain symbol.

Similarly, different end positions of the data correspond to different sets of frequency domain resources, and/or different end positions of the data correspond to different time domain units, which are not repeated herein.

In the above embodiments of the present invention, the control channel resource where the second communication node is located is a subset of a first set of control channel resources. The first set of control channel resources includes all control channel resources in the first time unit, or the first set of control channel resources includes one control channel resource in the first time unit or all control channel resources in the second time unit.

In the above embodiments of the present invention, the S210 in which the second communication node detects the downlink control information sent by the first communication node may be implemented in the following manners:
The second communication node detects first downlink control information in the set of second time units and detects second downlink control information in the set of third time units.

Alternatively, the second communication node detects the first downlink control information in the set of second time units.

When the second communication node detects the first downlink control information, the second communication node detects the second downlink control information in each third time unit in the set of third time units.

In the above embodiments of the present invention, the set of third time units satisfies at least one of the characteristics described below.

The set of third time units is determined according to related information notified by the first downlink control information.

The set of third time units is a subset of the set consisting of all the third time units in the first time unit. The set of third time units may also consist of the third time units in the first time unit, that is, the subset may be the subset itself.

The set of third time units is notified by signaling information before the first time unit.

In the above embodiments of the present invention, a frequency domain resource occupied by data information and/or control information of the second communication node in different third time units satisfies one of the characteristics described below.

The data information and/or the control information occupy a same frequency domain resource in different third time units.

The data information and/or the control information occupy different frequency domain resource positions and occupy a same length of frequency domain resources satisfying a preset frequency hopping rule in different third time units.

The data information and/or the control information occupy different frequency domain resource positions and different lengths of frequency domain resources in different third time units.

The data information and/or the control information occupy all the frequency domain resources in different third time units.

The above control information includes the downlink control information or the uplink control information, and different third time units belong to the same first time unit or different first time units. In addition, a frequency domain bandwidth corresponding to all the frequency domain resources is a maximum frequency domain bandwidth (such as a system bandwidth) by which the second communication node receives the signal sent by the first communication node in the current time unit, or a system bandwidth allocated to the second communication node.

In the above embodiments of the present invention, the downlink control information is used for notifying the frequency domain resources occupied, in different third time units, by the data information and/or the control information of the second communication node in one of the following manners:
Merely one piece of frequency domain resource information is notified for one set of third time units, and it is agreed by the first communication node and the second communication node that the data information and/or the control information occupies a same frequency domain resource in each third time unit in the set of third time units.

Merely one piece of frequency domain resource information is notified for one set of third time units, and it is agreed by the first communication node and the second communication node that the data information and/or the control information occupies the frequency domain resource satisfying a preset frequency hopping rule in each third time unit in the set of third time units. The frequency domain resource occupied by the data information and/or the control information is notified to each third time unit in one set of third time units.

In the above embodiments of the present invention, the control channel resource where the second communication node is located corresponds to different control channel resource groups and the number of second time units to be detected by the second communication node is different. The control channel resource belongs to the control channel resource group and the control channel resource group includes one or more control channel resources.

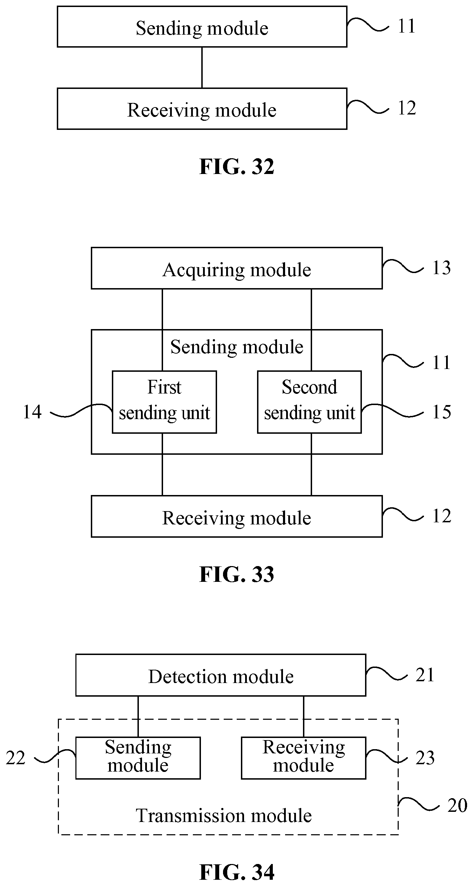

FIG. 32 is a structural diagram of an information transmission device according to an embodiment of the present invention. The information transmission device in this embodiment is suitable for channel transmission in a high-frequency communication system. The information transmission device is implemented using a combination of hardware and software and the device may be integrated onto a processor of a first communication node for the processor's use. As shown in FIG. 32, the device in this embodiment may include a sending module 11 and a receiving module 12.

The sending module 11 is configured to send downlink control information to one or more second communication nodes within a downlink control domain of a first time unit.

The information transmission device provided by the embodiments of the present invention provides a new information transmission mechanism for the high-frequency communication system based on the beam transmission. In this embodiment, the sending module 11 sends the downlink control information using the fixed-length first time unit. A receiving end of the downlink control information, the second communication node, is provided with the same first time unit as the first communication node. The first time unit in this embodiment has a structure generally including the downlink control domain and a data domain. There is a preset length of resources between a start position of the downlink control domain and a start position of the first time unit. The downlink control domain includes N second time units, each of which includes *N*_{*c*,*sym*} symbols; and the data domain includes M third time units, each of which includes *N_{d,sym}* symbols, where N, M, *N_{c,sym}* and *N_{d,sym}* are all positive integers. The preset length of resources may generally be 0, that is, the start position of the first time unit is the start position of the downlink control domain. In addition, the preset length of resources may also be greater than 0. In this embodiment, a total number of symbols included in the downlink control domain of the first time unit may be an integer multiple of a number of symbols included in each third time unit and be expressed as *N * N_{c,sym} = K * N_{d,sym}*, where K is a positive integer. In an implementation of this embodiment, the first time unit may have one or more of: a first structure of the first time unit including the downlink control domain and a downlink data domain (the data domain is the downlink data domain), a second structure of the first time unit including the downlink control domain, the downlink data domain, a protection domain and an uplink data domain (the data domain includes the downlink data domain and the uplink data domain) and a third structure of the first time unit including the downlink control domain, the protection domain and the uplink data domain (the data domain is the uplink data domain). The first structure to the third structure of the first time unit may also be referred to the structures shown in FIG. 2 to FIG. 5 in the above embodiments; the structure and the number of symbols in each time unit are the same as those in the above embodiments, which are not repeated herein.

The above N, M, *N_{c,sym}*, *N_{d,sym}* and *N_{du,sym}* are fixed values agreed by the first communication node and the second communication node. In this embodiment, the fixed values agreed by the transmitting and receiving ends may be obtained in one or more of the following manners: the values may be preset in the first communication node and the second communication node; the values may also be notified by a broadcast message sent by the first communication node; the values may also be implicitly notified by a system parameter sent by the first communication node. For example, the system parameter is a system bandwidth, and different system bandwidths correspond to different values of N, M, *N_{c,sym}*, *N_{d,sym}* and *N_{du,sym}*. A correspondence between the system bandwidth and the values is also agreed by the first communication node and the second communication node. In addition, the symbols may be an OFDM symbol or a single carrier symbol. If the symbols are all OFDM symbols, a subcarrier spacing of the downlink control domain may be the same as or different from a subcarrier spacing of the data domain. The subcarrier spacings may also be pre-agreed by the first communication node and the second communication node.

In this embodiment, which one of the structures in FIG. 2 to FIG. 5 the first time unit has may be notified in a manner that the first communication node indicates that the first time unit has one of the first structure to the third structure in the downlink control domain of the first time unit. A notification manner may also be that the first communication node indicates that the first time unit has one of the first structure to the third structure via an index of the first time unit. The notification manner may also be that the sending module 11 is further configured to send structure indication signaling to the second communication node before the sending module 11 sends the downlink control information in the downlink control domain. The structure indication signaling is used for indicating that the current first time unit has one of the first structure to the third structure. The structure indication signaling may also be sent by a third communication node to the second communication node. The third communication node is another transmitting end other than the first communication node, and may be, for example, a low-frequency base station. Furthermore, when the first time unit has the second structure shown in FIG. 3, the numbers of time units included in the uplink data domain and the downlink data domain may be fixed, or may be notified via the downlink control information in the current first time unit. A length of the GP may be a fixed value agreed by the first communication node and the second communication node, and the fixed value is indicated in the same manners as the above fixed value, which are not repeated herein. The GP is generally between the downlink data domain and the uplink data domain.

The receiving module 12 is connected to the sending module 11. The sending module 11 and the receiving module 12 are configured to send the downlink data to the one or more second communication nodes or/and receive the uplink data sent by the one or more second communication nodes according to the downlink control information sent by the sending module 11.

In this embodiment, after the sending module 11 sends the downlink control channel in the first time unit, the downlink control domain of the first time unit indicates that the scheduled second communication nodes receive the corresponding downlink control information. At this time, the first communication node and the second communication node learn the same scheduling manner, and thus the first communication node may perform data transmission according to the downlink control information sent by the sending module 11, including sending the downlink data by the sending module 11 to the second communication node or/and receiving the uplink data sent by the second communication node by the receiving module 12.

When the first communication node determines that the first time unit has one of the first structure to the third structure, the sending module 11 and the receiving module 12 sends the downlink data in the downlink data domain, or/and receives the uplink data in the uplink data domain according to the downlink control information. In addition, the first communication node may further send the downlink data or/and receive the uplink data in the current first time unit according to the downlink control information sent in a previous first time unit.

The first communication node in the embodiments of the present invention may be a communication entity on a network side, or may be different communication examples on the network side. For example, the downlink control information is sent by a macro base station, and the downlink data is sent or/and the uplink data is received by a micro base station. In addition, in the embodiments of the present invention, the different downlink control information occupies a same number of or different numbers of second time units.

The information transmission device according to the embodiments of the present invention is used for executing the information transmission method according to the embodiment illustrated in FIG. 1 and thus has corresponding functional modules, having similar principles of implementation and technical results which will not be repeated here.

FIG. 33 is a structural diagram of another information transmission device according to an embodiment of the present invention. On the basis of the above embodiments, in the first time units shown in FIG. 2 to FIG. 5, each second time unit in the downlink control domain includes one or more control channel resources, and each control channel resource carries a demodulation reference signal for demodulating the downlink control information in the each control channel resource. The demodulation reference signal in this embodiment is only used for demodulating the downlink control information in the each control channel resource, and generally cannot demodulate the downlink control information in another control channel resource.

In addition, the device in this embodiment further includes an acquiring module 13 connected to the sending module 11. The acquiring module 13 is configured to acquire, according to a sending mode of the first communication node corresponding to the second communication node, a preset rule, and a correspondence between the control channel resource and the sending mode of the first communication node, a set of common control channel resources where a common detection space is located and a set of dedicated control channel resources where a dedicated detection space is located of the second communication node before the sending module 11 sends the downlink control information in the downlink control domain.

In this embodiment, the sending mode of the first communication node corresponding to the second communication node may be obtained according to a beam training result or in other manners, for example, according to beam tracking or received data or control information.

Accordingly, the sending module 11 in this embodiment includes a first sending unit 14 and a second sending unit 15 which are respectively connected to the acquiring module 13. The first sending unit 14 is configured to send, according to the set of dedicated control channel resources acquired by the acquiring module 13, dedicated downlink control information to the second communication node in the dedicated detection space of the second communication node in one or more dedicated control channel resources in the set of dedicated control channel resources. The second sending unit 15 is configured to send, according to the set of common control channel resources acquired by the acquiring module 13, common downlink control information to the second communication node in the common detection space of the second communication node in one or more common control channel resources in the set of common control channel resources. In this embodiment, the first sending unit 14 and the second sending unit 15 are respectively connected to the receiving module 12.

The embodiments of the present invention do not limit an execution order of the first sending unit 14 and the second sending unit 15. The first sending unit 14 and the second sending unit 15 may perform execution in sequence or in parallel. In addition, because some first time units only have the dedicated downlink control information and some first time units only have the common downlink control information, only one of the first sending unit 14 and the second sending unit 15 may perform the operation of sending the downlink control information.

The information transmission device according to the embodiments of the present invention is used for executing the information transmission method according to the embodiment illustrated in FIG. 6 and thus has corresponding functional modules, having similar principles of implementation and technical results which will not be repeated here.

In the embodiments of the present invention, the control channel resources in each second time unit may satisfy one or more of the characteristics described below.
1. Each control channel resource includes one or more physical resource blocks (PRBs) in frequency domain.
2. Each control channel resource is a control subband.
3. Each control channel resource is a set of control resource units.
4. Each control channel resource is one or more control channel search spaces.
5. Each control channel resource is one or more candidate control channels.
6. Each control channel resource is a search space of one second communication node.

In the embodiments of the present invention, before the sending module 11 sends the downlink control information, the sending module 11 is further configured to perform one or more of the operations described below.

A set of control channel resources corresponding to the downlink control information sent to the second communication node is determined according to the sending mode corresponding to the second communication node.

A set of second time units corresponding to the downlink control information sent to the second communication node is determined according to the sending mode corresponding to the second communication node. The sending mode corresponding to the second communication node is a sending mode used by the first communication node for sending in a communication link to the second communication node.

In this embodiment, a correspondence between the control channel resource and the sending mode may be preset in the first communication node and the second communication node. The correspondence between the control channel resource and the sending mode may be as follows: the control channel resource has a one-to-one correspondence with the sending mode; or each control channel resource corresponds to multiple sending modes and each of the multiple sending modes corresponds to one control channel resource; or each sending mode corresponds to multiple control channel resources. Furthermore, in this embodiment, a correspondence between the control channel resource and the second time units may also be preset in the first communication node and the second communication node. The correspondence between the control channel resource and the second time units is that the control channel resource has a one-to-one correspondence with the second time units. The correspondence may also be that each control channel resource corresponds to multiple second time units, and when one control channel resource is transmitted in the first time unit, the one control channel resource is transmitted in one of the multiple second time units corresponding to the one control channel resource in the first time unit. The correspondence may also be that each control channel resource corresponds to multiple second time units, and when one control channel resource is transmitted in the first time unit, the one control channel resource is transmitted in one or more of the multiple second time units corresponding to the one control channel resource in the first time unit. In this embodiment, when each control channel resource in one first time unit corresponds to multiple second time units, a set of the multiple second time units corresponding to the each control channel resource is the N second time units in the downlink control domain of the first time unit, or preset in the first communication node and the second communication node. In this embodiment, another case may also be included where the first communication node and the second communication node agree that the first communication node does not send some control channel resources on some first time units so that the second communication node does not detect these control channel resources in these first time units.

It has been described above that the correspondence between the control channel resource and the sending mode and the correspondence between the control channel resource and the second time units may be preset in the first communication node and the second communication node. The correspondences are notified by one or more of: a system broadcast and high-frequency higher layer signaling, are notified with the assistance of low-frequency signaling, or are notified according to a predetermined rule. In this embodiment, the first communication node and the second communication node agree on the correspondence between the control channel resource and the second time units so that the complexity of detecting downlink control channels by the second communication node is also reduced.

In the embodiments of the present invention, the case where the control channel resource occupies a time-frequency resource in the second time unit may include two cases. In a first case, multiple control channel resources included in each second time unit occupy all time-frequency resources of the each second time unit in a space division multiplexing manner, and multiple demodulation reference signals corresponding to the multiple control channel resources are at least one of code division multiplexing, frequency division multiplexing and time division multiplexing. In this case, one control channel resource in one second time unit occupies all the time-frequency resources of the one second time unit or occupies all time-frequency resources of the second time unit other than time-frequency resources occupied by the demodulation reference signals corresponding to other control channel resources. In a second case, multiple control channel resources included in each second time unit occupy the time-frequency resources of the each second time unit in a frequency division multiplexing manner, and a frequency domain resource occupied by the control channel resources is obtained according to one or more of the index of the control channel resources, the index of the first time unit and the index of the second time units; and multiple ports of the multiple demodulation reference signals corresponding to the multiple control channel resources are multiplexed in the frequency division multiplexing manner, and a port of the demodulation reference signal corresponding to each control channel resource only occupies time-frequency resources in the frequency domain resource occupied by the each control channel resource. Each control channel resource may include the dedicated detection space of one or more second communication nodes and one or more common control detection spaces at the control channel resource level. In this embodiment, the cases where the control channel resource occupies the time-frequency resource of the second time unit may also be referred to schematic diagrams in FIG. 7 and FIG. 8 in the above embodiments, which are not repeated herein.

In another possible implementation of this embodiment, considering that the downlink control information includes the dedicated downlink control information (the dedicated downlink control information is the downlink control information of a specified second communication node), the sending module 11 sends the dedicated downlink control information in a manner that the sending module 11 sends the dedicated downlink control information to the specified second communication node in the dedicated detection space of the specified second communication node in the control channel resource where the specified second communication node is located. In this embodiment, a time-frequency position of the dedicated detection space in the control channel resource may be obtained according to identification information of the second communication node (that is, Cell-Radio Network Temporary Identifier (C-RNTI)) and at least one of the index of the first time unit, the index of the control channel resource and the index of the second time unit. One control channel resource is used for sending the downlink control information of one or more second communication nodes. The dedicated detection space may also occupy all time-frequency resources of the control channel resource where the dedicated detection space is located.

In each embodiment described above of the present invention, the number of second time units included in the downlink control domain of each first time unit, that is, the value of N is fixed, and each control channel resource only corresponds to one second time unit. In another embodiment of the present invention, each control channel resource may not be transmitted in only one second time unit, but the first communication node flexibly adjusts the control channel resources according to the downlink control information to be sent currently, so that the value of N is variable in different first time units. That is, the first communication node sends the control channel resources as needed and may flexibly adjust the number of second time units included in the downlink control domain. At this time, it is agreed that if one control channel resource is sent in one first time unit, the one control channel resource only appears in one second time unit of the one first time unit, but the second time unit used for transmitting the one control channel resource is not unique. This may also be referred to table 2 and the examples illustrated in FIG. 11 to FIG. 14. In this embodiment, because the value of N is variable in different first time units, the first communication node may send control channel resources as needed and may flexibly adjust the number of second time units included in the downlink control domain, that is, the sending modes of the downlink control domain may be flexibly adjusted to perform transmission as needed; and the first communication node and the second communication node make some agreements, thereby improving flexibility and reducing the blind detection complexity of the receiving end.

In each embodiment of the present invention, the downlink control information in each control channel resource includes the common downlink control information and the dedicated downlink control information. The common downlink control information indicates a set of third time units of the control channel resource. The dedicated downlink control information or a combination of the common downlink control information and the dedicated downlink control information indicates a set of dedicated third time units. The set of dedicated third time units is a set of third time units occupied by data of the second communication node corresponding to the set of dedicated third time units. In addition, an index of the set of dedicated third time units or a plurality of indexes of the third time units in the set of third time units of the control channel resource may be discrete or continuous. When the first communication node and the second communication node agree that the indexes of the third time units in the set of third time units are continuous, the common downlink control information or the dedicated downlink control information indicates a number of third time units and a third time unit with a minimum index value included in the set of third time units. The number of third time units may be obtained by notifying the minimum index value and a maximum index value. In particular, the first communication node and the second communication node agree that when one control channel resource is located in the last second time unit in the downlink control domain, the downlink control information in the one control channel resource only indicates the number of third time units included in the set of third time units. At this time, it is agreed that the third time unit with the minimum index value in the set of third time units is the third time unit with an index 0.

In has been described in the above embodiments that each control channel resource has the common downlink control information, and the common downlink control information indicates a set of indexes of the third time units occupied, in the downlink data domain, by a downlink data signal indicated by all downlink control information included in the each control channel resource. The common downlink control information of each control channel resource occupies a time-frequency resource in the second time unit where the each control channel resource is located, or the common downlink control information of each control channel resource occupies a time-frequency resource on a first symbol in the second time unit where the each control channel resource is located.

In yet another embodiment of the present invention, when the first time unit has the first structure or the second structure in the above embodiments, a first symbol corresponding to each control channel resource in each second time unit includes a physical control format indicator channel (PCFICH) used for indicating a total number *N_{control,total}* of symbols occupied by the each control channel resource. When *N_{control,total} > N_{c,sym}*, *N_{control,total}* - *N_{c,sym}* symbols occupy a first symbol to an *N_{control,total}* - *N_{c,sym}* -th symbol in one or more third time units with the minimum index value in the set of third time units occupied, in the downlink data domain, by the downlink data signal indicated by the common downlink control information in the each control channel resource and the PCFICH only occupies the time-frequency resource in the first symbol in the second time unit where the each control channel resource is located. In this case, the first communication node and the second communication node agree that *N_{control,total} > N_{c,sym}.*

It is similar to the above embodiments that the downlink control domain of each first time unit includes a variable number N of second time units, and one control channel resource may be transmitted on multiple second time units in one first time unit; however, the second communication node does not need to blindly detect the second time unit where one control channel resource is located, and the third communication node sends, to the second communication node, the number N of second time units included in the downlink control domain of each first time unit for the first communication node and index information of the one control channel resource in each of the current second time units.

In this embodiment, the third communication node may be a low-frequency LTE base station and the first communication node is a high-frequency base station. A 1 ms subframe of the third communication node corresponds to one first time unit of the first communication node. Similarly, as shown in FIG. 17, there is a fixed deviation between a start position of the low-frequency 1 ms subframe and a start position of the high-frequency first time unit and the fixed deviation may include a longest duration occupied by a low-frequency control channel and conversion time between a time at which the second communication node receives low-frequency indication information and a time at which the second communication node receives high-frequency information. Each low-frequency 1 ms subframe notifies the number of second time units included in the downlink control domain of the high-frequency first time unit and the control channel resource sent in each second time unit.

In yet another embodiment of the present invention, there is no deviation between the start position of the low-frequency subframe and the start position of the high-frequency first time unit. Similarly, as shown in FIG. 18, the length of resources between the start position of the downlink control domain in the first time unit of the high-frequency subframe and the start position of the first time unit is greater than 0 and the part of the first time unit in this length of resources is referred to as a special domain. Because the high-frequency downlink control domain is received according to an indication of the low-frequency control domain and the second communication node does not know the high-frequency downlink control information in the special domain, the second communication node cannot discard or receive the data in the special domain according to the indication of the downlink control information. A processing manner for the special domain is that the second communication node first receives the data in the special domain and determines whether to continue demodulating or abandon the data in the special domain according to the indication in the downlink control domain, and the first communication node schedules the special domain as a normal resource scheduling domain in the downlink control information. The other processing manner is that the sending module 11 and the receiving module 12 of the first communication node are further configured to perform one or more of the following operations in the special domain: sending or/and receiving a beam training signal and a feedback signal; receiving HARQ information corresponding to the downlink data before the first time unit; and detecting a PRACH signal.

In another implementation of this embodiment, one low-frequency subframe also corresponds to one high-frequency first time unit. In another implementation of this embodiment, one low-frequency subframe is denoted as a fourth time unit and the fourth time unit may correspond to multiple first time units. The value of N in multiple first time units and the index information of the control channel resources transmitted in each second time unit are notified in the fourth time unit. Reference is also made to FIG. 19 to FIG. 22, and the duration of the fourth time unit is not necessarily required to be equal to the duration of the first time unit as long as it is satisfied that a length of K1 fourth time units is equal to a length of K2 first time units, *K*1* T_{*S*1} = *K*2* T_{*S*2}, where K1 and K2 both are a positive integer, T_{*S*1} is a length of resources in one fourth time unit generally equal to 1 ms, T_{*S*2} is a length of resources in one first time unit. At this time, relevant control information to the K2 first time units is transmitted in the fourth time unit with an index equal to a multiple of K1. The downlink control information in the fourth time unit not only indicates the value of N in the first time unit and indexes of the control channel resources sent in each second time unit, but also indicates each first time unit has which one of the structures in FIG. 2 to FIG. 4 or which one of the structures in FIG. 2, FIG. 3 and FIG. 5.

The sending mode in the above embodiments of the present invention is one or more of a sending beam, a sending port and a sending precoding matrix used by the first communication node. In the structures of the first time unit shown in FIG. 2 to FIG. 5 in each embodiment of the present invention, M is greater than 1, but a case where M is equal to 1 is not excluded in the embodiments of the present invention.

In an implementation, the sending module 11, the receiving module 12, and the first sending unit 14 and the second sending unit 15 in the sending module 11 in the each embodiment of the present invention illustrated in FIG. 32 and FIG. 33 may be implemented by a transceiver of the first communication node. The acquiring module 13 may be implemented by a processor of the first communication node, and the processor may be, for example, a Central Processing Unit (CPU), or an Application Specific Integrated Circuit (ASIC), or one or more integrated circuits used for implementing the embodiments of the present invention.

In the above embodiments of the present invention, the information on the set of indexes of the third time units may be notified by signaling information. In one implementation, the signaling information may be carried in the downlink control information. In another implementation, the sending module 11 in the embodiments of the present invention is further configured to send the signaling information to the second communication node. In the embodiments of the present invention, the sending module 11 may send downlink data information and/or the downlink control information to the second communication node in the notified set of third time units; and/or, the receiving module 12 may receive uplink data information and/or uplink control information sent by the second communication node in the notified set of third time units.

In the above embodiments of the present invention, a frequency domain resource occupied by data information and/or control information of the second communication node in different third time units satisfies one of the characteristics described below.

The data information and/or the control information occupy a same frequency domain resource in different third time units.

The data information and/or the control information occupy different frequency domain resource positions and occupy a same length of frequency domain resources satisfying a preset frequency hopping rule in different third time units.

The data information and/or the control information occupy different frequency domain resource positions and different lengths of frequency domain resources in different third time units.

The data information and/or the control information occupy all the frequency domain resources in different third time units.

The above control information includes the downlink control information or the uplink control information, and different third time units belong to the same first time unit or different first time units. In addition, a frequency domain bandwidth corresponding to all the frequency domain resources is a maximum frequency domain bandwidth (such as a system bandwidth) by which the second communication node receives the signal sent by the first communication node in the current time unit, or a system bandwidth allocated to the second communication node.

In the above embodiments of the present invention, the downlink control information is used for notifying the frequency domain resources occupied, in different third time units, by the data information and/or the control information of the second communication node in one of the following manners:
Merely one piece of frequency domain resource information is notified for one set of third time units, and it is agreed by the first communication node and the second communication node that the data information and/or the control information occupies a same frequency domain resource in each third time unit in the set of third time units.

Merely one piece of frequency domain resource information is notified for one set of third time units, and it is agreed by the first communication node and the second communication node that the data information and/or the control information occupies the frequency domain resource satisfying a preset frequency hopping rule in each third time unit in the set of third time units. The frequency domain resource occupied by the data information and/or the control information is notified to each third time unit in one set of third time units.

In the above embodiments of the present invention, each third time unit includes a demodulation reference signal.

The acquiring module 13 may be further configured to determine resource information of the demodulation reference signal according to a number of third time units allocated to the second communication node in a current first time unit.

The device may further include a dividing module. The dividing module is configured to divide the third time units allocated to the second communication node in the current first time unit into N_sub subtime units. Each of the subtime units has the demodulation reference signal and N_sub is a natural number.

The sending module 11 is further configured to notify or determine the following correspondences in one or more of the following manners:
The correspondence between the control channel resource and the sending mode is notified via the signaling information.

A correspondence between the control channel resource and a receiving mode is notified via the signaling information.

The correspondence between the control channel resource and the second time units is notifies via the signaling information. The correspondence between the control channel resource and the sending mode is determined via the predetermined rule.

The correspondence between the control channel resource and the receiving mode is determined via the predetermined rule.

The correspondence between the control channel resource and the second time units is determined via an agreed rule.

The sending module 11 is further configured to notify information on the following sets in one or more of the following manners:
Information on a set of sending modes corresponding to the dedicated control channel resource is notified via the signaling information.

Information on a set of sending modes corresponding to the common control channel resource is notified via the signaling information.

The set of sending modes corresponding to the dedicated control channel resource is a subset of the set of sending modes corresponding to the common control channel resource.

Information on a set of receiving modes corresponding to the dedicated control channel resource is notified via the signaling information.

Information on a set of receiving modes corresponding to the common control channel resource is notified via the signaling information.

The set of receiving modes corresponding to the dedicated control channel resource is a subset of the set of receiving modes corresponding to the common control channel resource.

The control channel resource is located in the downlink control domain. FIG. 34 is a structural diagram of another information transmission device according to an embodiment of the present invention. The information transmission device in this embodiment is suitable for channel transmission in a high-frequency communication system. The information transmission device is implemented using a combination of hardware and software and the device may be integrated onto a processor of a second communication node for the processor's use. As shown in FIG. 34, the device in this embodiment may include a detection module 21 and a transmission module 20. The transmission module 20 includes at least one of a sending module 22 and a receiving module 23.

The detection module 21 is configured to detect downlink control information sent by a first communication node in a detection space in a control channel resource where the second communication node is located in a downlink control domain of a first time unit.

The information transmission device provided by the embodiments of the present invention provides a new information transmission mechanism for the high-frequency communication system based on the beam transmission. In this embodiment, the detection module 21 receives the downlink control information using the fixed-length first time unit. A transmitting end of the downlink control information, the first communication node, is provided with the same first time unit as the second communication node. The first time unit in this embodiment has a structure generally including the downlink control domain and a data domain. There is a preset length of resources between a start position of the downlink control domain and a start position of the first time unit. The downlink control domain includes N second time units, each of which includes *N_{c,sym}* symbols; and The data domain includes M third time units, each of which includes *N_{d,sym}* symbols, where N, M, *N_{c,sym}* and *N_{d,sym}* are all positive integers. The preset length of resources may generally be 0, that is, the start position of the first time unit is the start position of the downlink control domain. In addition, the preset length of resources may also be greater than 0. In this embodiment, a total number of symbols included in the downlink control domain of the first time unit may be an integer multiple of a number of symbols included in each third time unit and be expressed as *N * N_{c,sym} = K * N_{d,sym}*, where K is a positive integer. In an implementation of this embodiment, the first time unit may have one or more of: a first structure of the first time unit including the downlink control domain and a downlink data domain (the data domain is the downlink data domain), a second structure of the first time unit including the downlink control domain, the downlink data domain, a protection domain and an uplink data domain (the data domain includes the downlink data domain and the uplink data domain) and a third structure of the first time unit including the downlink control domain, the protection domain and the uplink data domain (the data domain is the uplink data domain). The first structure to the third structure of the first time unit may also be referred to the structures shown in FIG. 2 to FIG. 5 in the above embodiments; the structure and the number of symbols in each time unit are the same as those in the above embodiments, which are not repeated herein.

The above N, M, *N_{c,sym}*, *N_{d,sym}* and *N_{du,sym}* are fixed values agreed by the first communication node and the second communication node. In this embodiment, the fixed values agreed by the transmitting and receiving ends may also be obtained in one or more of the following manners: the values may be preset in the first communication node and the second communication node; the values may also be notified by a broadcast message sent by the first communication node; the values may also be implicitly notified by a system parameter sent by the first communication node. For example, the system parameter is a system bandwidth, and different system bandwidths correspond to different values of N, M, *N_{c,sym}*, *N_{d,sym}* and *N_{du,sym}.* A correspondence between the system bandwidth and the values is also agreed by the first communication node and the second communication node. In addition, the symbols may also be an OFDM symbol or a single carrier symbol. If the symbols are all OFDM symbols, a subcarrier spacing of the downlink control domain may be the same as or different from a subcarrier spacing of the data domain. The subcarrier spacings may also be pre-agreed by the first communication node and the second communication node.

In this embodiment, which one of the structures in FIG. 2 to FIG. 5 the first time unit has may be notified in the following manners: the detection module 21 is further configured to determine that the first time unit has one of the first structure to the third structure according to the downlink control information in the downlink control domain of the first time unit; or the detection module 21 is further configured to determine that the first time unit has one of the first structure to the third structure according to an index of the first time unit; or the receiving module 23 is further configured to receive structure indication signaling sent by the first communication node or a third communication node before the detection module 21 detects the downlink control information in the first time unit and the detection module 21 is further configured to determine that the first time unit has one of the first structure to the third structure according to the structure indication signaling. The third communication node is another transmitting end other than the first communication node, and may be, for example, a low-frequency base station. Furthermore, when the first time unit has the second structure shown in FIG. 3, the numbers of time units included in the uplink data domain and the downlink data domain may be fixed, or may be notified via the downlink control information in the current first time unit. A length of the GP may be a fixed value agreed by the first communication node and the second communication node, and the fixed value is indicated in the same manners as the above fixed value, which are not repeated herein. The GP is generally between the downlink data domain and the uplink data domain.

The transmission module 20 is connected to the detection module 21 and is configured to perform transmission of data with the first communication node according to the downlink control information detected by the detection module 21. The data is at least one of downlink data and uplink data.

In this embodiment, after the detection module 21 of the second communication node detects the downlink control channel in the first time unit, the first communication node and the second communication node learn the same scheduling manner, and thus the second communication node may perform data transmission according to the received downlink control information, including receiving the downlink data sent by the first communication node by the receiving module 23 or/and sending the uplink data to the first communication node by the sending module 22. When the second communication node determines that the first time unit has one of the first structure to the third structure, the second communication node receives the downlink data in the downlink data domain, or/and sends the uplink data in the uplink data domain according to the downlink control information. In addition, the downlink control domain of the first time unit indicates the downlink control information for multiple scheduled second communication nodes; if some second communication node does not detect the downlink control information, this second communication node does not need to perform the data transmission.

The first communication node in the embodiments of the present invention may be a communication entity on a network side, or may be different communication examples on the network side. For example, the downlink control information is sent by a macro base station, and the downlink data is sent or/and the uplink data is received by a micro base station. In addition, in the embodiments of the present invention, the different downlink control information sent by the first communication node occupies a same number of or different numbers of second time units.

The information transmission device according to the embodiments of the present invention is used for executing the information transmission method according to the embodiment illustrated in FIG. 23 and thus has corresponding functional modules, having similar principles of implementation and technical results which will not be repeated here.

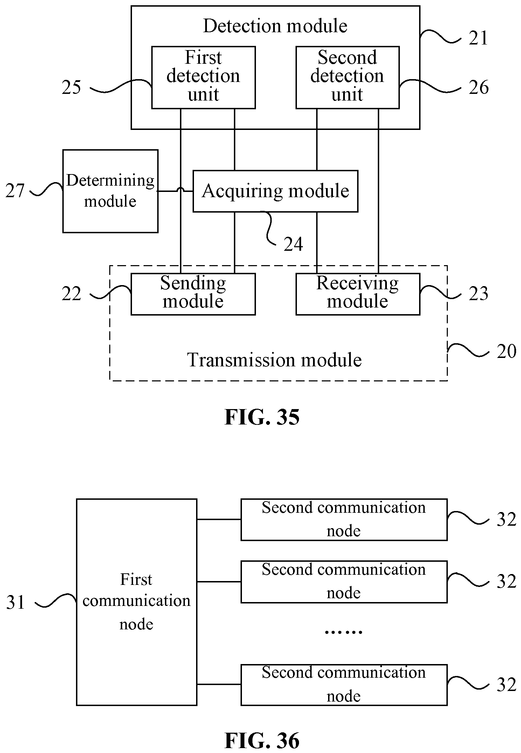

FIG. 35 is a structural diagram of another information transmission device according to an embodiment of the present invention. On the basis of the above embodiments, in the first time units shown in FIG. 2 to FIG. 5, each second time unit in the downlink control domain includes one or more control channel resources, and each control channel resource carries a demodulation reference signal for demodulating the downlink control information in the each control channel resource. The demodulation reference signal in this embodiment is only used for demodulating the downlink control information in the each control channel resource, and generally cannot demodulate the downlink control information in another control channel resource. In addition, in this embodiment, the detection space of the second communication node may include a common detection space and a dedicated detection space. The device in this embodiment further includes an acquiring module 24 connected to the detection module 21. The acquiring module 24 is configured to acquire, according to a sending mode of the first communication node corresponding to the second communication node, a preset rule, and a correspondence between the control channel resource and the sending mode of the first communication node, a set of common control channel resources where the common detection space is located and a set of dedicated control channel resources where the dedicated detection space is located before the detection module 21 detects the downlink control information in the detection space.

Accordingly, the detection module 21 in this embodiment includes a first detection unit 25 and a second detection unit 26 which are respectively connected to the acquiring module 24. The first detection unit 25 is configured to detect dedicated downlink control information in the dedicated detection space of the second communication node in each dedicated control channel resource in the acquired set of dedicated control channel resources according to the set of dedicated control channel resources acquired by the acquiring module 24, a correspondence between the control channel resource and the second time units and a time-frequency resource occupied by each dedicated control channel resource in the set of dedicated control channel resources in the second time units. The second detection unit 26 is configured to detect common downlink control information in the common detection space of the second communication node in each common control channel resource in the acquired set of common control channel resources according to the set of common control channel resources acquired by the acquiring module 24, the correspondence between the control channel resource and the second time units and a time-frequency resource occupied by each common control channel resource in the set of common control channel resources in the second time units.

The embodiments of the present invention do not limit an execution order of the first detection unit 25 and the second detection unit. The first detection unit 25 and the second detection unit may perform execution in sequence or in parallel. In addition, because some first time units only have the dedicated downlink control information and some first time units only have the common downlink control information, only one of the first detection unit 25 and the second detection unit may perform the operation of detecting the downlink control information.

In the embodiments of the present invention, the control channel resources in each second time unit may satisfy one or more of the characteristics described below.
1. Each control channel resource includes one or more physical resource blocks (PRBs) in frequency domain.
2. Each control channel resource is a control subband.
3. Each control channel resource is a set of control resource units.
4. Each control channel resource is one or more control channel search spaces.
5. Each control channel resource is one or more candidate control channels.
6. Each control channel resource is a search space of one second communication node.

In the embodiments of the present invention, the detection module 21 may be further configured to perform one or more of the operations described below.

A set of control channel resources where the second communication node is located is determined according to the sending mode corresponding to the second communication node.

A set of second time units is determined according to the sending mode corresponding to the second communication node and the downlink control information is detected in the determined set of second time units. The sending mode corresponding to the second communication node is a sending mode used by the first communication node for sending in a communication link to the second communication node.

In the embodiments of the present invention, the different downlink control information detected by the detection module 21 and/or received by the receiving module 23 occupies a same number of or different numbers of second time units.

In an implementation of this embodiment, the downlink control information includes the dedicated downlink control information. The acquiring module 24 is further configured to acquire a time-frequency position of the dedicated detection space in the control channel resource. Accordingly, the detection module 21 is configured to detect, according to the time-frequency position of the dedicated detection space in the control channel resource acquired by the acquiring module 24, the dedicated downlink control information sent by the first communication node to the second communication node in the dedicated detection space of the second communication node in the control channel resource. The acquiring module 24 is configured to acquire the time-frequency position of the dedicated detection space in the control channel resource by obtaining the time-frequency position of the dedicated detection space of the second communication node in the control channel resource according to identification information of the second communication node (C-RNTI) and at least one of the index of the first time unit, the index of the control channel resource and the index of the second time unit. One control channel resource is used for sending the downlink control information of one or more second communication nodes. Alternatively, the acquiring module 24 is configured to determine that the dedicated detection space occupies all time-frequency resources of the control channel resource where the dedicated detection space is located.

In this embodiment, a correspondence between the control channel resource and the sending mode may be preset in the first communication node and the second communication node. The correspondence between the control channel resource and the sending mode may be as follows: the control channel resource has a one-to-one correspondence with the sending mode; or each control channel resource corresponds to multiple sending modes and each of the multiple sending modes corresponds to one control channel resource; or each sending mode corresponds to multiple control channel resources. Furthermore, in this embodiment, a correspondence between the control channel resource and the second time units may also be preset in the first communication node and the second communication node. The correspondence between the control channel resource and the second time units is that the control channel resource has a one-to-one correspondence with the second time units. The correspondence may also be that each control channel resource corresponds to multiple second time units, and when one control channel resource is transmitted in the first time unit, the one control channel resource is transmitted in one of the multiple second time units corresponding to the one control channel resource in the first time unit. The correspondence may also be that each control channel resource corresponds to multiple second time units, and when one control channel resource is transmitted in the first time unit, the one control channel resource is transmitted in one or more of the multiple second time units corresponding to the one control channel resource in the first time unit. In this embodiment, the correspondence between the control channel resource and the sending mode and the correspondence between the control channel resource and the second time units are the same as those in the above embodiments, which are not repeated herein.

It has been described above that the correspondence between the control channel resource and the sending mode and the correspondence between the control channel resource and the second time units may be preset in the first communication node and the second communication node. In the first communication node and the second communication node, the correspondences may be notified by one or more of: a system broadcast and high-frequency higher layer signaling, be notified with the assistance of low-frequency signaling, or be notified according to a predetermined rule. In this embodiment, the first communication node and the second communication node agree on the correspondence between the control channel resource and the second time units so that the second communication node only detects the control information in the second time unit where the control channel of the second communication node is located according to an agreed rule, thereby reducing the complexity of detecting the control information. In an implementation of this embodiment, the manner in which the second communication node detects the downlink control information in the detection space is different according to a different correspondence between the control channel resource and the second time units. When the control channel resource has the one-to-one correspondence with the second time units, the detection module 21 is configured to detect one control channel resource in one second time unit corresponding to the one control channel resource. When each control channel resource corresponds to multiple second time units, and when each control channel resource is transmitted in one of the multiple second time units corresponding to the each control channel resource in the first time unit, the detection module 21 is configured to blindly detect a demodulation reference signal of one control channel resource in multiple second time units corresponding to the one control channel resource, acquire one second time unit where the one control channel resource is located, and detect the downlink control information in the detection space of the second communication node corresponding to the one control channel resource in the acquired second time unit. When each control channel resource corresponds to multiple second time units, and when each control channel resource is transmitted in one or more of the multiple second time units corresponding to the each control channel resource in the first time unit, the detection module 21 is configured to blindly detect the demodulation reference signal of one control channel resource in multiple second time units corresponding to the one control channel resource, acquire one or more second time units where the one control channel resource is located, and detect the downlink control information in the detection space of the second communication node corresponding to the one control channel resource in the acquired one or more second time units. In addition, in this embodiment, when each control channel resource in one first time unit corresponds to multiple second time units, a set of the multiple second time units corresponding to the each control channel resource is the N second time units in the downlink control domain of the first time unit, or preset in the first communication node and the second communication node. In another case of this embodiment, the first communication node and the second communication node agree that some control channel resources are not transmitted in some first time units, and the second communication node does not detect these control channel resources in these first time units.

In the embodiments of the present invention, the detection space of any second communication node includes the common detection space and the dedicated detection space. In one case, a set of control channel resources in which the common detection space is located is the same as a set of control channel resources in which the dedicated detection space is located, except that the common downlink control information in the common detection space is of the control channel resource level. In the other case, the set of control channel resources where the common detection space is located includes the set of control channel resources where the dedicated detection space is located. In this embodiment, the set of control channel resources where the common detection space is located and the set of control channel resources where the dedicated detection space is located may be preset in the first communication node and the second communication node.

In the embodiments of the present invention, the case where the control channel resource occupies a time-frequency resource in the second time unit may include two cases. In a first case, multiple control channel resources included in each second time unit occupy all time-frequency resources of the each second time unit in a space division multiplexing manner, and multiple demodulation reference signals corresponding to the multiple control channel resources are at least one of code division multiplexing, frequency division multiplexing and time division multiplexing. In a second case, multiple control channel resources included in each second time unit occupy the time-frequency resources of the each second time unit in a frequency division multiplexing manner, and a frequency domain resource occupied by the control channel resources is obtained according to one or more of the index of the control channel resources, the index of the first time unit and the index of the second time units; and multiple ports of the multiple demodulation reference signals corresponding to the multiple control channel resources are multiplexed in the frequency division multiplexing manner, and a port of the demodulation reference signal corresponding to each control channel resource only occupies time-frequency resources in the frequency domain resource occupied by the each control channel resource. Each control channel resource may include the dedicated detection space of one or more second communication nodes and one or more common control detection spaces at the control channel resource level. In this embodiment, the cases where the control channel resource occupies the time-frequency resource of the second time unit may also be referred to schematic diagrams in FIG. 7 and FIG. 8 in the above embodiments, which are not repeated herein.

In each embodiment described above of the present invention, the number of second time units included in the downlink control domain of each first time unit, that is, the value of N is fixed, and each control channel resource only corresponds to one second time unit. In another embodiment of the present invention, each control channel resource may not be transmitted in only one second time unit, but the first communication node flexibly adjusts the control channel resources according to the downlink control information to be sent currently, so that the value of N is variable in different first time units. That is, the first communication node sends the control channel resources as needed and may flexibly adjust the number of second time units included in the downlink control domain. At this time, it is agreed that if one control channel resource is sent in one first time unit, the one control channel resource only appears in one second time unit of the one first time unit, but the second time unit used for transmitting the one control channel resource is not unique. This may also be referred to table 2 and the examples illustrated in FIG. 11 to FIG. 14. In this embodiment, because the value of N is variable in different first time units, the first communication node may send control channel resources as needed and may flexibly adjust the number of second time units included in the downlink control domain, that is, the sending modes of the downlink control domain may be flexibly adjusted to perform transmission as needed; and the first communication node and the second communication node make some agreements, thereby improving flexibility and reducing the blind detection complexity of the receiving end. The information transmission device according to the embodiments of the present invention is used for executing the information transmission method according to the embodiment illustrated in FIG. 24 and thus has corresponding functional modules, having similar principles of implementation and technical results which will not be repeated here.

On the basis of the embodiment illustrated in FIG. 35, the downlink control information in each control channel resource includes the common downlink control information and the dedicated downlink control information. The acquiring module 24 in this embodiment is connected to the sending module 22 and the receiving module 23 respectively. The acquiring module 24 is configured to acquire a set of dedicated third time units occupied by the downlink data or/and uplink data in the data domain before the receiving module 23 receives the downlink data or/and the sending module 22 sends the uplink data.

In this embodiment, the second communication node acquires the set of dedicated third time units in one or more of the following manners: in a manner 1, the acquiring module 24 is configured to obtain a set of third time units of the control channel resource according to the common downlink control information of the control channel resource where the second communication node is located, obtain an index of data of the second communication node in the set of third time units of the control channel resource according to the dedicated downlink control information of the control channel resource, and determine the set of dedicated third time units according to the obtained index. In a manner 2, the acquiring module 24 is configured to obtain the set of third time units of the control channel resource according to the common downlink control information of the control channel resource where the second communication node is located and determine the set of third time units of the control channel resource to be the set of dedicated third time units. That is, the first communication node and the second communication node agree that the set of dedicated third time units is the same as the set of third time units of the control channel resource. In a manner 3, the acquiring module 24 is configured to obtain the set of dedicated third time units according to the dedicated downlink control information of the control channel resource where the second communication node is located.

The set of third time units of the control channel resource in the above manners may also notify the second time unit of the set of third time units based on the common downlink control information at the second time unit level, and at this time, it is implicit that the division of sending mode groups for the control domain is basically the same as the division of sending mode groups for the data domain. Indexes of the third time units included in the set of dedicated third time units or the set of third time units of the control channel resource or the common downlink control information at the second time unit level may be discrete or continuous. When the indexes are continuous, it is only necessary to notify the start position and the numbers of third time units included in the sets. The first communication node and the second communication node agree that when the first time unit has the first structure or the second structure shown in FIG. 2 or FIG. 3 or FIG. 4, the set of third time units occupied in the downlink data domain indicated by the downlink control information corresponding to all control channel resources included in the last second time unit in the downlink control domain, the (N-1)-th second time unit, has a start position agreed to be the third time unit with the index 0, which may also be referred to the first time unit in FIG. 27.

In this embodiment, the data of the second communication node occupies a frequency domain resource of each third time unit in the set of dedicated third time units in the following manners: In a first manner, when the data of the second communication node occupies the same frequency domain resource in all the third time units in the set of dedicated third time units, the acquiring module 24 is further configured to acquire first frequency domain information according to the downlink control information corresponding to the data after acquiring the set of dedicated third time units. The device provided by this embodiment further includes a determining module 27 connected to the acquiring module 24. The determining module 27 is configured to determine the frequency domain resource occupied by the data in each third time unit in the set of dedicated third time units according to the first frequency domain information acquired by the acquiring module 24.

In a second manner, when the data of the second communication node occupies different frequency domain resources and the same bandwidth in each third time unit in the set of dedicated third time units, the acquiring module 24 is further configured to acquire second frequency domain information according to the downlink control information corresponding to the data after acquiring the set of dedicated third time units. The second frequency domain information indicates a frequency domain resource occupied by the data in a third time unit with a minimum index value in the set of dedicated third time units. Accordingly, the determining module 27 is further configured to calculate a frequency domain resource occupied by the data in other third time units in the set of dedicated third time units according to a preset frequency hopping rule.

In a third manner, when the data of the second communication node occupies different frequency domain resources and different bandwidths in each third time unit in the set of dedicated third time units, the acquiring module 24 is further configured to acquire the frequency domain resource occupied by the data in each third time unit in the set of dedicated third time units according to the downlink control information corresponding to the data after acquiring the set of dedicated third time units. Accordingly, the determining module 27 is further configured to determine a time-frequency resource occupied by the data in each third time unit.

In a fourth manner, the data of the second communication node occupies all time-frequency resources in each third time unit in the set of dedicated third time units other than time-frequency resources occupied by the demodulation reference signals.

Furthermore, in this embodiment, the second communication node receives the downlink data or/and sends the uplink data according to the detected downlink control information, that is, the receiving module 23 and the sending module 22 are configured to receive the downlink data or/and send the uplink data according to the set of dedicated third time units obtained by the acquiring module 24 and the frequency domain resource in each third time unit in the set of dedicated third time units.

In has been described in the above embodiments that each control channel resource has the common downlink control information, and the common downlink control information indicates a set of indexes of the third time units occupied, in the downlink data domain, by a downlink data signal indicated by all downlink control information included in the each control channel resource. The common downlink control information of each control channel resource occupies a time-frequency resource in the second time unit where the each control channel resource is located, or the common downlink control information of each control channel resource occupies a time-frequency resource on a first symbol in the second time unit where the each control channel resource is located.

In yet another embodiment of the present invention, when the first time unit has the first structure or the second structure in the above embodiments, a first symbol corresponding to each control channel resource in each second time unit includes a physical control format indicator channel (PCFICH) used for indicating a total number *N_{control,total}* of symbols occupied by the each control channel resource. When *N_{control,total} > N_{c,sym}*, *N_{control,total}* - *N_{c,sym}* symbols occupy a first symbol to an *N_{control,total}* - *N_{c,sym}* -th symbol in one or more third time units with the minimum index value in the set of third time units occupied, in the downlink data domain, by the downlink data signal indicated by the common downlink control information in the each control channel resource and the PCFICH only occupies the time-frequency resource in the first symbol in the second time unit where the each control channel resource is located. In this case, the first communication node and the second communication node agree that *N_{control,total} > N_{c,sym}.*

In this embodiment, the third communication node may be a low-frequency LTE base station and the first communication node is a high-frequency base station. A 1 ms subframe of the third communication node corresponds to one first time unit of the first communication node. Similarly, as shown in FIG. 17, there is a fixed deviation between a start position of the low-frequency 1 ms subframe and a start position of the high-frequency first time unit and the fixed deviation may include a longest duration occupied by a low-frequency control channel and conversion time between a time at which the second communication node receives low-frequency indication information and a time at which the second communication node receives high-frequency information. Each low-frequency 1 ms subframe notifies the number of second time units included in the downlink control domain of the high-frequency first time unit and the control channel resource sent in each second time unit.

In yet another embodiment of the present invention, there is no deviation between the start position of the low-frequency subframe and the start position of the high-frequency first time unit. Similarly, as shown in FIG. 18, the length of resources between the start position of the downlink control domain in the first time unit of the high-frequency subframe and the start position of the first time unit is greater than 0 and the part of the first time unit in this length of resources is referred to as a special domain. Because the high-frequency downlink control domain is received according to an indication of the low-frequency control domain and the second communication node does not know the high-frequency downlink control information in the special domain, the second communication node cannot discard or receive the data in the special domain according to the indication of the downlink control information. A processing manner for the special domain is that the second communication node first receives the data in the special domain and determines whether to continue demodulating or abandon the data in the special domain according to the indication in the downlink control domain, and the first communication node schedules the special domain as a normal resource scheduling domain in the downlink control information. The other processing manner is that the sending module 22 and the receiving module 23 are further configured to perform, in the resources between the start position of the first time unit and the start position of the downlink control domain, one or more of the following operations: sending or/and receiving a beam training signal and a feedback signal; sending HARQ information corresponding to the downlink data before the first time unit; and detecting a PRACH signal.

In another implementation of this embodiment, one low-frequency subframe may also be referred to as a fourth time unit. In this embodiment, the duration of the fourth time unit is not necessarily required to be equal to the duration of the first time unit as long as it is satisfied that a length of K1 fourth time units is equal to a length of K2 first time units, *K*1*T_{*S*1} = *K*2 * T_{*S*2}, where K1 and K2 both are a positive integer, T_{*S*1} is a length of resources in one fourth time unit generally equal to 1 ms, T_{*S*2} is a length of resources in one first time unit. At this time, relevant control information to the K2 first time units is transmitted in the fourth time unit with an index equal to a multiple of K1. Accordingly, the detection module 21 in this embodiment is further configured to detect the downlink control information sent by the third communication node in every K1 fourth time units before detecting the downlink control information sent by the first communication node in the first time unit. Moreover, the acquiring module 24 in this embodiment is configured to obtain, according to the detected downlink control information, one or more of the following information about the K2 first time units: a number of second time units included in each first time unit, an index of the control channel resource sent in each second time unit and each first time unit having one of the first structure, the second structure and the third structure. That is to say, the downlink control information in the fourth time unit not only indicates the value of N in the first time unit and indexes of the control channel resources sent in each second time unit, but also indicates each first time unit has which one of the structures in FIG. 2 to FIG. 4 or which one of the structures in FIG. 2, FIG. 3 and FIG. 5.

The information transmission device according to the embodiments of the present invention is used for executing the information transmission method according to the embodiment illustrated in FIG. 25 and thus has corresponding functional modules, having similar principles of implementation and technical results which will not be repeated here.

The sending mode in the above embodiments of the present invention is one or more of a sending beam, a sending port and a sending precoding matrix used by the first communication node. In the structures of the first time unit shown in FIG. 2 to FIG. 5 in each embodiment of the present invention, M is greater than 1, but a case where M is equal to 1 is not excluded in the embodiments of the present invention.

In the above embodiments of the present invention, the information on the set of indexes of the third time units may be notified by signaling information. In one implementation, the signaling information may be carried in the downlink control information. In another implementation, the receiving module 23 in the embodiments of the present invention is further configured to receive the signaling information sent by the first communication node.

In the above embodiments of the present invention, the control channel resource where the second communication node is located is a subset of a first set of control channel resources. The first set of control channel resources includes all control channel resources in the first time unit, or the first set of control channel resources includes one control channel resource in the first time unit or all control channel resources in the second time unit.

In the above embodiments of the present invention, the detection module 21 detects the downlink control information sent by the first communication node in the following implementation manners:
The detection module 21 detects first downlink control information in the set of second time units and detects second downlink control information in the set of third time units.

Alternatively, the detection module 21 detects the first downlink control information in the set of second time units; and when the detection module 21 detects the first downlink control information, the detection module 21 detects the second downlink control information in each third time unit in the set of third time units.

In the above embodiments of the present invention, the set of third time units satisfies at least one of the characteristics described below.

The set of third time units is determined according to related information notified by the first downlink control information.

The set of third time units is a subset of the set consisting of all the third time units in the first time unit. The set of third time units may also consist of the third time units in the first time unit, that is, the subset may be the subset itself.

The set of third time units is notified by signaling information before the first time unit.

In the above embodiments of the present invention, a frequency domain resource occupied by data information and/or control information of the second communication node in different third time units satisfies one of the characteristics described below.

The data information and/or the control information occupy a same frequency domain resource in different third time units.

The data information and/or the control information occupy different frequency domain resource positions and occupy a same length of frequency domain resources satisfying a preset frequency hopping rule in different third time units.

The data information and/or the control information occupy different frequency domain resource positions and different lengths of frequency domain resources in different third time units.

The data information and/or the control information occupy all the frequency domain resources in different third time units.

The above control information includes the downlink control information or the uplink control information, and different third time units belong to the same first time unit or different first time units. In addition, a frequency domain bandwidth corresponding to all the frequency domain resources is a maximum frequency domain bandwidth (such as a system bandwidth) by which the second communication node receives the signal sent by the first communication node in the current time unit, or a system bandwidth allocated to the second communication node.

In the above embodiments of the present invention, the downlink control information is used for notifying the frequency domain resources occupied, in different third time units, by the data information and/or the control information of the second communication node in one of the following manners:
Merely one piece of frequency domain resource information is notified for one set of third time units, and it is agreed by the first communication node and the second communication node that the data information and/or the control information occupies a same frequency domain resource in each third time unit in the set of third time units.

Merely one piece of frequency domain resource information is notified for one set of third time units, and it is agreed by the first communication node and the second communication node that the data information and/or the control information occupies the frequency domain resource satisfying a preset frequency hopping rule in each third time unit in the set of third time units. The frequency domain resource occupied by the data information and/or the control information is notified to each third time unit in one set of third time units.

In the above embodiments of the present invention, the control channel resource where the second communication node is located corresponds to different control channel resource groups and the number of second time units to be detected by the second communication node is different. The control channel resource belongs to the control channel resource group and the control channel resource group includes one or more control channel resources.

In the above embodiments of the present invention, each third time unit includes a demodulation reference signal.

The acquiring module 24 may be further configured to determine resource information of the demodulation reference signal according to a number of third time units allocated to the second communication node in a current first time unit.

The device may further include a dividing module. The dividing module is configured to divide the third time units allocated to the second communication node in the current first time unit into N_sub subtime units. Each of the subtime units has the demodulation reference signal and N_sub is a natural number.

The determining module 27 is further configured to determine the following correspondences in one or more of the following manners:
The correspondence between the control channel resource and the sending mode is notifies via the signaling information.

A correspondence between the control channel resource and a receiving mode is notified via the signaling information.

The correspondence between the control channel resource and the second time units is notified via the signaling information.

The correspondence between the control channel resource and the sending mode is determined via the predetermined rule.

The correspondence between the control channel resource and the receiving mode is determined via the predetermined rule.

The correspondence between the control channel resource and the second time units is determined via an agreed rule.

The determining module 27 is further configured to determine information on the following sets in one or more of the following manners:
Information on a set of sending modes corresponding to the dedicated control channel resource is notified via the signaling information.

Information on a set of sending modes corresponding to the common control channel resource is notified via the signaling information. The set of sending modes corresponding to the dedicated control channel resource is a subset of the set of sending modes corresponding to the common control channel resource.

Information on a set of receiving modes corresponding to the dedicated control channel resource is notified via the signaling information.

Information on a set of receiving modes corresponding to the common control channel resource is notified via the signaling information.

The set of receiving modes corresponding to the dedicated control channel resource is a subset of the set of receiving modes corresponding to the common control channel resource.

The control channel resource is located in the downlink control domain.

In an implementation, the sending module 22 and the receiving module 23 in the embodiments illustrated in FIG. 34 and FIG. 35 may be implemented by a transceiver of the second communication node. The detection module 21, the acquiring module 24, and the first detection unit 25 and the second detection unit 26 in the detection module 21 may be implemented by a processor of the second communication node, and the processor may be, for example, a CPU, or an ASIC, or one or more integrated circuits used for implementing the embodiments of the present invention.

In the present application, the first time unit may be a subframe or a slot; and the second time unit and the third time unit may be one or more OFDM symbols. Alternatively, the second time unit and the third time unit may be one or more subframes, or one or more slots. The first time unit includes the N second time units and the M third time units. In the present application, the first time unit, the second time unit and the third time unit may also be other implementations, which are not limited in the present application.

FIG. 36 is a structural diagram of an information transmission system according to an embodiment of the present invention. The information transmission system in this embodiment is suitable for channel transmission in a high-frequency communication system. The information transmission system includes a first communication node 31 and one or more second communication nodes 32 connected to the first communication node 31. The first communication node 31 is provided with the information transmission device in each of the embodiments illustrated in FIG. 32 and FIG. 33. Each second communication node 32 is provided with the information transmission device in each of the embodiments illustrated in FIG. 34 and FIG. 35. In addition, in the information transmission system in this embodiment, each network element implements information transmission in the same manner as the corresponding network elements in the embodiments illustrated in FIG. 32 to FIG. 35, and in the same way executes the information transmission method according to any one of the embodiments illustrated in FIG. 1 to FIG. 31, and thus has corresponding functional modules, having similar principles of implementation and technical results which will not be repeated here.

Embodiments of the present invention further provide a computer-readable storage medium configured to store computer-executable instructions for executing the information transmission methods described above when executed by a processor.

It is understood by those skill in the art that all or part of the steps in the methods described above may be implemented by related hardware (e.g., a processor) instructed by one or more programs, and these programs may be stored in a computer-readable storage medium such as a read-only memory, a magnetic disk, an optical disk. All or part of the steps in the embodiments described above may also be implemented by using one or more integrated circuits. Accordingly, the modules/units in the embodiments described above may be implemented by hardware. For example, the functions of these modules/units may be implemented by integrated circuits. Alternatively, these modules/units may be implemented by software function modules. For example, the functions of these modules/units may be implemented by using a processor to execute program/instructions stored in a memory. Embodiments of the present invention are not limited to any specific combination of hardware and software.

Although the embodiments disclosed by the present application are as described above, the content thereof is merely embodiments for facilitating the understanding of the present application and is not intended to limit the present application. Any person skilled in the art to which the present application pertains may make any modifications and variations in the implementation forms and details without departing from the scope of the appended claims The invention is defined by the appended claims.

### INDUSTRIAL APPLICABILITY

In the embodiments of the present invention, the structures of the first time unit are used so that the downlink control information may be sent in a plurality of second time units in the first time unit to send downlink control channels of different directions or direction groups, increasing the length of the data domain. Additionally, because the first time unit includes M third time units, the length of the time unit in which the second communication node detects control channels is increased, thereby reducing blind detection complexity of the second communication node to a reasonable degree. That is, the information transmission mechanism in the high-frequency communications is properly designed in the embodiments, avoiding the case in the high-frequency cellular communications that all downlink beams cannot be transmitted simultaneously on the same symbol in the hybrid beam transmission mode and the detection complexity of the receiving end is high due to the limited number of radio frequency links.

## Claims

1. An information transmission method, comprising determining, by a first communication node, a sending mode corresponding to a control channel resource;
determining, by the first communication node, a set of second time units corresponding to the control channel resource according to a correspondence between the control channel resource and second time units;
sending (S110), by the first communication node, downlink control information in the control channel resource by using the sending mode corresponding to the control channel resource to a second communication node within the set of second time units of a downlink control domain of a first time unit, wherein each control channel resource in the first time unit corresponds to multiple of the second time units of the first time unit; and
preforming (S120), by the first communication node, transmission of data with the second communication node according to the downlink control information, wherein the data is at least one of downlink data and uplink data; the first time unit comprises the downlink control domain and a data domain, and there is a preset length of resources between a start position of the first time unit and a start position of the downlink control domain;
wherein the downlink control domain comprises N second time units, each of the second time units comprising *N_{c,sym}* symbols; and the data domain comprises M third time units, each of the third time units comprising *N_{d,sym}* symbols, wherein N, M, *N_{c,sym}* and *N_{d,sym}* are all positive integers;
wherein a correspondence between the control channel resource and the sending mode, and the correspondence between the control channel resource and the second time units are preset at the first communication node and the second communication node;
wherein the sending mode is a sending beam and a sending port used by the first communication node.

2. The information transmission method of claim 1, wherein each of the second time units comprises at least one control channel resource and each of the at least one control channel resource carries a demodulation reference signal used for demodulating the downlink control information in the each of the at least one control channel resource.

3. The information transmission method of claim 1, further comprising sending a higher layer signaling, wherein the higher layer signaling comprises at least one of:
the correspondence between the control channel resource and the sending mode; or
the correspondence between the control channel resource and the second time units.

4. An information transmission method, comprising
determining, by the second communication node, a sending mode corresponding to a control channel resource;
determining, by the second communication node, a set of second time units corresponding to the control channel resource according to a correspondence between the control channel resource and second time units;
detecting (S210), by the second communication node, downlink control information sent by a first communication node in a detection space in the control channel resource within the set of second time units of a downlink control domain of a first time unit according to the sending mode, wherein each control channel resource in the first time unit corresponds to multiple of the second time units of the first time unit; and
performing (S220), by the second communication node, transmission of data with the first communication node according to the detected downlink control information, wherein the data is at least one of downlink data and uplink data;
wherein the first time unit comprises a downlink control domain and a data domain, and there is a preset length of resources between a start position of the downlink control domain and a start position of the first time unit; and
wherein the downlink control domain comprises N second time units, each of the second time units comprising *N_{c,sym}* symbols; and the data domain comprises M third time units, each of the third time units comprising *N_{d,sym}* symbols; wherein N, M, *N_{c,sym}* and *N_{d,sym}* are all positive integers;
wherein a correspondence between the control channel resource and the sending mode, and the correspondence between the control channel resource and the second time units are preset at the first communication node and the second communication node;
wherein the sending mode is a sending beam and a sending port used by the first communication node.

5. The information transmission method of claim 4, wherein each of the second time units comprises at least one control channel resource and each of the at least one control channel resource carries a demodulation reference signal used for demodulating the downlink control information in the each of the at least one control channel resource.

6. The information transmission method of claim 5, wherein the demodulation reference signal of each of the at least one control channel resource carries index information of the each of the at least one control channel resource.

7. The information transmission method of claim 4, wherein the detection space comprises a common detection space and a dedicated detection space, and before the second communication node detects the downlink control information in the detection space, the method further comprises:
acquiring, by the second communication node, a set of common control channel resources where the common detection space is located and a set of dedicated control channel resources where the dedicated detection space is located, according to a sending mode of the first communication node corresponding to the second communication node, a preset rule, and a correspondence between the at least one control channel resource and the sending mode of the first communication node.

8. The information transmission method of claim 4, wherein the downlink control information comprises dedicated downlink control information, and wherein detecting, by the second communication node, the dedicated downlink control information comprises:
obtaining, by the second communication node, the time-frequency position of a dedicated detection space of the second communication node in the control channel resource according to identification information of the second communication node and at least one of an index of the first time unit, an index of the control channel resource.

9. The information transmission method of claim 5, wherein *N_{c,sym}* is acquired in one of the following manners:
a broadcast message; or
a system parameter.

10. The information transmission method of claim 4, further comprising at least one of the following characteristics:
the following information is notified in the downlink control information in the current first time unit: the number of third time units included in the uplink transmission domain in the current first time unit and the number of third time units included in the downlink transmission domain in the current first time unit; or
the downlink control information is used for determining information about a subcarrier spacing of the third time units.

11. The information transmission method of claim 5, wherein the downlink control information has one of the following characteristics:
one piece of downlink control information is transmitted on one control channel resource;
one piece of downlink control information is repeatedly transmitted on more than one control channel resource;
one piece of downlink control information is jointly transmitted on more than one control channel resource; or
different downlink control information is transmitted on different downlink control resources corresponding to the second communication node.

12. The information transmission method of claim 4, further comprising one of the following characteristics:
resource information of the demodulation reference signal is determined according to a number of third time units allocated to the second communication node in a current first time unit; or
the third time units allocated to the second communication node in the current first time unit are divided into N_sub subtime units; wherein each of the subtime units has the demodulation reference signal and N_sub is a natural number.

13. The information transmission method of claim 4, wherein the sending mode corresponding to the control channel resource is determined in one of the following manners:
system broadcast; or
higher layer signaling; and
wherein determining the second time units corresponding to the control channel resource
is in one of the following manners:
system broadcast;
higher layer signaling; or
predetermined rule.

14. The information transmission method of claim 4, wherein the second communication node determines a set of the control channel resources where a common detection space is located and a set of the control channel resources where a dedicated detection space is located.

15. An information transmission device, disposed in a second communication node, wherein the device comprises:
a detection module (21), which is configured to determine a sending mode corresponding to a control channel resource, a set of second time units corresponding to the control channel resource according to a correspondence between the control channel resource and second time units, and detect downlink control information sent by a first communication node in a detection space in the control channel resource within the set of second time units of a downlink control domain of a first time unit according to the sending mode, wherein each control channel resource in the first time unit corresponds to multiple of the second time units of the first time unit; and
a transmission module (20) connected to the detection module (21); wherein the transmission module (20) comprises at least one of a sending module (22) and a receiving module (23) and the transmission module (20) is configured to perform transmission of data with the first communication node according to the downlink control information detected by the detection module, wherein the data is at least one of downlink data and uplink data; and
the first time unit comprises the downlink control domain and a data domain, and there is a preset length of resources between a start position of the downlink control domain and a start position of the first time unit; and
wherein the downlink control domain comprises N second time units, each of the second time units comprising *N_{c,sym}* symbols; and the data domain comprises M third time units, each of the third time units comprising *N_{d,sym}* symbols; wherein N, M, *N_{c,sym}* and *N_{d,sym}* are all positive integers;
wherein a correspondence between the control channel resource and the sending mode, and the correspondence between the control channel resource and the second time units are preset at the first communication node and the second communication node;
wherein the sending mode is a sending beam and a sending port used by the first communication node.

## Patentansprüche

1. Ein Informationsübertragungsverfahren, umfassend:
Bestimmen, durch einen ersten Kommunikationsknoten, eines Sendemodus, der einer Steuerkanalressource entspricht;
Bestimmen, durch den ersten Kommunikationsknoten, eines Satzes von zweiten Zeiteinheiten, die der Steuerkanalressource entsprechen, gemäß einer Korrespondenz zwischen der Steuerkanalressource und zweiten Zeiteinheiten;
Senden (S110), durch den ersten Kommunikationsknoten, von Downlink-Steuerinformationen in der Steuerkanalressource unter Verwendung des Sendemodus, der der Steuerkanalressource entspricht, an einen zweiten Kommunikationsknoten innerhalb des Satzes von zweiten Zeiteinheiten einer Downlink-Steuerdomäne einer ersten Zeiteinheit, wobei jede Steuerkanalressource in der ersten Zeiteinheit einem Vielfachen der zweiten Zeiteinheiten der ersten Zeiteinheit entspricht; und
Vorformen (S120), durch den ersten Kommunikationsknoten, der Datenübertragung mit dem zweiten Kommunikationsknoten gemäß den Downlink-Steuerinformationen, wobei die Daten Downlink-Daten und/oder Uplink-Daten sind; wobei die erste Zeiteinheit die Downlink-Steuerdomäne und/oder eine Datendomäne umfasst; und
eine vorbestimmte Länge von Ressourcen zwischen einer Startposition der ersten Zeiteinheit und einer Startposition der Downlink-Steuerdomäne vorhanden ist;
wobei die Downlink-Steuerdomäne N zweite Zeiteinheiten umfasst, wobei jede der zweiten Zeiteinheiten *N_{c,sym}* Symbole umfasst; und
die Datendomäne M dritte Zeiteinheiten umfasst, wobei jede der dritten Zeiteinheiten *N_{d,sym}* Symbole umfasst, wobei N, M, *N_{c,sym}* und *N_{d,sym}* alle positive ganze Zahlen sind;
wobei eine Korrespondenz zwischen der Steuerkanalressource und dem Sendemodus und die Korrespondenz zwischen der Steuerkanalressource und den zweiten Zeiteinheiten an dem ersten Kommunikationsknoten und dem zweiten Kommunikationsknoten voreingestellt sind;
wobei der Sendemodus ein Sendestrahl und ein Sendeport ist, der von dem ersten Kommunikationsknoten verwendet wird.

2. Das Verfahren zur Informationsübertragung nach Anspruch 1, wobei jede der zweiten Zeiteinheiten mindestens eine Steuerkanalressource umfasst und jede der mindestens einen Steuerkanalressource ein Demodulations-Referenzsignal trägt, das zum Demodulieren der Downlink-Steuerinformationen in jeder der mindestens einen Steuerkanalressource verwendet wird.

3. Das Verfahren zur Informationsübertragung nach Anspruch 1, ferner umfassend Senden einer Signalisierung auf höherer Ebene, wobei die Signalisierung auf höherer Ebene mindestens eines von Folgendem umfasst:
die Korrespondenz zwischen der Steuerkanalressource und dem Sendemodus; oder
die Korrespondenz zwischen der Steuerkanalressource und den zweiten Zeiteinheiten.

4. Ein Verfahren zur Informationsübertragung, umfassend:
Bestimmen, durch den zweiten Kommunikationsknoten, eines Sendemodus, der einer Steuerkanalressource entspricht;
Bestimmen, durch den zweiten Kommunikationsknoten, eines Satzes von zweiten Zeiteinheiten, die der Steuerkanalressource entsprechen, gemäß einer Korrespondenz zwischen der Steuerkanalressource und zweiten Zeiteinheiten;
Erfassen (S210), durch den zweiten Kommunikationsknoten, von Downlink-Steuerinformationen, die von einem ersten Kommunikationsknoten in einem Erfassungsraum in der Steuerkanalressource innerhalb des Satzes von zweiten Zeiteinheiten einer Downlink-Steuerdomäne einer ersten Zeiteinheit gesendet werden, gemäß dem Sendemodus, wobei jede Steuerkanalressource in der ersten Zeiteinheit einem Vielfachen der zweiten Zeiteinheiten der ersten Zeiteinheit entspricht; und
Durchführen (S220), durch den zweiten Kommunikationsknoten, einer Datenübertragung mit dem ersten Kommunikationsknoten gemäß den erfassten Downlink-Steuerinformationen, wobei die Daten Downlink-Daten und/oder Uplink-Daten sind;
wobei die erste Zeiteinheit eine Downlink-Steuerdomäne und eine Datendomäne umfasst und eine voreingestellte Länge von Ressourcen zwischen einer Startposition der Downlink-Steuerdomäne und einer Startposition der ersten Zeiteinheit vorhanden ist; und
wobei die Downlink-Steuerdomäne N zweite Zeiteinheiten umfasst, wobei jede der zweiten Zeiteinheiten *N_{c,sym}* Symbole umfasst; und
die Datendomäne M dritte Zeiteinheiten umfasst, wobei jede der dritten Zeiteinheiten *N_{d,sym}* Symbole umfasst; wobei N, M, *N_{c,sym}* und *N_{d,sym}* alle positive ganze Zahlen sind;
wobei eine Korrespondenz zwischen der Steuerkanalressource und dem Sendemodus und die Korrespondenz zwischen der Steuerkanalressource und den zweiten Zeiteinheiten an dem ersten Kommunikationsknoten und dem zweiten Kommunikationsknoten voreingestellt sind;
wobei der Sendemodus ein Sendestrahl und ein Sendeport ist, der von dem ersten Kommunikationsknoten verwendet wird.

5. Das Verfahren zur Informationsübertragung nach Anspruch 4, wobei jede der zweiten Zeiteinheiten mindestens eine Steuerkanalressource umfasst und jede der mindestens einen Steuerkanalressource ein Demodulations-Referenzsignal trägt, das zum Demodulieren der Downlink-Steuerinformationen in jeder der mindestens einen Steuerkanalressource verwendet wird.

6. Das Verfahren zur Informationsübertragung nach Anspruch 5, wobei das Demodulations-Referenzsignal von jeder der mindestens einen Steuerkanalressource Indexinformationen von jeder der mindestens einen Steuerkanalressource trägt.

7. Das Verfahren zur Informationsübertragung nach Anspruch 4, wobei der Erfassungsraum einen gemeinsamen Erfassungsraum und einen dedizierten Erfassungsraum umfasst, und bevor der zweite Kommunikationsknoten die Downlink-Steuerinformation in dem Erfassungsraum erfasst, das Verfahren ferner umfassend:
Erfassen, durch den zweiten Kommunikationsknoten, eines Satzes von gemeinsamen Steuerkanalressourcen, wo sich der gemeinsame Erfassungsraum befindet, und eines Satzes von dedizierten Steuerkanalressourcen, wo sich der dedizierte Erfassungsraum befindet, gemäß einem Sendemodus des ersten Kommunikationsknotens, der dem zweiten Kommunikationsknoten entspricht, einer voreingestellten Regel und einer Korrespondenz zwischen der mindestens einen Steuerkanalressource und dem Sendemodus des ersten Kommunikationsknotens.

8. Das Informationsübertragungsverfahren nach Anspruch 4, wobei die Downlink-Steuerinformation eine dedizierte Downlink-Steuerinformation umfasst, und wobei das Erfassen, durch den zweiten Kommunikationsknoten, der dedizierten Downlink-Steuerinformation Folgendes umfasst:
Erlangen, durch den zweiten Kommunikationsknoten, der Zeit-Frequenz-Position eines dedizierten Erfassungsraums des zweiten Kommunikationsknotens in der Steuerkanalressource gemäß Identifikationsinformationen des zweiten Kommunikationsknotens und mindestens einem von einem Index der ersten Zeiteinheit, einem Index der Steuerkanalressource.

9. Informationsübertragungsverfahren nach Anspruch 5, wobei *N_{c,sym}* auf eine der folgenden Weisen gewonnen wird:
eine Broadcast-Nachricht; oder
einen Systemparameter.

10. Das Verfahren zur Informationsübertragung nach Anspruch 4, das ferner mindestens eine der folgenden Merkmale aufweist:
in der aktuellen ersten Zeiteinheit werden die folgenden Informationen in den Downlink-Steuerinformationen mitgeteilt: die Anzahl der dritten Zeiteinheiten, die in der aktuellen ersten Zeiteinheit in der Uplink-Übertragungsdomäne enthalten sind, und die Anzahl der dritten Zeiteinheiten, die in der aktuellen ersten Zeiteinheit in der Downlink-Übertragungsdomäne enthalten sind; oder
die Downlink-Steuerinformationen werden zur Ermittlung einer Information über einen Hilfsträgerabstand der dritten Zeiteinheiten verwendet.

11. Das Informationsübertragungsverfahren nach Anspruch 5, wobei die Downlink-Steuerinformation eine der folgenden Merkmale aufweist:
eine Downlink-Steuerinformation wird auf einer Steuerkanalressource übertragen;
eine Downlink-Steuerinformation wird wiederholt auf mehr als einer Steuerkanalressource übertragen;
eine Downlink-Steuerinformation wird gemeinsam auf mehr als einer Steuerkanalressource übertragen; oder
auf verschiedenen dem zweiten Kommunikationsknoten entsprechenden Downlink-Steuerressourcen werden unterschiedliche Downlink-Steuerinformationen übertragen.

12. Das Informationsübertragungsverfahren nach Anspruch 4, das ferner eine der folgenden Merkmale aufweist:
eine Ressourceninformation des Demodulations-Referenzsignals wird gemäß einer Anzahl von dritten Zeiteinheiten bestimmt, die dem zweiten Kommunikationsknoten in einer aktuellen ersten Zeiteinheit zugeordnet sind; oder
die dem zweiten Kommunikationsknoten in der aktuellen ersten Zeiteinheit zugeordneten dritten Zeiteinheiten sind in N_sub Subzeiteinheiten aufgeteilt; wobei jede der Subzeiteinheiten das Demodulations-Referenzsignal aufweist und N_sub eine natürliche Zahl ist.

13. Das Informationsübertragungsverfahren nach Anspruch 4, wobei der Sendemodus, der der Steuerkanalressource entspricht, auf eine der folgenden Arten bestimmt wird:
System-Broadcast; oder
Signalisierung auf höherer Ebene; und
wobei das Bestimmen der zweiten Zeiteinheiten, die der Steuerkanalressource entsprechen, auf eine der folgenden Weisen erfolgt:
System-Broadcast;
Signalisierung auf höherer Ebene; oder
vorbestimmte Regel.

14. Das Informationsübertragungsverfahren nach Anspruch 4, wobei der zweite Kommunikationsknoten einen Satz der Steuerkanalressourcen bestimmt, wobei sich ein gemeinsamer Erfassungsraum und ein Satz von Steuerkanalressourcen befindet, in denen sich ein eigener Erfassungsraum befindet.

15. Eine Informationsübertragungsvorrichtung, die in einem zweiten Kommunikationsknoten angeordnet ist, wobei die Vorrichtung umfasst:
ein Erfassungsmodul (21), das so konfiguriert ist, dass es einen Sendemodus, der einer Steuerkanalressource entspricht, einen Satz von zweiten Zeiteinheiten, die der Steuerkanalressource entsprechen, gemäß einer Korrespondenz zwischen der Steuerkanalressource und zweiten Zeiteinheiten bestimmt, und Downlink-Steuerinformationen, die von einem ersten Kommunikationsknoten in einem Erfassungsraum in der Steuerkanalressource innerhalb des Satzes von zweiten Zeiteinheiten einer Downlink-Steuerdomäne einer ersten Zeiteinheit gesendet werden, gemäß dem Sendemodus zu erfassen, wobei jede Steuerkanalressource in der ersten Zeiteinheit einem Vielfachen der zweiten Zeiteinheiten der ersten Zeiteinheit entspricht; und
ein Übertragungsmodul (20), das mit dem Erfassungsmodul (21) verbunden ist; wobei das Übertragungsmodul (20) ein Sendemodul (22) und/oder ein Empfangsmodul (23) umfasst und das Übertragungsmodul (20) so konfiguriert ist, dass es eine Datenübertragung mit dem ersten Kommunikationsknoten gemäß der Downlink-Steuerinformation ausführt, die von dem Erfassungsmodul erfasst wird, wobei die Daten Downlink-Daten und/oder Uplink-Daten sind; und
wobei die erste Zeiteinheit die Downlink-Steuerdomäne und eine Datendomäne umfasst und eine voreingestellte Länge von Ressourcen zwischen einer Startposition der Downlink-Steuerdomäne und einer Startposition der ersten Zeiteinheit vorhanden ist; und
wobei die Downlink-Steuerdomäne N zweite Zeiteinheiten umfasst, wobei jede der zweiten Zeiteinheiten *N_{c,sym}* Symbole umfasst; und
die Datendomäne M dritte Zeiteinheiten umfasst, wobei jede der dritten Zeiteinheiten *N_{d,sym}* Symbole umfasst; wobei N, M, *N_{c,sym}* und *N_{d,sym}* alle positive ganze Zahlen sind;
wobei eine Korrespondenz zwischen der Steuerkanalressource und dem Sendemodus und die Korrespondenz zwischen der Steuerkanalressource und den zweiten Zeiteinheiten an dem ersten Kommunikationsknoten und dem zweiten Kommunikationsknoten voreingestellt sind;
wobei der Sendemodus ein Sendestrahl und ein Sendeport ist, der von dem ersten Kommunikationsknoten verwendet wird.

## Revendications

1. Procédé de transmission d'informations, comprenant :
la détermination, par un premier noeud de communication, d'un mode d'envoi correspondant à une ressource de canal de commande ;
la détermination, par le premier noeud de communication, d'un ensemble de deuxièmes unités de temps correspondant à la ressource de canal de commande selon une correspondance entre la ressource de canal de commande et des deuxièmes unités de temps ;
l'envoi (S110), par le premier noeud de communication, d'informations de commande de liaison descendante dans la ressource de canal de commande à l'aide du mode d'envoi correspondant à la ressource de canal de commande à un second noeud de communication dans l'ensemble de deuxièmes unités de temps d'un domaine de commande de liaison descendante d'une première unité de temps, dans lequel chaque ressource de canal de commande dans la première unité de temps correspond à plusieurs des deuxièmes unités de temps de la première unité de temps ; et
la réalisation (S120), par le premier noeud de communication, d'une transmission de données avec le second noeud de communication selon les informations de commande de liaison descendante, dans lequel les données sont au moins l'une de données de liaison descendante et de données de liaison montante ; la première unité de temps comprend le domaine de commande de liaison descendante et un domaine de données, et il existe une longueur prédéfinie de ressources entre une position de départ de la première unité de temps et une position de départ du domaine de commande de liaison descendante ;
dans lequel le domaine de commande de liaison descendante comprend N deuxièmes unités de temps, chacune des deuxièmes unités de temps comprenant *N_{c,sym}* symboles ; et le domaine de données comprend M troisièmes unités de temps, chacune des troisièmes unités de temps comprenant *N_{d,sym},* symboles, où N, M, *N_{c,sym}* et *N_{d,sym}* sont tous des entiers positifs ;
dans lequel une correspondance entre la ressource de canal de commande et le mode d'envoi, et la correspondance entre la ressource de canal de commande et les deuxièmes unités de temps sont prédéfinies au niveau du premier noeud de communication et du second noeud de communication ;
dans lequel le mode d'envoi est un faisceau d'envoi et un port d'envoi utilisé par le premier noeud de communication.

2. Procédé de transmission d'informations selon la revendication 1, dans lequel chacune des secondes unités de temps comprend au moins une ressource de canal de commande et chacune des au moins une ressource de canal de commande transporte un signal de référence de démodulation utilisé pour démoduler les informations de commande de liaison descendante dans chacune des au moins une ressource de canal de commande.

3. Procédé de transmission d'informations selon la revendication 1, comprenant également l'envoi d'une signalisation de couche supérieure, dans lequel la signalisation de couche supérieure comprend au moins l'une de :
la correspondance entre la ressource de canal de commande et le mode d'envoi ; ou
la correspondance entre la ressource de canal de commande et les deuxièmes unités de temps.

4. Procédé de transmission d'informations, comprenant :
la détermination, par le second noeud de communication, d'un mode d'envoi correspondant à une ressource de canal de commande ;
la détermination, par le second noeud de communication, d'un ensemble de deuxièmes unités de temps correspondant à la ressource de canal de commande selon une correspondance entre la ressource de canal de commande et des deuxièmes unités de temps ;
la détection (S210), par le second noeud de communication, d'informations de commande de liaison descendante envoyées par un premier noeud de communication dans un espace de détection dans la ressource de canal de commande dans l'ensemble de deuxièmes unités de temps d'un domaine de commande de liaison descendante d'une première unité de temps selon le mode d'envoi, dans lequel chaque ressource de canal de commande dans la première unité de temps correspond à plusieurs des deuxièmes unités de temps de la première unité de temps ; et
la réalisation (S220), par le second noeud de communication, d'une transmission de données avec le premier noeud de communication selon les informations de commande de liaison descendante détectées, dans lequel les données sont au moins l'une de données de liaison descendante et de données de liaison montante ;
dans lequel la première unité de temps comprend un domaine de commande de liaison descendante et un domaine de données, et il existe une longueur prédéfinie de ressources entre une position de départ du domaine de commande de liaison descendante et une position de départ de la première unité de temps ; et
dans lequel le domaine de commande de liaison descendante comprend N deuxièmes unités de temps, chacune des deuxièmes unités de temps comprenant *N_{c,sym}* symboles ; et le domaine de données comprend M troisièmes unités de temps, chacune des troisièmes unités de temps comprenant *N_{d,sym},* symboles, où N, M, *N_{c,sym}* et *N_{d,sym}* sont tous des entiers positifs ;
dans lequel une correspondance entre la ressource de canal de commande et le mode d'envoi, et la correspondance entre la ressource de canal de commande et les deuxièmes unités de temps sont prédéfinies au niveau du premier noeud de communication et du second noeud de communication ;
dans lequel le mode d'envoi est un faisceau d'envoi et un port d'envoi utilisé par le premier noeud de communication.

5. Procédé de transmission d'informations selon la revendication 4, dans lequel chacune des secondes unités de temps comprend au moins une ressource de canal de commande et chacune des au moins une ressource de canal de commande transporte un signal de référence de démodulation utilisé pour démoduler les informations de commande de liaison descendante dans chacune des au moins une ressource de canal de commande.

6. Procédé de transmission d'informations selon la revendication 5, dans lequel le signal de référence de démodulation de chacune des au moins une ressource de canal de commande transporte des informations d'indice de chacune des au moins une ressource de canal de commande.

7. Procédé de transmission d'informations selon la revendication 4, dans lequel l'espace de détection comprend un espace de détection commun et un espace de détection dédié, et avant que le second noeud de communication détecte les informations de commande de liaison descendante dans l'espace de détection, le procédé comprend également :
l'acquisition, par le second noeud de communication, d'un ensemble de ressources de canal de commande commun où se trouve l'espace de détection commun et d'un ensemble de ressources de canal de commande dédié où se trouve l'espace de détection dédié, selon un mode d'envoi du premier noeud de communication correspondant au second noeud de communication, à une règle prédéfinie et à une correspondance entre l'au moins un ressource de canal de commande et le mode d'envoi du premier noeud de communication.

8. Procédé de transmission d'informations selon la revendication 4, dans lequel les informations de commande de liaison descendante comprennent des informations de commande de liaison descendante dédiées, et dans lequel la détection, par le second noeud de communication, des informations de commande de liaison descendante dédiées comprend :
l'obtention, par le second noeud de communication, de la position temps-fréquence d'un espace de détection dédié du second noeud de communication dans la ressource de canal de commande selon des informations d'identification du second noeud de communication et au moins l'un d'un indice de la première unité de temps, d'un indice de la ressource de canal de commande.

9. Procédé de transmission d'informations selon la revendication 5, dans lequel *N_{c,sym}* est acquis de l'une des manières suivantes :
par un message diffusé ; ou
par un paramètre système.

10. Procédé de transmission d'informations selon la revendication 4, comprenant également au moins l'une des caractéristiques suivantes :
les informations suivantes sont notifiées dans les informations de commande de liaison descendante dans la première unité de temps actuelle : le nombre de troisièmes unités de temps incluses dans le domaine de transmission de liaison montante dans la première unité de temps actuelle et le nombre de troisièmes unités de temps incluses dans le domaine de transmission de liaison descendante dans la première unité de temps actuelle ; ou
les informations de commande de liaison descendante sont utilisées pour déterminer des informations sur un espacement de sous-porteuse des troisièmes unités de temps.

11. Procédé de transmission d'informations selon la revendication 5, dans lequel les informations de commande de liaison descendante présentent l'une des caractéristiques suivantes :
une information de commande de liaison descendante est transmise sur une ressource de canal de commande ;
une information de commande de liaison descendante est transmise de manière répétée sur plus d'une ressource de canal de commande ;
une information de commande de liaison descendante est transmise conjointement sur plus d'une ressource de canal de commande ; ou
différentes informations de commande de liaison descendante sont transmises sur différentes ressources de commande de liaison descendante correspondant au second noeud de communication.

12. Procédé de transmission d'informations selon la revendication 4, comprenant également l'une des caractéristiques suivantes :
des informations de ressource du signal de référence de démodulation sont déterminées selon un certain nombre de troisièmes unités de temps allouées au second noeud de communication dans une première unité de temps actuelle ; ou
les troisièmes unités de temps allouées au second noeud de communication dans la première unité de temps actuelle sont divisées en N_sub unités de sous-temps ; dans lequel chacune des sous-unités de temps présente le signal de référence de démodulation et N_sub est un nombre naturel.

13. Procédé de transmission d'informations selon la revendication 4, dans lequel le mode d'envoi correspondant à la ressource de canal de commande est déterminé de l'une des manières suivantes :
par diffusion de système ; ou
par signalisation de couche supérieure ; et
dans lequel la détermination des deuxièmes unités de temps correspondant à la ressource de canal de commande s'effectue de l'une des manières suivantes :
par diffusion de système ;
par signalisation de couche supérieure ; ou
par une règle prédéterminée.

14. Procédé de transmission d'informations selon la revendication 4, dans lequel le second noeud de communication détermine un ensemble de ressources de canal de commande
où se trouve un espace de détection commun et un ensemble de ressources de canal de commande où se trouve un espace de détection dédié.

15. Dispositif de transmission d'informations, disposé dans un second noeud de communication, dans lequel le dispositif comprend :
un module de détection (21), qui est configuré pour déterminer un mode d'envoi correspondant à une ressource de canal de commande, un ensemble de deuxièmes unités de temps correspondant à la ressource de canal de commande selon une correspondance entre la ressource de canal de commande et des deuxièmes unités de temps, et détecter des informations de commande de liaison descendante envoyées par un premier noeud de communication dans un espace de détection dans la ressource de canal de commande au sein de l'ensemble de deuxièmes unités de temps d'un domaine de commande de liaison descendante d'une première unité de temps selon le mode d'envoi,
dans lequel chaque ressource de canal de commande dans la première unité de temps correspond à plusieurs des deuxièmes unités de temps de la première unité de temps ; et
un module de transmission (20) connecté au module de détection (21) ; dans lequel le module de transmission (20) comprend au moins un module d'envoi (22) et un module de réception (23) et le module de transmission (20) est configuré pour effectuer une transmission de données avec le premier noeud de communication selon les informations de commande de liaison descendante détectées par le module de détection, dans lequel les données sont au moins l'une de données de liaison descendante et de données de liaison montante ; et
la première unité de temps comprend le domaine de commande de liaison descendante et un domaine de données, et il existe une longueur prédéfinie de ressources entre une position de départ du domaine de commande de liaison descendante et une position de départ de la première unité de temps ; et
dans lequel le domaine de commande de liaison descendante comprend N deuxièmes unités de temps, chacune des deuxièmes unités de temps comprenant *N_{c,sym}* symboles ; et le domaine de données comprend M troisièmes unités de temps, chacune des troisièmes unités de temps comprenant *N_{d,sym},* symboles, où N, M, *N_{c,sym}* et *N_{d,sym}* sont tous des entiers positifs ;
dans lequel une correspondance entre la ressource de canal de commande et le mode d'envoi, et la correspondance entre la ressource de canal de commande et les deuxièmes unités de temps sont prédéfinies au niveau du premier noeud de communication et du second noeud de communication ;
dans lequel le mode d'envoi est un faisceau d'envoi et un port d'envoi utilisé par le premier noeud de communication.
